# EUROPÄISCHE PATENTSCHRIFT

(11) **EP 4 416 464 B1**
(45) Veröffentlichungstag und Bekanntmachung des Hinweises auf die Patenterteilung: **04.06.2025**
(21) Anmeldenummer: 22817747.3
(22) Anmeldetag: 16.11.2022
(51) Int. Cl.: G01D 5/14, G01D 5/244, G01D 18/00, H02K 11/215, H02P 6/16, H02P 25/06, H02K 41/03

(54) **VERFAHREN ZUM BETREIBEN EINES LINEAREN ANTRIEBSSYSTEMS UND LINEARES ANTRIEBSSYSTEM**
METHOD OF OPERATING A LINEAR PROPULSION SYSTEM AND LINEAR PROPULSION SYSTEM
MÉTHODE D'UTILISATION D'UN SYSTÈME DE PROPULSION LINÉAIRE ET SYSTÈME DE PROPULSION LINÉAIRE

(30) Priorität: 19.11.2021 DE 102021130313
(43) Veröffentlichungstag der Anmeldung: 21.08.2024
(73) Patentinhaber: Beckhoff Automation GmbH, 33415 Verl (DE)
(72) Erfinder: HUA, Changsheng, 33415 Verl (DE); OTT, Christian, 97922 Lauda-Königshofen (DE); HAMBERGER, Dietmar, 97828 Marktheidenfeld (DE)
(74) Vertreter: Patentanwaltskanzlei WILHELM & BECK
(86) Internationale Anmeldenummer: PCT/EP2022/082113
(87) Internationale Veröffentlichungsnummer: WO 2023/088953

(56) Entgegenhaltungen:
- EP-A1- 3 285 046
- EP-A1- 3 883 124
- DE-A1- 102019 118 442
- DE-U1- 20 122 389
- US-A1- 2012 139 455
- US-A1- 2016 161 288

## Beschreibung

Die vorliegende Erfindung betrifft ein Verfahren zum Betreiben eines linearen Antriebssystems. Das Antriebssystem weist ein Primärteil und ein Sekundärteil auf, welche relativ zueinander translatorisch bewegbar sind. In dem Verfahren wird eine Positionsbestimmung für das Primärteil durchgeführt. Die Erfindung betrifft des Weiteren ein lineares Antriebssystem.

Ein lineares Antriebssystem ermöglicht das Erzeugen einer linearen translatorischen Bewegung. Ein solches System kann in unterschiedlichen Gebieten zum Einsatz kommen, um zum Beispiel eine translatorische Bewegung eines Maschinenelements oder eines Anlagenteils hervorzurufen. Die Bewegungserzeugung kann auf einem magnetischen bzw. elektromagnetischen Wirkprinzip beruhen.

Hierbei kann das Antriebssystem, welches auch als Linearmotor bezeichnet werden kann, ein Primärteil und ein Sekundärteil aufweisen. Das Primärteil und das Sekundärteil können relativ zueinander translatorisch bewegt werden. Beispielsweise kann das Sekundärteil ortsfest sein und das Primärteil kann gegenüber dem Sekundärteil bewegt werden. Das Primärteil kann eine bestrombare Elektromagneteinrichtung und das Sekundärteil eine Magnetanordnung aus nebeneinander angeordneten Permanentmagneten aufweisen. Durch Bestromen der Elektromagneteinrichtung des Primärteils kann eine magnetische Wechselwirkung zwischen der Elektromagneteinrichtung und der Magnetanordnung, und dadurch eine Bewegung des Primärteils und des Sekundärteils relativ zueinander hervorgerufen werden.

Um die Bewegung zuverlässig zu steuern, ist üblicherweise vorgesehen, eine Position des Primärteils in Bezug auf das Sekundärteil zu bestimmen. Zu diesem Zweck kann, zusätzlich zu dem für den Antrieb genutzten Primärteil und Sekundärteil, eine entsprechende Messvorrichtung verwendet werden. Beispiele hierfür sind ein magnetostriktives Linear-Messsystem, sowie ein optischer, induktiver oder magnetischer Linearmaßstab. Dies erfordert den Einsatz von zusätzlichen Anbauten, und ist mit einem entsprechenden Platzbedarf verbunden.

Die EP 3 883 124 A1 beschreibt ein Planarantriebssystem und ein Verfahren zum Steuern desselben. Das Planarantriebssystem weist ein Statormodul mit bestrombaren Statorleitern und einen permanenterregten Läufer mit einer Magnetanordnung auf. Durch Bestromen von Statorleitern des Statormoduls kann eine magnetische Wechselwirkung mit der Magnetanordnung des Läufers hervorgerufen werden, um den Läufer anzutreiben und zu bewegen. Das Statormodul weist ein Sensormodul mit Magnetfeldsensoren auf, um ein Läufermagnetfeld des Läufers zu erfassen. Dies dient zur Positionserfassung des Läufers.

Die DE 10 2019 118 442 A1 beschreibt einen Lineardirektantrieb umfassend eine Führung mit Permanentmagneten und einen bewegbaren Schlitten mit Elektromagneten, sowie ein Verfahren zum Bestimmen einer absoluten Position des Schlittens. Durch Bestromen der Elektromagnete kann eine Wechselwirkung zwischen den Elektromagneten und den Permanentmagneten hervorgerufen werden, um den Schlitten anzutreiben. Das Bestimmen der Schlittenposition erfolgt mittels eines am Schlitten vorgesehenen Positionsmesssystems, welches wenigstens einen Magnetfeldsensor bzw. ein Sensor-Array, einen Auswerter und einen Speicher umfasst. In einer vorbereitenden Referenzfahrt werden an mehreren Schlittenpositionen Magnetfeldcharakteristiken mit dem wenigstens einen Magnetfeldsensor aufgezeichnet und als Referenzcharakteristiken, welche mit den Schlittenpositionen verknüpft sind, in dem Speicher hinterlegt. In einer momentanen, zu bestimmenden Schlittenposition wird eine Magnetfeldcharakteristik mit dem wenigstens einen Magnetfeldsensor erfasst, welche in dem Auswerter mit den hinterlegten Referenzcharakteristiken verglichen wird. Bei einer Korrelation der erfassten Magnetfeldcharakteristik mit einer Referenzcharakteristik wird die der Referenzcharakteristik zugeordnete Schlittenposition als momentane Schlittenposition ausgegeben.

Weiterer Stand der Technik ist aus der DE 201 22 389 U1, der US 2016/161288 A1, der US 2012/139455 A1 und der EP 3 285 046 A1 bekannt.

Die Aufgabe der vorliegenden Erfindung besteht darin, ein verbessertes Verfahren zum Betreiben eines linearen Antriebssystems aufzuzeigen. Es ist weiterhin Aufgabe der Erfindung, ein entsprechend ausgebildetes lineares Antriebssystem anzugeben.

Diese Aufgabe wird durch die Merkmale der unabhängigen Patentansprüche gelöst. Weitere vorteilhafte Ausführungsformen der Erfindung sind in den abhängigen Ansprüchen angegeben.

Gemäß einem Aspekt der Erfindung wird ein Verfahren zum Betreiben eines linearen Antriebssystems, das im Anspruch 1 definiert wird, vorgeschlagen.

Mit Hilfe des vorgeschlagenen Verfahrens kann eine zuverlässige und genaue Positionsbestimmung für das Primärteil des linearen Antriebssystems erzielt werden. Für die Positionsbestimmung wird das bereits für den Bewegungsantrieb genutzte Sekundärteil des Antriebssystems, zusammen mit der an dem Primärteil vorgesehenen Sensoreinrichtung aus Magnetfeldsensoren, eingesetzt. Auf diese Weise lässt sich die Positionsbestimmung ohne platzraubende Anbauten, und dadurch platzsparend und kostengünstig verwirklichen.

Bei dem Verfahren wird ausgenutzt, dass das Magnetfeld, welches von der Permanentmagnetanordnung des Sekundärteils erzeugt und mit Hilfe der Sensoreinrichtung des Primärteils erfasst werden kann, entlang einer Bewegungsrichtung, in welcher die Bewegung von Primärteil und Sekundärteil relativ zueinander erfolgen kann, einen im Wesentlichen periodischen Verlauf mit individuellen Unterschieden besitzen kann. Ursache der Unterschiede können Toleranzen sein, mit welchem das lineare Antriebssystem und dessen Bestandteile behaftet sein können. Hierunter können mechanische und magnetische Winkelfehler, Magnetisierungsfehler, Dichteunterschiede, geometrische Abweichungen, Klebespalte, ein mechanischer Versatz usw. fallen.

In der Initialmessung wird an unterschiedlichen Positionen des Primärteils in Bezug auf das Sekundärteil das Magnetfeld der Magnetanordnung des Sekundärteils mit Hilfe der Sensoreinrichtung erfasst. Darauf basierend bzw. auf der Grundlage von durch das Erfassen des Magnetfelds erhaltenen Messdaten werden positionsabhängige Referenz-Magnetfelddaten bereitgestellt. Die Referenz-Magnetfelddaten können die positionsabhängigen Unterschiede des erfassten Magnetfelds der Magnetanordnung des Sekundärteils beinhalten und wiedergeben. Anders ausgedrückt, kann durch die Initialmessung jeweils ein magnetischer Fingerabdruck von einem oder mehreren Permanentmagneten des Sekundärteils aufgenommen werden. Für die eigentliche Positionsbestimmung, welche durchgeführt wird für eine zunächst noch unbekannte aktuelle Position des Primärteils in Bezug auf das Sekundärteil, wird erneut das Magnetfeld der Magnetanordnung des Sekundärteils mit Hilfe der Sensoreinrichtung des Primärteils erfasst. Darauf basierend werden aktuelle Magnetfelddaten bereitgestellt. Durch eine Auswertung, welche auf der Grundlage der Referenz-Magnetfelddaten und der aktuellen Magnetfelddaten durchgeführt wird, kann daher auf die aktuelle Position des Primärteils in Bezug auf das Sekundärteil geschlossen werden.

Im Folgenden werden weitere mögliche Details und Ausführungsformen näher beschrieben, welche für das Verfahren und für das lineare Antriebssystem in Betracht kommen können.

Bei dem linearen Antriebssystem kann die translatorische Bewegung von Primärteil und Sekundärteil relativ zueinander entlang einer vorgegebenen Bewegungsrichtung erfolgen.

In einer Ausführungsform ist das lineare Antriebssystem derart ausgebildet, dass das Sekundärteil eine ortsfeste Komponente und das Primärteil eine bewegliche Komponente des Antriebssystems ist, wobei das Primärteil aufgrund der magnetischen Wechselwirkung zwischen der Elektromagneteinrichtung des Primärteils und der Magnetanordnung des Sekundärteils gegenüber dem Sekundärteil bewegt werden kann. Möglich ist auch eine hierzu inverse Ausgestaltung, in welcher das Primärteil eine ortsfeste Komponente und das Sekundärteil eine bewegliche Komponente des Antriebssystems darstellt, wobei das Sekundärteil aufgrund der magnetischen Wechselwirkung zwischen der Elektromagneteinrichtung des Primärteils und der Magnetanordnung des Sekundärteils gegenüber dem Primärteil bewegt werden kann. In beiden Varianten kann durch Durchführen des Verfahrens die Position des Primärteils in Bezug auf das Sekundärteil bestimmt werden.

An der aktuellen Position, welche gemäß dem Verfahren bestimmt werden soll, kann die jeweils bewegliche Komponente des linearen Antriebssystems (zunächst noch) ruhend sein. Des Weiteren kann das Bestimmen der aktuellen Position zum Beispiel nach einem Neustart oder auch nach einem Stromausfall des linearen Antriebssystems durchgeführt werden.

Die Elektromagneteinrichtung des Primärteils kann mehrere bestrombare Elektromagneten aufweisen. Die Elektromagneten können in Form von Spulen verwirklicht sein. Durch eine geeignete Bestromung der Elektromagneteinrichtung, was ein Beaufschlagen der Elektromagneteinrichtung mit einem Dreiphasenstrom umfassen kann, kann mit Hilfe der Elektromagneteinrichtung ein variierendes Magnetfeld erzeugt werden, welches mit dem von der Magnetanordnung des Sekundärteils erzeugten Magnetfeld derart wechselwirken kann, dass eine Bewegung von Primärteil und Sekundärteil relativ zueinander hervorgerufen wird.

Die Magnetanordnung des Sekundärteils weist mehrere nebeneinander angeordnete Permanentmagnete auf. Dabei können benachbarte und aufeinanderfolgende Permanentmagnete jeweils mit Bezug auf ihre Polarität zueinander entgegengesetzt angeordnet sein mit der Folge, dass entlang der Bewegungsrichtung von Primärteil und Sekundärteil ein Wechsel der Polarität vorhanden ist. Entlang der Bewegungsrichtung können somit Permanentmagnetpaare aus Permanentmagneten mit zueinander inversen Polaritäten vorliegen.

Die Permanentmagnete der Magnetanordnung können eine längliche Gestalt besitzen und mit Bezug auf ihre Längsachsen zueinander parallel angeordnet sein. Die Längsachsen der Permanentmagnete können im Wesentlichen senkrecht zur Bewegungsrichtung orientiert sein. Abweichend von einer exakt senkrechten Ausrichtung kann eine schräge bzw. leicht schräge Orientierung der Längsachsen der Permanentmagnete mit Bezug auf die Bewegungsrichtung vorgesehen sein, um ein Auftreten von Rastmomenten (auch als Cogging bezeichnet) während der Bewegung zu unterdrücken.

Die Sensoreinrichtung des Primärteils, welche zum Erfassen des Magnetfelds der Permanentmagnetanordnung des Sekundärteils dient, weist mehrere Magnetfeldsensoren auf. In einer möglichen Ausgestaltung sind die Magnetfeldsensoren Hall-Sensoren. Alternativ können andere Sensoren wie zum Beispiel MR-Sensoren (Magnetoresistive Sensoren) zum Einsatz kommen. Die Magnetfeldsensoren können ausgebildet sein, das Magnetfeld bzw. die magnetische Flussdichte in unterschiedlichen Richtungen, zum Beispiel in drei verschiedenen Richtungen, zu erfassen. Die Magnetfeldsensoren können in einer oder auch in mehreren Ebenen verteilt angeordnet sein. Des Weiteren können die Magnetfeldsensoren mit Bezug auf die Bewegungsrichtung von Primärteil und Sekundärteil verteilt zueinander und beabstandet voneinander angeordnet sein.

Das lineare Antriebssystem kann neben den vorgenannten Komponenten weitere Bestandteile aufweisen. Hierunter fallen zum Beispiel Bestandteile, mit deren Hilfe eine Führung bzw. Lagerung des beweglichen Primärteils (oder des beweglichen Sekundärteils im Falle einer inversen Ausgestaltung) erzielt werden kann. Beispiele hierfür sind Führungsschienen mit beweglichen Rollen bzw. Kugeln, sowie hierzu korrespondierende Halteelemente.

In einer weiteren Ausführungsform weist das lineare Antriebsystem eine Hauptsteuervorrichtung auf, welche zur Steuerung des Betriebs des Antriebssystems ausgebildet ist. Die Hauptsteuervorrichtung kann über ein Kabel, welches im Falle einer beweglichen Ausführung des Primärteils als Schleppkabel oder Kabelschleppkette verwirklicht sein kann, mit dem Primärteil verbunden sein. Mit Hilfe der Hauptsteuervorrichtung kann das Bestromen der Elektromagneteinrichtung des Primärteils, und dadurch die Bewegung von Primärteil und Sekundärteil relativ zueinander, gesteuert werden.

Auch die Initialmessung und die Positionsbestimmung können mit Hilfe der Hauptsteuervorrichtung gesteuert bzw. unter Beteiligung der Hauptsteuervorrichtung vorgenommen werden. Hierbei können die Referenz-Magnetfelddaten sowie auch die aktuellen Magnetfelddaten, welche durch Erfassen des Magnetfelds der Magnetanordnung des Sekundärteils mit Hilfe der Sensoreinrichtung gewonnen werden können, in der Hauptsteuervorrichtung hinterlegt werden. Auf der Grundlage der Referenz-Magnetfelddaten und der aktuellen Magnetfelddaten kann die Hauptsteuervorrichtung die aktuelle Position des Primärteils in Bezug auf das Sekundärteil bestimmen. Die im Folgenden beschriebenen Ausgestaltungen des Verfahrens können ebenfalls durch die Hauptsteuervorrichtung durchgeführt werden bzw. können im Rahmen einer Auswertung durch die Hauptsteuervorrichtung erfolgen.

Erfindungsgemäß umfasst die Positionsbestimmung ein Durchführen eines Vergleichs wenigstens eines Teils der aktuellen Magnetfelddaten mit Teilen der Referenz-Magnetfelddaten mit Hilfe eines Ähnlichkeitsverfahrens. Unter Einsatz eines solchen Verfahrens, welches auch als Korrelationsverfahren bezeichnet werden kann, kann die Positionsbestimmung mit einer hohen Zuverlässigkeit und Genauigkeit erfolgen.

In dem Ähnlichkeitsverfahren können Datenmengen bzw. Teildatenmengen miteinander verglichen werden. Mit Bezug auf die bereitgestellten Referenz-Magnetfelddaten und die aktuellen Magnetfelddaten kann wenigstens eine Teildatenmenge der aktuellen Magnetfelddaten mit mehreren Teildatenmengen der Referenz-Magnetfelddaten verglichen werden. Die Teildatenmengen der Referenz-Magnetfelddaten können, aufgrund der Initialmessung, verschiedene Positionen des Primärteils in Bezug auf das Sekundärteil wiedergeben, so dass anhand des Vergleichs zumindest grob auf die aktuelle Position des Primärteils geschlossen werden kann.

In einer weiteren Ausführungsform ist das eingesetzte Ähnlichkeitsverfahren ein DTW-Verfahren (Dynamic Time Warping, dynamische Zeitnormierung). Das DTW-Verfahren ermöglicht eine zuverlässige Positionsbestimmung mit einer hohen Einfachheit, und lässt sich daher selbst mit Datenmengen mit einer relativ geringen Anzahl an Datenpunkten zuverlässig durchführen. Ein weiterer Vorteil ist eine hohe Flexibilität, wodurch auch Datenmengen zuverlässig verglichen werden können, selbst wenn diese unterschiedliche Anzahlen an Datenpunkten aufweisen oder ein zeitlicher oder örtlicher Versatz, zum Beispiel aufgrund einer im Rahmen der Magnetfelderfassung verwendeten Abtastung, vorliegt.

Durch Durchführen eines DTW-Verfahrens bzw. eines DTW-Algorithmus kann die Ähnlichkeit von zwei zu vergleichenden Datenmengen bestimmt werden. Das Verfahren kann Schritte wie ein Erzeugen einer Abstandsmatrix und Ermitteln des effizientesten Wegs durch die Abstandsmatrix hindurch umfassen. Durch das Verfahren kann ferner ein Ähnlichkeitsmaß, die sogenannte DTW-Distanz, ermittelt werden. Je geringer die DTW-Distanz ist, desto ähnlicher sind die verglichenen Datenmengen.

Erfindungsgemäß ist vorgesehen, dass die Referenz-Magnetfelddaten mehrere Magnetfeldmuster umfassen. Die Magnetfeldmuster, welche Teildatenmengen der Referenz-Magnetfelddaten darstellen, sind jeweils einer Magnetgruppe aus nebeneinander angeordneten Permanentmagneten der Magnetanordnung zugeordnet. Das Durchführen des Vergleichs kann unter Verwendung der Magnetfeldmuster erfolgen. Hierdurch kann die Positionsbestimmung mit einer hohen Zuverlässigkeit und Genauigkeit erfolgen.

Mit Bezug auf das Vorgenannte kommt, zum Zwecke der Positionsbestimmung, eine Aufteilung der Permanentmagnete der Magnetanordnung des Sekundärteils auf mehrere Magnetgruppen zur Anwendung. Die Magnetgruppen, welchen jeweils ein Magnetfeldmuster zugeordnet ist, können zum Beispiel jeweils zwei nebeneinander angeordnete und invers zueinander polarisierte Permanentmagnete, und dadurch jeweils ein Permanentmagnetpaar, umfassen. Es kann ferner vorgesehen sein, dass die Magnetgruppen jeweils eine größere Anzahl an Permanentmagneten bzw. Permanentmagnetpaaren, zum Beispiel vier nebeneinander angeordnete Permanentmagnete und dadurch zwei nebeneinander angeordnete Permanentmagnetpaare, umfassen. Die Sensoreinrichtung des Primärteils kann von den Abmessungen her derart ausgebildet sein, dass mit Hilfe der Magnetfeldsensoren eine Überdeckung von einem oder mehreren Permanentmagnetpaaren und damit eine Überdeckung einer Magnetgruppe, bezogen auf die Bewegungsrichtung von Primärteil und Sekundärteil, erzielt werden kann.

Die Magnetfeldmuster, welche auch als Referenzmuster oder Schablonen (Templates) bezeichnet werden können, können in dem Vergleich mit den aktuellen Magnetfelddaten zur Anwendung kommen. Das Durchführen des Vergleichs kann wenigstens eines von Folgendem umfassen: Ein Vergleichen der aktuellen Magnetfelddaten mit den Magnetfeldmustern; ein Vergleichen wenigstens eines Teils (d. h. wenigstens einer Teildatenmenge) der aktuellen Magnetfelddaten mit wenigstens einem Teilmuster der Magnetfeldmuster; ein Vergleichen der aktuellen Magnetfelddaten mit aus den Magnetfeldmustern (bzw. aus Teilen oder Teilmustern derselben) neu zusammengesetzten Magnetfeldmustern; und/oder ein Vergleichen von mehreren Teilen bzw. Teildatenmengen der aktuellen Magnetfelddaten mit Teilmustern der Magnetfeldmuster. Mögliche Ausführungsformen hierzu werden weiter unten näher erläutert.

Im Folgenden wird eine mögliche Vorgehensweise zum Bereitstellen der Magnetfeldmuster aufgezeigt. In einer weiteren Ausführungsform werden in der Initialmessung das Primärteil und das Sekundärteil relativ zueinander bewegt. Die Magnetfeldmuster werden basierend auf dem erfassten Magnetfeld der Magnetanordnung des Sekundärteils bereitgestellt, welches mit Hilfe der Sensoreinrichtung erfasst wird, wenn sich die Magnetfeldsensoren der Sensoreinrichtung jeweils im Bereich einer Magnetgruppe befinden. Anders ausgedrückt, erfolgt das Bereitstellen eines Magnetfeldmusters für eine Magnetgruppe anhand des erfassten Magnetfelds jeweils dann, wenn eine Überdeckung der betreffenden Magnetgruppe durch die Magnetfeldsensoren, bezogen auf die Bewegungsrichtung von Primärteil und Sekundärteil, vorliegt. Auf diese Weise können die Magnetfeldmuster in einfacher Weise bereitgestellt werden. Die Magnetfeldmuster können in der Hauptsteuervorrichtung des linearen Antriebssystems hinterlegt werden.

In einer weiteren Ausführungsform erfolgt ein Bestimmen, ob sich die Magnetfeldsensoren der Sensoreinrichtung jeweils im Bereich einer Magnetgruppe befinden (und dadurch eine Überdeckung einer Magnetgruppe vorliegt), anhand von Nulldurchgängen eines Verlaufs einer Magnetfeldkomponente des Magnetfelds der Magnetanordnung des Sekundärteils, welcher mit Hilfe eines endseitigen Magnetfeldsensors der Sensoreinrichtung erfasst wird. Der endseitige Magnetfeldsensor befindet sich, bezogen auf die Bewegungsrichtung von Primärteil und Sekundärteil, an einem Ende bzw. Rand der Anordnung aus Magnetfeldsensoren der Sensoreinrichtung. Die berücksichtigte Magnetfeldkomponente kann in einer senkrecht zur Bewegungsrichtung des beweglichen Primärteils (oder des beweglichen Sekundärteils im Falle einer inversen Ausgestaltung) orientierten Richtung erfasst werden. Hierbei können die Nulldurchgänge Grenzen von benachbarten Permanentmagneten und Permanentmagnetpaaren der Magnetanordnung des Sekundärteils wiedergeben, was für das Bestimmen genutzt werden kann, ob sich die Magnetfeldsensoren der Sensoreinrichtung im Bereich einer Magnetgruppe befinden. Sofern sich der endseitige Magnetfeldsensor jeweils an bzw. in der Nähe einer Grenze befindet und damit eine Überdeckung einer Magnetgruppe durch die Magnetfeldsensoren der Sensoreinrichtung vorliegt, kann dies anhand eines Nulldurchgangs des Verlaufs der mit dem endseitigen Magnetfeldsensor erfassten Magnetfeldkomponente erkannt werden. Hierauf abgestimmt kann das Bereitstellen der Magnetfeldmuster durchgeführt werden.

Im Hinblick auf die zu bestimmende Position des Primärteils besteht die Möglichkeit, dass sich die Magnetfeldsensoren der Sensoreinrichtung in der aktuellen Position des Primärteils im Bereich einer Magnetgruppe der Magnetanordnung des Sekundärteils befinden, und somit eine Überdeckung der Magnetgruppe durch die Magnetfeldsensoren besteht. In diesem Fall ist es möglich, durch Vergleichen der (an der aktuellen Position gewonnenen) aktuellen Magnetfelddaten mit den den Magnetgruppen zugeordneten Magnetfeldmustern ein Magnetfeldmuster mit der größten Ähnlichkeit, dadurch die zugehörige Magnetgruppe, insofern eine Positionierung der Sensoreinrichtung an der betreffenden Magnetgruppe, und folglich die aktuelle Position des Primärteils, zu bestimmen.

Die Sensoreinrichtung kann sich in der aktuellen Position des Primärteils jedoch auch versetzt im Bereich von zwei benachbarten Magnetgruppen der Magnetanordnung des Sekundärteils befinden, so dass die beiden Magnetgruppen mit Bezug auf die Bewegungsrichtung von Primärteil und Sekundärteil jeweils teilweise durch die Sensoreinrichtung überdeckt werden. In einem solchen Fall kann das Durchführen des Vergleichs hierauf abgestimmt bzw. mit hierauf abgestimmten Daten durchgeführt werden, wie weiter unten erläutert wird.

In einer weiteren Ausführungsform umfasst die Positionsbestimmung ein Ermitteln einer Sensorstellung der Sensoreinrichtung in Bezug auf eine Grenze von zwei benachbarten Magnetgruppen oder von zwei benachbarten Permanentmagnetpaaren in der aktuellen Position des Primärteils. Ferner erfolgt das Bestimmen der Position des Primärteils bzw. das Durchführen des Vergleichs unter Berücksichtigung der ermittelten Sensorstellung der Sensoreinrichtung. Auf diese Weise kann zum Beispiel eine versetzte Positionierung der Sensoreinrichtung im Bereich von zwei benachbarten Magnetgruppen berücksichtigt werden und kann auch in einem solchen Fall eine genaue Positionsbestimmung verwirklicht werden.

In einer weiteren Ausführungsform wird das Ermitteln der Sensorstellung der Sensoreinrichtung anhand eines Nulldurchgangs eines Verlaufs einer Magnetfeldkomponente des Magnetfelds der Magnetanordnung des Sekundärteils durchgeführt, welcher durch die aktuellen Magnetfelddaten wiedergegeben wird. Entsprechend der oben in Zusammenhang mit dem Bereitstellen von Magnetfeldmustern beschriebenen Ausführungsform kann es sich bei der berücksichtigten Magnetfeldkomponente um diejenige Magnetfeldkomponente handeln, welche in einer senkrecht zur Bewegungsrichtung von Primärteil und Sekundärteil orientierten Richtung erfasst wird. Hierbei kann anhand eines Nulldurchgangs in dem durch die aktuellen Magnetfelddaten wiedergegebenen Verlauf der Magnetfeldkomponente eine Grenze von zwei benachbarten Magnetgruppen oder Permanentmagnetpaaren erfasst, und kann insofern die Sensorstellung der Sensoreinrichtung in Bezug auf eine solche Grenze ermittelt werden.

Sofern bei dem betrachteten und durch die aktuellen Magnetfelddaten wiedergegeben Verlauf der Magnetfeldkomponente bzw. im Bereich der Enden des betrachteten Verlaufs der Magnetfeldkomponente kein mit einer Grenze von benachbarten Magnetgruppen oder Permanentmagnetpaaren zusammenfallender Nulldurchgang vorhanden ist, kann eine Sensorstellung erkannt werden, in welcher sich die Sensoreinrichtung im Bereich einer Magnetgruppe befinden bzw. ein Überdecken einer Magnetgruppe durch die Sensoreinrichtung vorliegen kann. Falls dies nicht der Fall ist bzw. bei dem betrachteten Verlauf der Magnetfeldkomponente ein mit einer Grenze von benachbarten Magnetgruppen oder Permanentmagnetpaaren zusammenfallender Nulldurchgang vorhanden ist, kann eine Sensorstellung erkannt werden, in welcher sich die Sensoreinrichtung im Bereich von zwei benachbarten Magnetgruppen befinden und ein teilweises Überdecken der benachbarten Magnetgruppen durch die Sensoreinrichtung vorliegen kann.

Das Ermitteln der Sensorstellung in Bezug auf eine Grenze von zwei benachbarten Magnetgruppen oder Permanentmagnetpaaren der Magnetanordnung des Sekundärteils kann ferner ein Ermitteln eines auf die Bewegungsrichtung bezogenen Abstands zwischen der Grenze und einem oder mehreren am nähesten zu der Grenze angeordneten Magnetfeldsensoren der Sensoreinrichtung in der aktuellen Position des Primärteils umfassen. Zu diesem Zweck können anhand des durch die aktuellen Magnetfelddaten wiedergegebenen Verlaufs der Magnetfeldkomponente und des Nulldurchgangs ein oder mehrere am nähesten zu der Grenze angeordnete Magnetfeldsensoren identifiziert werden. Darauf basierend bzw. durch Durchführen einer Interpolation oder Extrapolation kann der Abstand zwischen der Grenze und einem oder mehreren sich am nähesten zu der Grenze befindenden Magnetfeldsensoren ermittelt werden. Die Interpolation oder Extrapolation kann unter Berücksichtigung eines Abstands zwischen Magnetfeldsensoren der Sensoreinrichtung durchgeführt werden.

Bei einer versetzten Positionierung der Sensoreinrichtung im Bereich von zwei benachbarten Magnetgruppen kann die Sensoreinrichtung eine Grenze zwischen den benachbarten Magnetgruppen überdecken, und können mehrere bzw. zwei sich am nähesten zu der Grenze befindende Magnetfeldsensoren beidseitig der Grenze angeordnet sein. Hierbei kann für das Bestimmen des Abstands zwischen der Grenze und von einem oder mehreren am nähesten zu der Grenze angeordneten Magnetfeldsensoren eine Interpolation oder Extrapolation unter Berücksichtigung des Abstands zwischen den betreffenden Magnetfeldsensoren durchgeführt werden.

Es ist möglich, dass sämtliche Magnetfeldsensoren mit Bezug auf die Bewegungsrichtung äquidistant zueinander angeordnet sind. Auf diese Weise kann der vorstehend beschriebene Verfahrensschritt unter Verwendung eines einheitlichen Abstands zwischen den Magnetfeldsensoren vorgenommen werden. Es kann jedoch auch eine nicht äquidistante Anordnung der Magnetfeldsensoren vorliegen, wodurch der vorgenannte Schritt unter Verwendung des zugehörigen Abstands der betreffenden Magnetfeldsensoren erfolgen kann, um eine entsprechende Genauigkeit zu erzielen.

Für ein Bestimmen des Abstands zwischen den Magnetfeldsensoren kann wie folgt vorgegangen werden. Hierbei kann ein auf die Bewegungsrichtung bezogener Gesamtabstand zwischen endseitigen Magnetfeldsensoren der Sensoreinrichtung, welche sich an entgegengesetzten Enden der Anordnung aus Magnetfeldsensoren befinden, bereitgestellt werden, zum Beispiel indem die Sensoreinrichtung ausgemessen wird. Ferner können Phasenverschiebungen von Verläufen einer mit Hilfe der Magnetfeldsensoren jeweils erfassten Magnetfeldkomponente des Magnetfelds der Magnetanordnung des Sekundärteils ermittelt werden. Dies kann im Rahmen der Initialmessung durchgeführt werden, in welcher das Primärteil und das Sekundärteil wie oben angegeben relativ zueinander bewegt werden können. Die Magnetfeldkomponente kann diejenige Magnetfeldkomponente sein, welche in einer senkrecht zur Bewegungsrichtung orientierten Richtung erfasst wird. Auf der Grundlage des Gesamtabstands und der Phasenverschiebungen können auf die Bewegungsrichtung bezogene Abstände von benachbarten Magnetfeldsensoren der Sensoreinrichtung bestimmt werden. Hierauf basierend kann das oben erläuterte Ermitteln des Abstands zwischen der Grenze und den am nähesten zu der Grenze angeordneten Magnetfeldsensoren durchgeführt werden.

Eine Positionierung der Sensoreinrichtung im Bereich einer Magnetgruppe der Magnetanordnung des Sekundärteils, so dass eine Überdeckung der Magnetgruppe durch die Magnetfeldsensoren vorliegt, kann wie oben angegeben durch Ermitteln der Sensorstellung der Sensoreinrichtung in Bezug auf eine Grenze von zwei benachbarten Magnetgruppen oder von zwei benachbarten Permanentmagnetpaaren erkannt werden. Hierbei kann die Grenze im Bereich eines Rands bzw. Endes der Sensoreinrichtung vorhanden sein. Dies kann anhand eines Verlaufs einer Magnetfeldkomponente des Magnetfelds der Magnetanordnung des Sekundärteils ermittelt werden, welcher durch die aktuellen Magnetfelddaten wiedergegeben wird. Die betreffende Magnetfeldkomponente kann in einer senkrecht zur Bewegungsrichtung von Primärteil und Sekundärteil orientierten Richtung erfasst werden. Eine Sensorstellung der Sensoreinrichtung im Bereich einer Magnetgruppe kann hierbei daran erkannt werden, dass bei dem betreffenden Verlauf der Magnetfeldkomponente, zumindest im Bereich von dessen Enden, kein mit einer Grenze von benachbarten Magnetgruppen oder Permanentmagnetpaaren zusammenfallender Nulldurchgang besteht.

Im Falle einer solchen Positionierung der Sensoreinrichtung im Bereich einer Magnetgruppe können, wie oben angegeben, zur Positionsbestimmung des Primärteils die aktuellen Magnetfelddaten mit den Magnetfeldmustern der Referenz-Magnetfelddaten verglichen werden, um ein Magnetfeldmuster mit der größten Ähnlichkeit, und damit die dazugehörige Magnetgruppe, zu ermitteln. Für die Positionsbestimmung kann zusätzlich der auf die Bewegungsrichtung bezogene Abstand zwischen einer Grenze von benachbarten Magnetgruppen oder Permanentmagnetpaaren und einem am nähesten zu der Grenze angeordneten Magnetfeldsensor ermittelt werden. Hierzu kann eine Extrapolation unter Verwendung des durch die aktuellen Magnetfelddaten wiedergegebenen Verlaufs der Magnetfeldkomponente vorgenommen werden.

Wie oben beschrieben wurde, kann durch das Ermitteln der Sensorstellung ferner festgestellt werden, dass sich die Sensoreinrichtung in der aktuellen Position des Primärteils im Bereich von zwei benachbarten Magnetgruppen befindet, so dass beide Magnetgruppen jeweils teilweise durch die Sensoreinrichtung überdeckt werden. Bei Vorliegen einer solchen Sensorstellung kann im Hinblick auf das Durchführen des Vergleichs folgende Ausführungsform zur Anwendung kommen. Hierbei wird eine Teildatenmenge aus den aktuellen Magnetfelddaten gebildet, welche mit Hilfe einer Sensorteilgruppe aus Magnetfeldsensoren der Sensoreinrichtung gewonnen wurde, durch welche die Teilüberdeckung von einer der beiden Magnetgruppen hergestellt ist. Ferner werden Teilmuster aus den Magnetfeldmustern unter Berücksichtigung der Teilüberdeckung gebildet. Für das Durchführen des Vergleichs wird die Teildatenmenge der aktuellen Magnetfelddaten mit den Teilmustern der Magnetfeldmuster verglichen.

In der vorgenannten Ausführungsform wird eine anhand der Sensorstellung festgestellte Teilüberdeckung einer Magnetgruppe durch einen Teil der Sensoreinrichtung berücksichtigt. Hierbei befindet sich eine Sensorteilgruppe aus Magnetfeldsensoren der Sensoreinrichtung im Bereich der betreffenden Magnetgruppe, und wird die Magnetgruppe somit durch die Sensorteilgruppe überdeckt. Hierauf basierend wird eine Teildatenmenge aus den aktuellen Magnetfelddaten ausgewählt, welche unter Verwendung der die Magnetgruppe überdeckenden Sensorteilgruppe gewonnen wurde. In gleicher Weise werden Teilmuster, welche sich auf die Teilüberdeckung beziehen, aus den Magnetfeldmustern gebildet. Wie oben angegeben wurde, beziehen sich die Magnetfeldmuster jeweils auf eine Magnetgruppe der Magnetanordnung des Sekundärteils. Die hieraus gebildeten Teilmuster geben dabei die anhand der Sensorstellung festgestellte und durch die Sensorteilgruppe bewirkte Teilüberdeckung in Bezug auf jede der mit den Magnetfeldmustern verknüpften Magnetgruppen wieder.

In dem nachfolgend durchgeführten Ähnlichkeitsvergleich wird die Teildatenmenge der aktuellen Magnetfelddaten mit den Teilmustern der Magnetfeldmuster verglichen. Auf diese Weise können ein Teilmuster und infolgedessen ein Magnetfeldmuster mit der größten Ähnlichkeit, dadurch die zugehörige Magnetgruppe und insofern eine Positionierung der Sensoreinrichtung an der betreffenden Magnetgruppe, ermittelt werden. Hierauf basierend bzw. unter zusätzlicher Berücksichtigung der Sensorstellung der Sensoreinrichtung kann die aktuelle Position des Primärteils bestimmt werden.

Im Hinblick auf die vorgenannte Ausführungsform kann anhand der Sensorstellung zum Beispiel ermittelt werden, dass zwei benachbarte Magnetgruppen in unterschiedlichem Maße durch die Sensoreinrichtung überdeckt werden. In diesem Fall kann das Bilden der Teildatenmenge aus den aktuellen Magnetfelddaten und das Bilden der Teilmuster aus den Magnetfeldmustern mit Bezug auf die größere Teilüberdeckung und größere Sensorteilgruppe aus Magnetfeldsensoren vorgenommen werden, um eine hohe Genauigkeit zu erzielen.

Es ist ferner möglich, das Durchführen des Ähnlichkeitsvergleichs in Bezug auf beide Teilüberdeckungen der zwei benachbarten Magnetgruppen durchzuführen, um dadurch pro Teilüberdeckung jeweils ein Teilmuster mit der größten Ähnlichkeit und eine dazugehörige Magnetgruppe zu ermitteln. Hierdurch kann die Zuverlässigkeit und Genauigkeit der Positionsbestimmung weiter begünstigt werden. Durch diese Vorgehensweise kann auch eine Plausibilitätsprüfung erzielt werden. Dabei wird gefordert, dass die mit der größten Ähnlichkeit ermittelten Teilmuster zu zwei benachbarten Magnetgruppen gehören. Sofern dies nicht der Fall ist, kann ein Vorliegen eines Fehlers, zum Beispiel in den verwendeten Daten, identifiziert werden.

In einer weiteren Ausführungsform wird bei einer festgestellten Sensorstellung der Sensoreinrichtung im Bereich von zwei benachbarten Magnetgruppen, so dass beide Magnetgruppen jeweils teilweise durch die Sensoreinrichtung überdeckt werden, folgende Vorgehensweise eingesetzt. Hierbei werden zusammengesetzte Magnetfeldmuster gebildet, welche jeweils unter Berücksichtigung der Teilüberdeckungen aus Teilmustern von Magnetfeldmustern zweier benachbarter Magnetgruppen zusammengesetzt sind. Für das Durchführen des Vergleichs werden die aktuellen Magnetfelddaten mit den zusammengesetzten Magnetfeldmustern verglichen.

In der vorgenannten Ausführungsform wird eine anhand der Sensorstellung festgestellte Überdeckung von zwei benachbarten Magnetgruppen, wodurch bei beiden Magnetgruppen jeweils eine Teilüberdeckung durch die Sensoreinrichtung besteht, berücksichtigt. Hierbei werden sich auf die Teilüberdeckungen beziehende Teilmuster von Magnetfeldmustern, welche sich jeweils auf zwei benachbarte Magnetgruppen beziehen, ausgewählt, und diese zu neuen Magnetfeldmustern zusammengesetzt. Die neu zusammengesetzten Magnetfeldmuster geben dabei die anhand der Sensorstellung festgestellte Positionierung der Sensoreinrichtung und damit die durch die Sensoreinrichtung bewirkte Überdeckung jeweils in Bezug auf zwei benachbarte Magnetgruppen wieder.

In dem nachfolgend durchgeführten Ähnlichkeitsvergleich werden die aktuellen Magnetfelddaten mit den zusammengesetzten Magnetfeldmustern verglichen. Auf diese Weise kann ein zusammengesetztes Magnetfeldmuster mit der größten Ähnlichkeit, dadurch die zu dem zusammengesetzten Magnetfeldmuster gehörenden zwei benachbarten Magnetgruppen, und insofern eine Positionierung der Sensoreinrichtung an den betreffenden zwei Magnetgruppen, ermittelt werden. Hierauf basierend bzw. unter zusätzlicher Berücksichtigung der Sensorstellung der Sensoreinrichtung kann die aktuelle Position des Primärteils bestimmt werden.

Die im Folgenden erläuterte Ausgestaltung des Verfahrens kann ebenfalls zur Anwendung kommen, wenn in der aktuellen Position des Primärteils eine Sensorstellung der Sensoreinrichtung im Bereich von zwei benachbarten Magnetgruppen vorliegt bzw. festgestellt wird, und dadurch beide Magnetgruppen jeweils teilweise durch die Sensoreinrichtung überdeckt werden.

In einer weiteren Ausführungsform werden die aktuellen Magnetfelddaten in Teildatenmengen unterteilt, welche jeweils mit Hilfe einer die Magnetanordnung teilweise überdeckenden Sensorteilgruppe aus Magnetfeldsensoren der Sensoreinrichtung gewonnen wurden. Ferner werden Teilmuster aus den Magnetfeldmustern unter Berücksichtigung der Sensorstellung der Sensoreinrichtung und unter Berücksichtigung der Teilüberdeckungen durch die Sensorteilgruppen gebildet. Für das Durchführen des Vergleichs werden die Teildatenmengen mit den Teilmustern verglichen.

Die vorgenannte Ausführungsform basiert auf einer Aufteilung der Magnetfeldsensoren der Sensoreinrichtung auf mehrere Sensorteilgruppen, welche jeweils eine Teilüberdeckung der Magnetanordnung des Sekundärteils bewirken. Die Sensorteilgruppen können jeweils die gleiche Anzahl an Magnetfeldsensoren umfassen. Hierauf basierend werden mehrere Teildatenmengen aus den aktuellen Magnetfelddaten ausgewählt, welche unter Verwendung der die Magnetanordnung jeweils teilweise überdeckenden Sensorteilgruppen gewonnen wurden. In gleicher Weise werden, unter Berücksichtigung der in der aktuellen Position vorliegenden Sensorstellung der Sensoreinrichtung, sich auf die Teilüberdeckungen beziehende Teilmuster aus den Magnetfeldmustern gebildet. Mit Hilfe der Teilmuster können die durch die Sensorteilgruppen bewirkten Teilüberdeckungen jeweils in Bezug auf zwei benachbarte Magnetgruppen wiedergegeben werden. Für den Fall, dass bei einer Sensorteilgruppe eine Überdeckung der Grenze der benachbarten Magnetgruppen vorliegt, können diejenigen Teilmuster, welche die durch diese Sensorteilgruppe bewirkte Teilüberdeckung wiedergeben, durch Zusammensetzen von Teilen von Magnetfeldmustern von benachbarten Magnetgruppen gebildet werden. Je nach Aufteilung der Magnetfeldsensoren können auch mehrere Sensorteilgruppen die Grenze überdecken. In entsprechender Weise können die die Teilüberdeckungen dieser Sensorteilgruppen betreffenden Teilmuster durch Teile von Magnetfeldmustern von benachbarten Magnetgruppen zusammengesetzt werden.

In dem nachfolgend durchgeführten Ähnlichkeitsvergleich werden die Teildatenmengen mit den hinsichtlich der Sensorstellung und der Aufteilung der Magnetfeldsensoren und damit der durch die Sensorteilgruppen bewirkten Teilüberdeckungen jeweils zugehörigen Teilmustern verglichen. Auf diese Weise können die Teilmuster mit der größten Ähnlichkeit ermittelt werden. Dies macht es möglich, diejenigen zwei benachbarten Magnetgruppen und damit eine Positionierung der Sensoreinrichtung an denjenigen zwei benachbarten Magnetgruppen zu bestimmen, welche zu den ermittelten Teilmustern gehören. Hierauf basierend bzw. unter zusätzlicher Berücksichtigung der Sensorstellung der Sensoreinrichtung kann die aktuelle Position des Primärteils bestimmt werden.

Mit Hilfe der vorgenannten Ausführungsform, bei welcher mehrere Teildatenmengen mit mehreren Teilmustern verglichen werden, kann die Zuverlässigkeit und Genauigkeit der Positionsbestimmung weiter begünstigt werden. Des Weiteren ermöglicht auch diese Ausführungsform eine Plausibilitätsprüfung. Dabei wird gefordert, dass anhand der mit der größten Ähnlichkeit ermittelten Teilmuster in übereinstimmender Weise zwei benachbarte Magnetgruppen bestimmt werden. Sofern dies nicht gegeben ist, kann auf ein Vorliegen eines Fehlers, zum Beispiel in den verwendeten Daten, geschlossen werden.

Im Hinblick auf die vorstehend beschriebenen Ausführungsformen, in welchen das Durchführen des Vergleichs auf unterschiedliche Art und Weise erfolgt, besteht die Möglichkeit, mehrere der unterschiedlichen Ausführungsformen durchzuführen, um die Position des Primärteils in Bezug auf das Sekundärteil zu bestimmen. Auch auf diese Weise kann die Zuverlässigkeit der Positionsbestimmung begünstigt werden, und ist darüber hinaus eine Plausibilitätsprüfung möglich.

Mit Bezug auf die vorstehend beschriebenen Ausführungsformen wird ergänzend auf Folgendes verwiesen. Wie oben erläutert wurde, kann eine Aufteilung der Permanentmagneten der Magnetanordnung des Sekundärteils vorgesehen sein, nach welcher die Magnetgruppen jeweils mehrere Permanentmagnetpaare aus invers zueinander polarisierten Permanentmagneten umfassen. Die Sensoreinrichtung des Primärteils kann von den Abmessungen her derart ausgebildet sein, dass mit Hilfe der Magnetfeldsensoren eine Überdeckung einer solchen Magnetgruppe, bezogen auf die Bewegungsrichtung von Primärteil und Sekundärteil, erzielt werden kann. Dabei ist es möglich, dass die Sensoreinrichtung in der aktuellen Position des Primärteils und bei Vorliegen einer versetzten Sensorstellung mehrere Grenzen von benachbarten Permanentmagnetpaaren bzw. Magnetgruppen überdeckt, was in entsprechender Weise anhand von Nulldurchgängen eines durch die aktuellen Magnetfelddaten wiedergegebenen Verlaufs einer Magnetfeldkomponente des Magnetfelds der Magnetanordnung des Sekundärteils ermittelt werden kann. Die oben erläuterten Verfahrensvarianten zur Positionsbestimmung können dabei in Bezug auf eine der Grenzen durchgeführt werden.

Wie oben angedeutet wurde, kann die gemäß dem Verfahren bestimmte aktuelle Position des Primärteils in Bezug auf das Sekundärteil eine ruhende Position sein, so dass bei Vorliegen dieser Position keine Bewegungserzeugung bei dem linearen Antriebssystem besteht. Ausgehend von dieser Position können das Primärteil und das Sekundärteil relativ zueinander bewegt werden. In diesem Zusammenhang kann die gemäß dem Verfahren bestimmte aktuelle Position als Referenzposition eingesetzt werden, auf welche nachfolgend durchgeführte Bewegungen und dadurch Positionsänderungen des Primärteils in Bezug auf das Sekundärteil referenziert werden können. Die Positionsänderungen können dabei anhand des mit Hilfe von einem oder auch mehreren Magnetfeldsensoren der Sensoreinrichtung erfassten Magnetfelds der Magnetanordnung des Sekundärteils ermittelt werden. Dies kann zum Beispiel in einer inkrementellen Weise erfolgen, indem die Positionsänderungen in Bezug auf einzelne Permanentmagnetpaare oder Magnetgruppen der Magnetanordnung ermittelt werden. Hierauf basierend kann ein Inkrementieren eines entsprechenden Zählers erfolgen.

Die vorgenannten Schritte können, wie die zuvor erläuterten Schritte (Initialmessung, Positionsbestimmung unter Verwendung der aktuellen Magnetfelddaten und der Referenz-Magnetfelddaten) mit Hilfe der Hauptsteuervorrichtung des linearen Antriebssystems bzw. durch Durchführen einer entsprechenden Auswertung durch die Hauptsteuervorrichtung vorgenommen werden.

Gemäß einem weiteren Aspekt der Erfindung wird ein lineares Antriebssystem, das im Anspruch 12 definiert wird, vorgeschlagen.

Für das lineare Antriebssystem können dieselben Merkmale, Details und Ausführungsformen zur Anwendung kommen und können dieselben Vorteile in Betracht kommen, wie sie oben mit Bezug auf das Verfahren erläutert wurden. Dadurch, dass bei dem linearen Antriebssystem für die Positionsbestimmung das bereits für die Bewegungserzeugung eingesetzte Sekundärteil, zusammen mit der an dem Primärteil vorgesehenen Sensoreinrichtung aus Magnetfeldsensoren, genutzt wird, kann die Verwendung von zusätzlichen platzeinnehmenden Anbauten entfallen. Infolgedessen kann eine Platzersparnis erzielt und eine Positionsbestimmung kostengünstig umgesetzt werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 eine Darstellung eines linearen Antriebssystems mit einem Primärteil und einem Sekundärteil, wobei das Primärteil eine Elektromagneteinrichtung und eine Sensoreinrichtung mit Magnetfeldsensoren zum Erfassen eines von dem Sekundärteil erzeugten Magnetfelds aufweist, und wobei das Sekundärteil eine Magnetanordnung aus Permanentmagneten aufweist, von welchen zwei Permanentmagnete zu einer Magnetgruppe zusammengefasst sind;
Figur 2 eine Aufsichtsdarstellung der Sensoreinrichtung des Primärteils und der Magnetanordnung des Sekundärteils;
Figur 3 ein Diagramm mit Verläufen einer Magnetfeldstärke von mehreren Magnetgruppen der Magnetanordnung;
Figur 4 eine Darstellung der Sensoreinrichtung und der Magnetanordnung, wobei sich die Sensoreinrichtung im Bereich einer Magnetgruppe befindet und die Magnetgruppe überdeckt, mit einer zusätzlichen Darstellung von den Magnetgruppen zugeordneten Magnetfeldmustern von Referenz-Magnetfelddaten;
Figur 5 ein Diagramm mit Verläufen einer Magnetfeldstärke, wobei ein Nulldurchgang mit Bezug auf den Verlauf einer Magnetfeldkomponente gezeigt ist;
Figur 6 ein Diagramm mit Magnetfelddaten;
Figur 7 ein Diagramm, welches eine Positionsbestimmung durch Durchführen eines Ähnlichkeitsverfahrens unter Verwendung von aktuellen Magnetfelddaten und Referenz-Magnetfelddaten veranschaulicht;
Figur 8 eine Darstellung der Sensoreinrichtung und der Magnetanordnung, wobei sich die Sensoreinrichtung im Bereich von zwei benachbarten Magnetgruppen befindet und beide Magnetgruppen teilweise überdeckt, mit einer zusätzlichen Darstellung von Teilmustern von Magnetfeldmustern, welche gebildet sind entsprechend einer Überdeckung der beiden Magnetgruppen durch die Sensoreinrichtung;
Figur 9 ein Diagramm mit aktuellen Magnetfelddaten;
Figur 10 ein Diagramm mit einer Teildatenmenge der aktuellen Magnetfelddaten;
Figur 11 eine Darstellung der Sensoreinrichtung und der Magnetanordnung, wobei sich die Sensoreinrichtung im Bereich von zwei benachbarten Magnetgruppen befindet, mit einer zusätzlichen Darstellung von neu zusammengesetzten Magnetfeldmustern, welche zusammengesetzt sind aus Teilmustern von Magnetfeldmustern entsprechend einer Überdeckung der beiden Magnetgruppen durch die Sensoreinrichtung;
Figur 12 eine Darstellung der Sensoreinrichtung und der Magnetanordnung, wobei sich die Sensoreinrichtung im Bereich von zwei benachbarten Magnetgruppen befindet, mit einer zusätzlichen Darstellung einer Aufteilung der Magnetfeldsensoren der Sensoreinrichtung auf Sensorteilgruppen und, abgestimmt auf die Aufteilung, von Teildatenmengen der aktuellen Magnetfelddaten und von Teilmustern von Magnetfeldmustern;
Figuren 13 und 14 Diagramme mit Teildatenmengen der aktuellen Magnetfelddaten;
Figur 15 eine Darstellung der Sensoreinrichtung und der Magnetanordnung, wobei sich die Sensoreinrichtung im Bereich von zwei benachbarten Magnetgruppen befindet, mit einer zusätzlichen Darstellung von weiteren Aufteilungen der Magnetfeldsensoren der Sensoreinrichtung auf Sensorteilgruppen, sowie von Teildatenmengen der aktuellen Magnetfelddaten und von Teilmustern von Magnetfeldmustern;
Figur 16 ein Diagramm mit einer weiteren Teildatenmenge der aktuellen Magnetfelddaten;
Figur 17 eine Darstellung der Sensoreinrichtung und der Magnetanordnung, wobei vier Permanentmagnete zu einer Magnetgruppe zusammengefasst sind und die Sensoreinrichtung ausgebildet ist zum Überdecken einer solchen Magnetgruppe, mit einer zusätzlichen Darstellung von den Magnetgruppen zugeordneten Magnetfeldmustern von Referenz-Magnetfelddaten; und
Figur 18 eine Darstellung der Sensoreinrichtung und der Magnetanordnung, wobei sich die Sensoreinrichtung versetzt im Bereich von mehreren Magnetgruppen befindet, mit einer zusätzlichen Darstellung von Teilmustern von Magnetfeldmustern und eines neu zusammengesetzten Magnetfeldmusters.

Auf der Grundlage der folgenden schematischen Figuren werden Ausführungsformen eines linearen Antriebssystems und eines Verfahrens zum Betreiben eines linearen Antriebsystems beschrieben. Das lineare Antriebssystem weist ein Primärteil und ein Sekundärteil auf, welche relativ zueinander translatorisch bewegt werden können. Der Betrieb des linearen Antriebssystems umfasst ein Durchführen einer Positionsbestimmung für das Primärteil, was u. a. unter Verwendung eines von dem Sekundärteil erzeugten Magnetfelds erfolgt. Auf diese Weise kann die Positionsbestimmung platzsparend verwirklicht sein.

Mit Bezug auf die im Folgenden beschriebenen Ausführungsformen wird darauf hingewiesen, dass Aspekte und Details, welche in Bezug auf eine Ausführungsform genannt werden, auch bei einer anderen Ausführungsform zur Anwendung kommen können. Des Weiteren besteht die Möglichkeit, Merkmale von mehreren Ausführungsformen miteinander zu kombinieren. Ergänzend wird darauf hingewiesen, dass die Figuren lediglich schematischer Natur sind. Insofern können in den Figuren gezeigte Bestandteile und Details nicht maßstabsgetreu, sondern übertrieben groß oder verkleinert dargestellt sein. Im Falle von Diagrammen wird darauf verwiesen, dass es sich bei Achsenbeschriftungen um willkürliche Einheiten handeln kann.

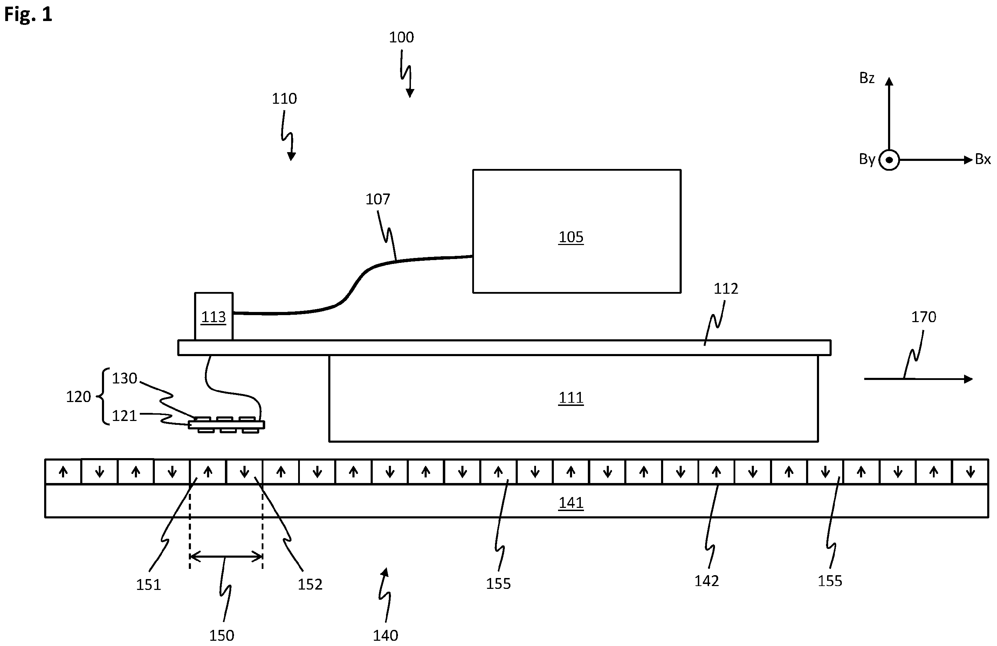

Figur 1 zeigt eine mögliche Ausgestaltung eines linearen Antriebssystems 100 in einer seitlichen Darstellung. Das lineare Antriebssystem 100 weist ein Primärteil 110 und ein Sekundärteil 140 auf, welche relativ zueinander translatorisch bewegt werden können. In der vorliegenden Ausgestaltung ist das Sekundärteil 140 eine ortsfeste Komponente und ist das Primärteil 110 eine bewegliche Komponente des linearen Antriebssystems 100, so dass das Primärteil 110 gegenüber dem Sekundärteil 140 bewegt werden kann. Hierbei kann das Primärteil 110 auch als Schlitten und das Sekundärteil 140 als Magnetplatte bezeichnet werden. In Figur 1 ist anhand eines Pfeils eine Bewegungsrichtung 170 angedeutet. Eine Bewegung des Primärteils 110 entlang der Bewegungsrichtung 170 kann sowohl in der durch den Pfeil angedeuteten Richtung als auch in einer hierzu entgegengesetzten Richtung erfolgen.

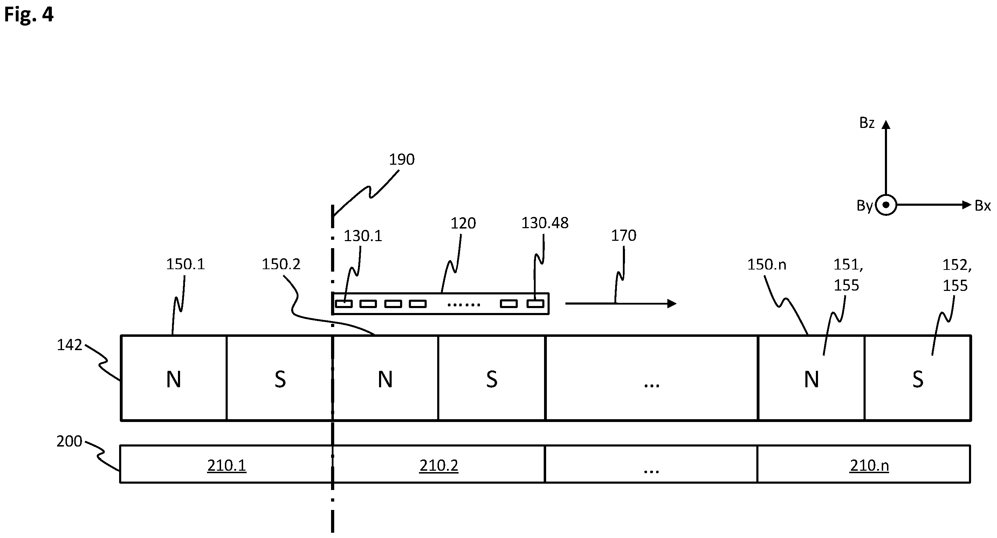

Für die Bewegungserzeugung weist das Primärteil 110 eine bestrombare Elektromagneteinrichtung 111 und weist das Sekundärteil 140 eine Magnetanordnung 142 aus mehreren und entlang der Bewegungsrichtung 170 nebeneinander angeordneten Permanentmagneten 155 auf. Die Permanentmagnete 155 sind derart angeordnet, dass benachbarte Permanentmagnete 155 mit Bezug auf ihre Polarität zueinander entgegengesetzt angeordnet sind und auf diese Weise entlang der Bewegungsrichtung 170 ein Wechsel der Polarität vorliegt. Diese Ausgestaltung ist in Figur 1 anhand von Pfeilen mit unterschiedlichen Pfeilrichtungen angedeutet. Die bezüglich der Polarität unterschiedlich ausgerichteten Permanentmagneten 155 werden im Folgenden auch als erste Permanentmagnete 151 und zweite Permanentmagnete 152 bezeichnet. Die ersten Permanentmagnete 151 können an der dem Primärteil 110 zugewandten Seite einen magnetischen Nordpol aufweisen, wie durch den nach oben gerichteten Pfeil angedeutet ist. In entsprechender Weise können die zweiten Permanentmagnete 152 an der dem Primärteil 110 zugewandten Seite einen magnetischen Südpol aufweisen, wie durch den nach unten gerichteten Pfeil angedeutet ist. In nachfolgenden Figuren (zum Beispiel Figur 4) ist die unterschiedliche Polarität anstatt von Pfeilen mit den Buchstaben N (für Nordpol) und S (für Südpol) gekennzeichnet.

Die Elektromagneteinrichtung 111 des Primärteils 110 weist mehrere nicht dargestellte bestrombare Elektromagneten in Form von Spulen auf. Durch Bestromen der Elektromagneten, was ein Beaufschlagen der Elektromagneten mit einem Dreiphasenstrom umfassen kann, kann ein variierendes Magnetfeld durch die Elektromagneteinrichtung 111 erzeugt werden. Das variierende Magnetfeld kann mit dem von der Permanentmagnetanordnung 142 des Sekundärteils 140 bereitgestellten Magnetfeld wechselwirken, wodurch die translatorische Bewegung des Primärteils 110 gegenüber dem Sekundärteil 140 hervorgerufen werden kann.

Wie in Figur 1 dargestellt ist, weist das Sekundärteil 140 zusätzlich zu der Magnetanordnung 142 eine Trägerplatte 141 auf, auf welcher die Permanentmagnete 155 angeordnet sind. Das Primärteil 110 weist ein in Figur 1 lediglich schematisch angedeutetes Gehäuse 112 auf, innerhalb welchem die Elektromagneteinrichtung 111 angeordnet ist. Das Primärteil 110 weist ferner eine ebenfalls innerhalb des Gehäuses 112 angeordnete Sensoreinrichtung 120 auf, welche dazu ausgebildet ist, das von der Magnetanordnung 142 des Sekundärteils 140 erzeugte Magnetfeld zu erfassen. Dies kommt im Rahmen einer Positionsbestimmung für das Primärteil 110 zum Einsatz, wie weiter unten beschrieben wird. Die Sensoreinrichtung 120 weist hierzu mehrere Magnetfeldsensoren 130 und eine Leiterplatte 121 auf, auf welcher die Magnetfeldsensoren 130 angeordnet sind. Die Magnetfeldsensoren 130 können auf einer Seite oder, wie in Figur 1 gezeigt, auf zwei entgegengesetzten Seiten der Leiterplatte 121 positioniert sein. Hierbei können die Magnetfeldsensoren 130 in einer oder auch in zwei Ebenen verteilt angeordnet sein. Das Erfassen des Magnetfelds kann durch eine Abtastung erfolgen.

Die Magnetfeldsensoren 130 der Sensoreinrichtung 120 sind dazu ausgebildet, das Magnetfeld der Magnetanordnung 142 bzw. dessen magnetische Flussdichte in drei unterschiedlichen Richtungen und damit, wie in Figur 1 anhand von Pfeilen angedeutet ist, drei verschiedene Magnetfeldkomponenten Bx, By, Bz des Magnetfelds zu erfassen. Eine erste Magnetfeldkomponente Bx bezieht sich auf eine Richtung parallel zur Bewegungsrichtung 170, wohingegen eine zweite Magnetfeldkomponente By und eine dritte Magnetfeldkomponente Bz sich auf hierzu senkrechte Richtungen beziehen. Die erste und zweite Magnetfeldkomponente Bx, By betreffen ferner Richtungen parallel zu einer durch die Magnetanordnung 142 vorgegebenen Ebene, wohingegen die dritte Magnetfeldkomponente Bz die hierzu vertikale Richtung betrifft. Die Magnetfeldsensoren 130 können in Form von Hall-Sensoren bzw. 3D-Hall-Sensoren verwirklicht sein. Möglich ist auch eine andere Ausgestaltung, zum Beispiel in Form von MR-Sensoren (Magnetoresistiven Sensoren).

Das lineare Antriebssystem 100 weist des Weiteren, wie in Figur 1 dargestellt ist, eine Hauptsteuervorrichtung 105 auf, welche ausgebildet ist, den Betrieb des linearen Antriebssystems 100 zu steuern. Hierzu ist die Hauptsteuervorrichtung 105 über ein Verbindungskabel 107 mit einem Anschluss 113 des Primärteils 110 verbunden, welcher an dessen Gehäuse 112 angeordnet ist und mit welchem die Elektromagneteinrichtung 111 und die Sensoreinrichtung 120 des Primärteils 110 in Verbindung stehen. Im Hinblick auf die bewegliche Ausführung des Primärteils 110 ist das Verbindungskabel 107 zum Beispiel als Schleppkabel oder Kabelschleppkette ausgebildet. Über die auf diese Weise verwirklichte Verbindung zwischen der Hauptsteuervorrichtung 105 und dem Primärteil 110 kann die Hauptsteuervorrichtung 105 das Bestromen der Elektromagneteinrichtung 111 steuern. Dadurch kann eine entsprechende Bewegung des Primärteils 110 bewirkt werden. Ferner kann mit Hilfe der Sensoreinrichtung 120 das Magnetfeld der Magnetanordnung 142 des Sekundärteils 140 erfasst werden. Hierauf basierend können Magnetfelddaten bereitgestellt werden, welche in der Hauptsteuervorrichtung 105 hinterlegt werden können. Zu diesem Zweck kann eine u. a. über das Verbindungskabel 107 und nicht dargestellte Schnittstellen verwirklichte Datenkommunikation zwischen der Sensoreinrichtung 120 und der Hauptsteuervorrichtung 105 stattfinden, wodurch im Rahmen der Magnetfeldmessung durch die Sensoreinrichtung 120 gewonnene Sensorsignale bzw. Sensordaten an die Hauptsteuervorrichtung 105 übermittelt werden können.

Zusätzlich zu den in Figur 1 gezeigten sowie vorstehend beschriebenen Komponenten kann das lineare Antriebssystem 100 weitere nicht dargestellte Bestandteile umfassen. Dies betrifft Bestandteile zur Führung bzw. Lagerung des beweglichen Primärteils 110 an oder gegenüber dem ortsfesten Sekundärteil 140. In diesem Zusammenhang können zum Beispiel Führungsschienen mit beweglichen Rollen bzw. Kugeln, sowie hierzu korrespondierende und an dem Gehäuse 112 des Primärteils 110 angeordnete oder ausgebildete Halteelemente gehören.

Gemäß der in Figur 1 gezeigten Ausgestaltung ist die Sensoreinrichtung 120 von den Abmessungen her derart ausgebildet, dass mit Hilfe der Magnetfeldsensoren 130 eine vollständige bzw. im Wesentlichen vollständige Überdeckung oder Überlappung von zwei Permanentmagneten 155, bezogen auf die Bewegungsrichtung 170, erzielt werden kann. Die Magnetfeldsensoren 130 der Sensoreinrichtung 120 sind des Weiteren, ebenfalls bezogen auf die Bewegungsrichtung 170, verteilt und zueinander beabstandet angeordnet. Zum Zwecke der Positionsbestimmung ist, abgestimmt auf die Sensoreinrichtung 120, eine solche Zuordnung bzw. Aufteilung der Permanentmagneten 155 der Magnetanordnung 142 des Sekundärteils 140 vorgesehen, nach welcher jeweils ein Permanentmagnetpaar aus zwei zueinander invers polarisierten Permanentmagneten 155 bzw. ein Paar aus einem ersten und zweiten Permanentmagnet 151, 152 zu einer Magnetgruppe 150 zusammengefasst sind.

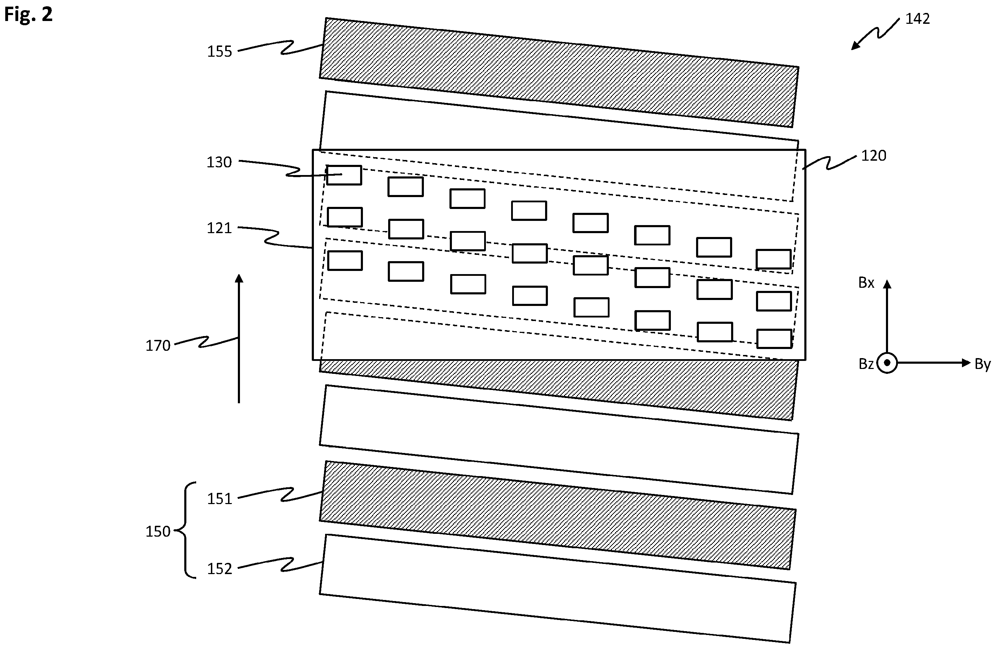

Figur 2 zeigt eine Aufsichtsdarstellung der Sensoreinrichtung 120 des Primärteils 110 und der Magnetanordnung 142 des Sekundärteils 140. Die Permanentmagnete 155 der Magnetanordnung 142 besitzen eine längliche Gestalt und sind mit Bezug auf ihre Längsachsen zueinander parallel angeordnet. Die Längsachsen der Permanentmagnete 155 sind im Wesentlichen senkrecht zu der Bewegungsrichtung 170 orientiert. Hierbei weicht die Ausrichtung der Längsachsen der Permanentmagnete 155 etwas von einer exakt senkrechten Ausrichtung ab, indem die Längsachsen schräg bzw. leicht schräg mit Bezug auf die Bewegungsrichtung 170 orientiert sind. Diese Ausgestaltung dient dazu, ein bei der Bewegung des Primärteils 110 mögliches Auftreten einer Rastmomentwelligkeit (auch als Cogging bezeichnet) zu unterdrücken.

Figur 2 zeigt des Weiteren eine mögliche Ausgestaltung der Sensoreinrichtung 120, in welcher die Magnetfeldsensoren 130 matrixartig in Form von Zeilen und Spalten angeordnet sind. Die Anordnung ist derart gewählt, dass wie vorstehend angegeben mit Hilfe der Magnetfeldsensoren 130 eine Überdeckung eines Permanentmagnetpaars und damit einer Magnetgruppe 150 erzielt werden kann, und darüber hinaus die Magnetfeldsensoren 130 mit Bezug auf die Bewegungsrichtung 170 verteilt und zueinander beanstandet angeordnet sind. Eine solche Ausgestaltung lässt sich sowohl mit einer Anordnung der Magnetfeldsensoren 130 auf einer Seite der Leiterplatte 121 der Sensoreinrichtung 120 als auch mit einer Anordnung der Magnetfeldsensoren 130 beidseitig der Leiterplatte 121, wie in Figur 1 gezeigt, verwirklichen.

Um den Betrieb des linearen Antriebssystems 100 bzw. die Bewegung des Primärteils 110 zuverlässig durch die Hauptsteuervorrichtung 105 zu steuern, ist das lineare Antriebssystem 100 ausgebildet, eine Positionsbestimmung für das Primärteil 110 durchzuführen. Bei dem linearen Antriebssystem 100 ist dies in platzsparender Weise dadurch verwirklicht, dass die Positionsbestimmung unter Verwendung des bereits für den Bewegungsantrieb genutzten Sekundärteils 140, zusammen mit der Sensoreinrichtung 120 des Primärteils 110, erfolgt. Hierbei wird ausgenutzt, dass das von der Permanentmagnetanordnung 142 des Sekundärteils 140 erzeugte und mit Hilfe der Sensoreinrichtung 120 messbare Magnetfeld entlang der Bewegungsrichtung 170 einen im Wesentlichen periodischen Verlauf mit individuellen Unterschieden besitzen kann. Hierauf basierend kann eine zuverlässige und genaue Positionsbestimmung verwirklicht werden.

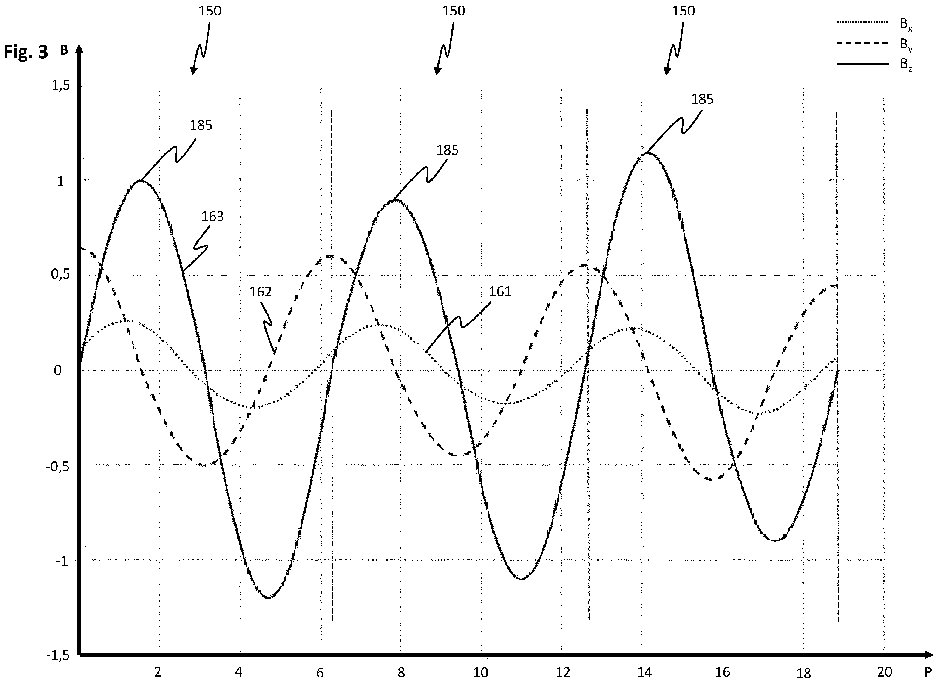

Zur Veranschaulichung zeigt Figur 3 ein Diagramm mit möglichen positionsabhängigen Verläufen 161, 162, 163 einer Magnetfeldstärke für das von der Magnetanordnung 142 des Sekundärteils 140 entlang der Bewegungsrichtung 170 erzeugte und durch die Sensoreinrichtung 120 bzw. durch einen Magnetfeldsensor 130 erfassbare Magnetfeld. Dargestellt ist jeweils die Flussdichte B in Abhängigkeit einer auf die Bewegungsrichtung 170 bezogenen Position P für drei Magnetgruppen 150. Ein erster Verlauf 161 bezieht sich auf die erste Magnetfeldkomponente Bx, ein zweiter Verlauf 162 auf die zweite Magnetfeldkomponente By, und ein dritter Verlauf 163 auf die dritte Magnetfeldkomponente Bz. Die drei Verläufe 161, 162, 163 besitzen eine im Wesentlichen sinusförmige Gestalt, wobei von einem zum nächsten Permanentpaar bzw. von einer zur nächsten Magnetgruppe 150 individuelle Unterschiede bestehen. Beispielsweise können, wie in Figur 3 gezeigt, Scheitelpunkte 185 des dritten Verlaufs 163 unterschiedliche Werte der Flussdichte B aufweisen. Dies kann auch auf den ersten und zweiten Verlauf 161, 162 zutreffen.

Solche positionsabhängigen Unterschiede in dem von der Magnetanordnung 142 des Sekundärteils 140 erzeugten und mit Hilfe der Sensoreinrichtung 120 des Primärteils 110 erfassbaren Magnetfeld, welche von Permanentmagnetpaar zu Permanentmagnetpaar und dadurch Magnetgruppe 150 zu Magnetgruppe 150 vorliegen können, können auf Toleranzen des linearen Antriebssystems 100 und von dessen Bestandteilen beruhen. Hierzu können mechanische und magnetische Winkelfehler, Magnetisierungsfehler, Dichteunterschiede, geometrische Abweichungen, Klebespalte, ein mechanischer Versatz usw. gehören. Die Unterschiede des Magnetfelds werden bei dem linearen Antriebssystem 100 genutzt, um die Position des Primärteils 110 in Bezug auf das Sekundärteil 140 zu bestimmen. Hierbei wird folgende Vorgehensweise angewandt.

In einer Initialmessung wird an unterschiedlichen Positionen des Primärteils 110 in Bezug auf das Sekundärteil 140 das Magnetfeld der Magnetanordnung 142 mit Hilfe der Sensoreinrichtung 120 erfasst bzw. abgetastet. Hierauf basierend werden positionsabhängige Referenz-Magnetfelddaten bereitgestellt. Diese dienen als Grundlage für die eigentliche, nachfolgend durchgeführte Positionsbestimmung. Hierbei befindet sich das Primärteil 110 an einer zunächst noch unbekannten aktuellen Position in Bezug auf das Sekundärteil 140. Die aktuelle Position kann eine ruhende Position sein, so dass an dieser Position (zunächst noch) keine Bewegung im Betrieb des linearen Antriebssystems 100 hervorgerufen wird und das Primärteil 110 ruhend ist. An der aktuellen Position wird erneut mit Hilfe der Sensoreinrichtung 120 das Magnetfeld der Magnetanordnung 142 erfasst bzw. abgetastet. Hierauf basierend werden aktuelle Magnetfelddaten bereitgestellt. Unter Verwendung der aktuellen Magnetfelddaten und der Referenz-Magnetfelddaten wird die aktuelle Position des Primärteils 110 bestimmt. Wie weiter unten erläutert wird, umfasst dies ein Durchführen eines Ähnlichkeitsverfahrens.

Die im Folgenden näher erläuterte Initialmessung und Positionsbestimmung können ebenfalls mit Hilfe der Hauptsteuervorrichtung 105 des linearen Antriebssystems 100 gesteuert bzw. durchgeführt oder unter Beteiligung der Hauptsteuervorrichtung 105 vorgenommen werden. Die dabei durch das Erfassen des Magnetfelds der Magnetanordnung 142 mit Hilfe der Sensoreinrichtung 120 gewonnenen Referenz-Magnetfelddaten, sowie auch die aktuellen Magnetfelddaten, können in der Hauptsteuervorrichtung 105 hinterlegt werden. Durch eine entsprechende Auswertung, wie sie weiter unten beschrieben wird, und welche ebenfalls durch die Hauptsteuervorrichtung 105 durchgeführt werden kann, kann anhand dieser Daten die aktuelle Position des Primärteils 110 mit einer hohen Zuverlässigkeit und Genauigkeit bestimmt werden.

Für die Initialmessung zum Bereitstellen der Referenz-Magnetfelddaten ist folgende Ausgestaltung vorgesehen. Die Initialmessung wird derart durchgeführt, dass mit Hilfe der Magnetfeldsensoren 130 der Sensoreinrichtung 120 im Bereich der einzelnen Magnetgruppen 150 jeweils das Magnetfeld erfasst und entsprechende Magnetfelddaten bereitgestellt werden, welche somit den betreffenden Magnetgruppen 150 zugeordnet sind. Die auf diese Weise gewonnenen und mit den einzelnen Magnetgruppen 150 verknüpften Magnetfelddaten werden im Folgenden als Magnetfeldmuster bezeichnet. Die Referenz-Magnetfelddaten umfassen dabei sämtliche bereitgestellten Magnetfeldmuster der Magnetgruppen 150. Die Magnetfeldmuster, welche in der Hauptsteuervorrichtung 105 hinterlegt werden können, können auch als Referenzmuster oder Schablonen (Templates) bezeichnet werden.

Die Initialmessung kann zu diesem Zweck ein Bewegen des Primärteils 110 entlang des Sekundärteils 140 und ein Bereitstellen der Magnetfeldmuster anhand des Magnetfelds umfassen, welches mit Hilfe der Magnetfeldsensoren 130 der Sensoreinrichtung 120 jeweils dann erfasst wird, wenn sich die Magnetfeldsensoren 130 im Bereich einer Magnetgruppe 150 befinden, und insofern mit Bezug auf die Bewegungsrichtung 170 eine Überdeckung der betreffenden Magnetgruppe 150 durch die Magnetfeldsensoren 130 vorliegt. Hierzu kann das Magnetfeld während der Bewegung des Primärteils 110 mit einer vorgegebenen Abtastfrequenz unter Verwendung der Magnetfeldsensoren 130 abgetastet werden und darauf basierend können entsprechende Magnetfelddaten erzeugt werden. Hiervon können lediglich diejenigen Magnetfelddaten als Magnetfeldmuster verwendet und hinterlegt werden, welche anhand des gemessenen Magnetfelds bereitgestellt werden, wenn sich die Magnetfeldsensoren 130, wie oben angegeben, jeweils im Bereich einer Magnetgruppe 150 befinden und diese überdecken.

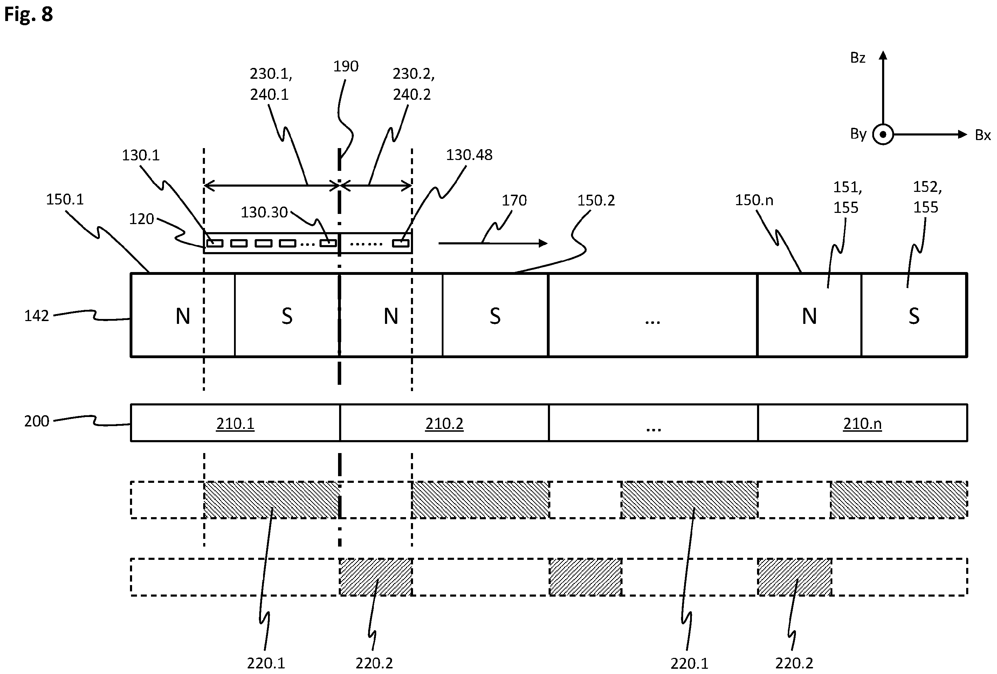

Zur Veranschaulichung zeigt Figur 4 eine Gegebenheit zu einem Zeitpunkt, wie sie bei der Initialmessung vorliegen kann. Mit Bezug auf das Primärteil 110 ist lediglich die Sensoreinrichtung 120, und mit Bezug auf das Sekundärteil 140 ist lediglich die Magnetanordnung 142 abgebildet. Diese Darstellung ist auch in nachfolgenden Figuren (zum Beispiel Figur 8) gewählt. Die folgende Beschreibung basiert auf einer beispielhaften Ausgestaltung der Sensoreinrichtung 120 mit achtundvierzig Magnetfeldsensoren 130, welche mit Bezug auf die Bewegungsrichtung 170 verteilt und zueinander beabstandet angeordnet sind. Zur Unterscheidung von Komponenten wie der Magnetfeldsensoren 130 sind in Figur 4 (und auch nachfolgenden Figuren) Indizes in Form von ".1", ".2", ".30", ".48" ".n" usw. verwendet. Hierzu korrespondierend werden die in Figur 4 mit den Bezugszeichen 130.1 und 130.48 gekennzeichneten und sich an entgegengesetzten Enden der Anordnung aus Magnetfeldsensoren 130 befindenden Magnetfeldsensoren 130 im Folgenden als erster Magnetfeldsensor 130.1 und achtundvierzigster Magnetfeldsensor 130.48 bezeichnet.

Die Magnetgruppen 150 der Magnetanordnung 142 sind ebenfalls mit Indizes versehen, wodurch eine Anordnung umfassend eine erste Magnetgruppe 150.1, eine zweite Magnetgruppe 150.2, usw. bis zu einer nten Magnetgruppe 150.n vorliegt, wobei n zum Beispiel 100 betragen kann. Hinsichtlich der ersten Magnetgruppe 150.1 wird darauf verwiesen, dass diese abweichend von Figur 4 nicht eine sich an einem (linken) Ende der Magnetanordnung 142 befindende Magnetgruppe 150 sein kann, und insofern lediglich für die folgende Beschreibung als erste Magnetgruppe 150.1 betrachtet werden kann. Links von der ersten Magnetgruppe 150.1 kann sich wenigstens ein weiteres Permanentmagnetpaar und dadurch wenigstens eine weitere Magnetgruppe 150 befinden (nicht dargestellt).

In Figur 4 sind zusätzlich schematisch und entsprechend den Positionen der Magnetgruppen 150 die den einzelnen Magnetgruppen 150 zugeordneten Magnetfeldmuster 210 der Referenz-Magnetfelddaten 200 dargestellt. Auch diese sind mit Indizes versehen, so dass ein erstes Magnetfeldmuster 210.1, ein zweites Magnetfeldmuster 210.2, usw. bis zu einem nten Magnetfeldmuster 210.n vorliegt.

Gemäß Figur 4 befindet sich die Sensoreinrichtung 120 im Rahmen der Initialmessung, in welcher das Primärteil 110 und damit die Sensoreinrichtung 120 zum Beispiel von links nach rechts bewegt werden, im Bereich der zweiten Magnetgruppe 150.2, so dass die zweite Magnetgruppe 150.2 durch die Magnetfeldsensoren 130 überdeckt wird. Die in diesem Zustand durch Erfassen des Magnetfelds mit Hilfe der Magnetfeldsensoren 130 gewonnenen Magnetfelddaten bilden das der zweiten Magnetgruppe 150.2 zugeordnete zweite Magnetfeldmuster 210.2. Die anderen Magnetfeldmuster 210 der Referenz-Magnetfelddaten 200 werden in entsprechender Weise anhand des durch die Magnetfeldsensoren 130 erfassten Magnetfelds bereitgestellt, wenn sich die Sensoreinrichtung 120 bzw. deren Magnetfeldsensoren 130 jeweils im Bereich einer zugehörigen Magnetgruppe 150 befinden und diese überdecken.

Das Durchführen der Initialmessung umfasst in diesem Zusammenhang ferner ein Bestimmen, dass sich die Magnetfeldsensoren 130 der Sensoreinrichtung 120 jeweils im Bereich einer Magnetgruppe 150 befinden und dadurch eine Überdeckung der Magnetgruppe 150 vorliegt, um hierauf basierend bzw. hierauf abgestimmt das vorstehend beschriebene Bereitstellen der Magnetfeldmuster 210 der Magnetgruppen 150 vorzunehmen. Hierfür wird ausgenutzt, dass anhand des durch die Sensoreinrichtung 120 gemessenen Magnetfelds Grenzen 190 zwischen Permanentmagnetpaaren und dadurch zwischen den Magnetgruppen 150 erfasst werden können, und dadurch ein Vorliegen der Magnetfeldsensoren 130 im Bereich der einzelnen Magnetgruppen 150 erkannt werden kann. In Figur 4 ist eine solche Grenze 190 zwischen der ersten und zweiten Magnetgruppe 150.1, 150.2 durch eine gestrichelte Linie veranschaulicht.

Die Grenzen 190 benachbarter Permanentmagnetpaare und Magnetgruppen 150 können durch positive (also mit positiver Steigung behaftete) Nulldurchgänge eines bei der Initia-Imessung entlang der Bewegungsrichtung 170 gewonnenen Magnetfeldstärkeverlaufs der dritten Magnetfeldkomponente Bz wiedergegeben werden. Hierauf basierend können die Grenzen 190 ermittelt werden. Für das Bestimmen, dass sich die Magnetfeldsensoren 130 jeweils im Bereich einer Magnetgruppe 150 befinden, kann daher der mit Hilfe eines endseitigen Magnetfeldsensors 130 (welcher sich an einem Ende der Anordnung aus Magnetfeldsensoren 130 befindet) erfasste Verlauf der dritten Magnetfeldkomponente Bz herangezogen werden.

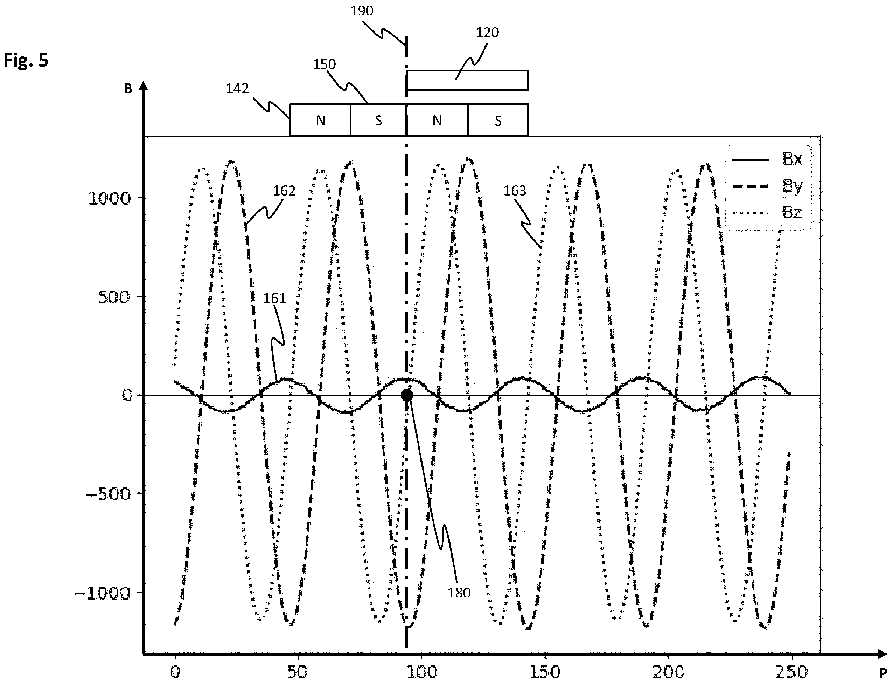

Vorliegend kann zu diesem Zweck zum Beispiel der erste Magnetfeldsensor 130.1 zum Einsatz kommen. Figur 5 zeigt in diesem Zusammenhang ein Diagramm mit sich auf die unterschiedlichen Magnetfeldkomponenten Bx, By, Bz beziehenden Verläufen 161, 162, 163 der Magnetfeldstärke, welche in der Initialmessung durch Erfassen des Magnetfelds mit Hilfe des ersten Magnetfeldsensors 130.1 gewonnen werden können. In Figur 5 ist des Weiteren ein positiver Nulldurchgang 180 des sich auf die dritte Magnetfeldkomponente Bz beziehenden dritten Verlaufs 163 angedeutet, durch welchen eine Grenze 190 von benachbarten Permanentmagnetpaaren und Magnetgruppen 150 wiedergegeben wird.

Sofern sich der erste Magnetfeldsensor 130.1 an bzw. in der Nähe einer Grenze 190 befindet und damit eine Überdeckung einer Magnetgruppe 150 durch die Magnetfeldsensoren 130 der Sensoreinrichtung 120 vorliegt, kann dies anhand eines Nulldurchgangs 180 des mit Hilfe des ersten Magnetfeldsensors 130.1 während der Initialmessung erfassten dritten Magnetfeldstärkeverlaufs 163 der dritten Magnetfeldkomponente Bz ermittelt werden. Die zu einem solchen Zeitpunkt mit sämtlichen Magnetfeldsensoren 130 gewonnenen Magnetfelddaten können ein entsprechendes Magnetfeldmuster 210 bilden bzw. als Magnetfeldmuster 210 verwendet werden. In der Initialmessung, in welcher das Primärteil 110 entlang des Sekundärteils 140 bewegt wird, kann das Bereitstellen der Magnetfeldmuster 210 anhand des durch die Magnetfeldsensoren 130 erfassten Magnetfelds der Magnetanordnung 142 somit jeweils darauf abgestimmt erfolgen, dass mit Hilfe des ersten Magnetfeldsensors 130.1 ein Vorliegen eines Nulldurchgangs 180 bei der mittels des ersten Magnetfeldsensors 130.1 gemessenen dritten Magnetfeldkomponente Bz festgestellt wird.

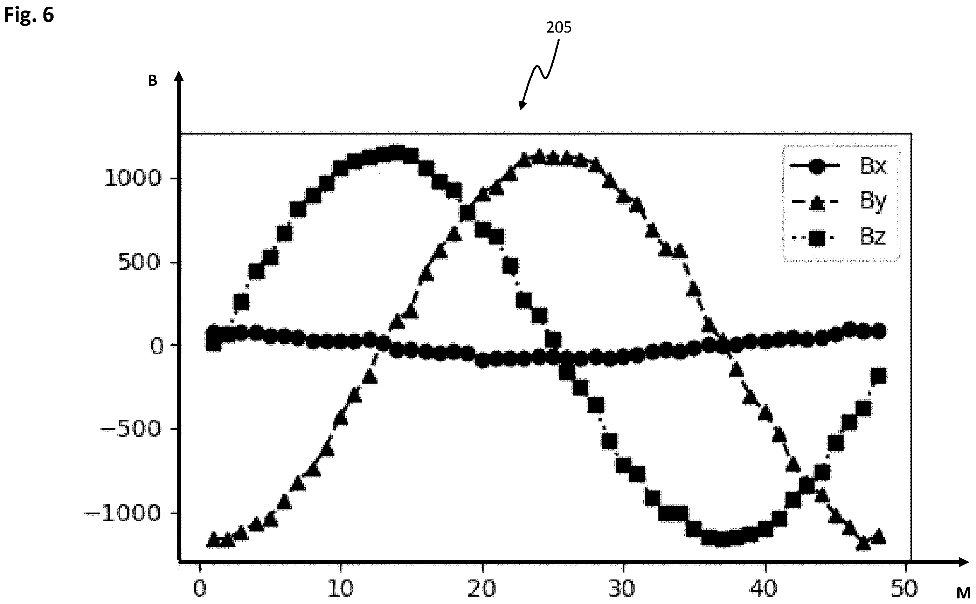

Figur 6 zeigt zur Veranschaulichung ein Diagramm mit möglichen Magnetfelddaten 205, welche durch Erfassen des Magnetfelds mit sämtlichen Magnetfeldsensoren 130 im Bereich einer Magnetgruppe 150, zum Beispiel wie in Figur 4 gezeigt im Bereich der zweiten Magnetgruppe 150.2, bereitgestellt werden, und welche als Magnetfeldmuster 210 bzw. entsprechend Figur 4 als zweites Magnetfeldmuster 210.2 behandelt und verwendet werden können. Die gezeigten Magnetfelddaten 205 umfassen mit unterschiedlichen Symbolen in Form von Kreisen, Dreiecken und Vierecken gekennzeichnete Datenpunkte zu den von jedem Magnetfeldsensor 130 der Sensoreinrichtung 120 erfassten Magnetfeldkomponenten Bx, By, Bz. Hierzu korrespondierend ist auf der Abszisse eine Nummer M eines Magnetfeldsensors 130 für die gemäß dem vorliegenden Beispiel achtundvierzig Magnetfeldsensoren 130 umfassende Sensoreinrichtung 120 dargestellt. Wie oben angegeben wurde, sind die achtundvierzig Magnetfeldsensoren 130 der Sensoreinrichtung 120 entlang der Bewegungsrichtung 170 verteilt nebeneinander angeordnet. Entsprechend den achtundvierzig Magnetfeldsensoren 130 umfassen die Magnetfelddaten 205, und damit jedes Magnetfeldmuster 210, achtundvierzig Datenpunkte für jede Magnetfeldkomponente Bx, By, Bz.

Anstelle des ersten Magnetfeldsensors 130.1 kann auch der achtundvierzigste Magnetfeldsensor 130.48 zur Anwendung kommen, um anhand des durch diesen Magnetfeldsensor 130.48 in der Initialmessung erfassten Verlaufs der dritten Magnetfeldkomponente Bz Grenzen 190 von benachbarten Magnetgruppen 150 zu erkennen und dadurch diejenigen Zeitpunkte zu bestimmen, in welchen sich die Magnetfeldsensoren 130 der Sensoreinrichtung 120 jeweils im Bereich einer Magnetgruppe 150 befinden. Auch hierauf abgestimmt kann das Bereitstellen der Magnetfeldmuster 210 erfolgen.

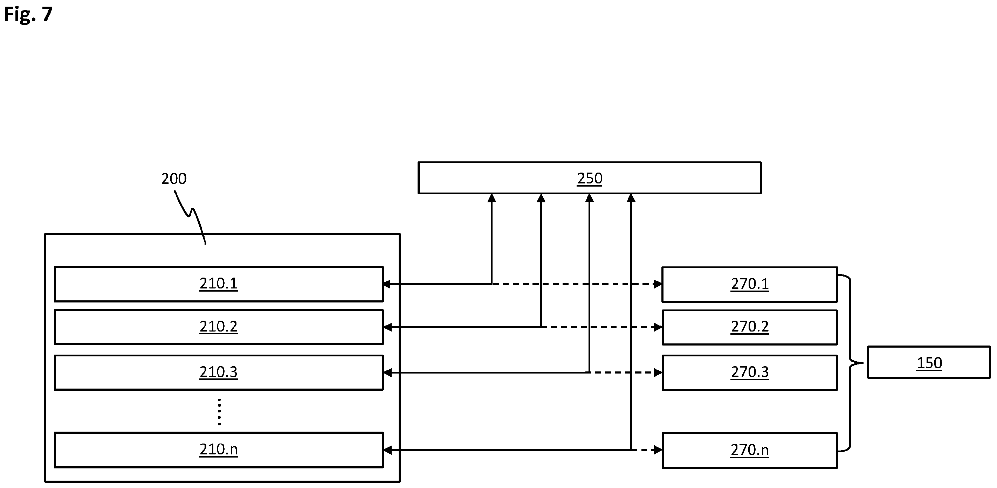

Die eigentliche Positionsbestimmung wird vorgenommen, um eine aktuelle Position des Primärteils 110 auf dem Sekundärteil 140 zu bestimmen. Dies kann zum Beispiel nach einem Neustart oder auch nach einem Stromausfall des linearen Antriebssystems 100 durchgeführt werden. Die Positionsbestimmung, welche wie oben angegeben im Rahmen einer entsprechenden Auswertung durch die Hauptsteuervorrichtung 105 vorgenommen werden kann, erfolgt auf der Grundlage der an der aktuellen Position durch Erfassen des Magnetfelds der Magnetanordnung 142 mit Hilfe der Magnetfeldsensoren 130 der Sensoreinrichtung 120 gewonnenen aktuellen Magnetfelddaten und der zuvor im Rahmen der Initialmessung bereitgestellten Referenz-Magnetfelddaten 200. Die aktuellen Magnetfelddaten sind für die folgende Beschreibung, entsprechend der weiter unten erläuterten Figur 7, mit dem Bezugszeichen 250 gekennzeichnet.

Die aktuellen Magnetfelddaten 250 umfassen, entsprechend den Magnetfeldmustern 210 der Referenz-Magnetfelddaten 200, Datenpunkte zu den von jedem Magnetfeldsensor 130 der Sensoreinrichtung 120 erfassten Magnetfeldkomponenten Bx, By, Bz, also vorliegend entsprechend der Anzahl der Magnetfeldsensoren 130 pro Magnetfeldkomponente Bx, By, Bz achtundvierzig Datenpunkte. Dementsprechend kann das Diagramm von Figur 6 auch zur Veranschaulichung von an einer aktuellen Position des Primärteils 110 gewonnenen aktuellen Magnetfelddaten 250 dienen. Wie im Folgenden erläutert wird, wird zur Positionsbestimmung ein Ähnlichkeitsverfahren unter Verwendung der aktuellen Magnetfelddaten 250 und der Magnetfeldmuster 210 der Referenz-Magnetfelddaten 200 durchgeführt. Als Ähnlichkeitsverfahren wird das sogenannte DTW-Verfahren (Dynamic Time Warping, dynamische Zeitnormierung) eingesetzt.

Durch Durchführen eines DTW-Verfahrens bzw. eines DTW-Algorithmus kann die Ähnlichkeit von zwei zu vergleichenden Datenmengen bestimmt werden. Ziel ist es, einen optimalen Abgleich zwischen den Datenmengen zu finden, wenn eine der Datenmengen verzerrt auf die andere Datenmenge abgebildet wird. Dabei kann eine dynamische Programmiertechnik zum Einsatz kommen, in welcher jeder Datenpunkt der einen Datenmenge mit jedem Datenpunkt der anderen Datenmenge verglichen wird, wodurch eine Abstandsmatrix erzeugt werden kann. Hierbei kann der effizienteste Weg durch die Abstandsmatrix hindurch ermittelt werden, welcher eine optimale Abbildung mit dem geringsten Gesamtabstand zwischen den Datenmengen wiedergibt. Als Ergebnis kann ein Ähnlichkeitsmaß in Form der sogenannten DTW-Distanz erhalten werden, welche das Ausmaß der Verzerrung für die optimale Abbildung wiedergeben kann. Je geringer die DTW-Distanz ist, desto ähnlicher sind die verglichenen Datenmengen. Dadurch kann eine Ähnlichkeit der Datenmengen beurteilt werden.

Um diese Vorgehensweise in Bezug auf die Positionsbestimmung des Primärteils 110 zu erläutern, wird zunächst von folgendem Fall ausgegangen. Hierbei befinden sich die Magnetfeldsensoren 130 der Sensoreinrichtung 120 in der aktuellen Position des Primärteils 110 im Bereich einer Magnetgruppe 150 der Magnetanordnung 142 des Sekundärteils 140, wodurch die betreffende Magnetgruppe 150, entsprechend Figur 4, durch die Magnetfeldsensoren 130 überdeckt wird.

Wie in Figur 7 anhand eines Diagramms dargestellt ist, können in einem solchen Fall zum Zwecke der Positionsbestimmung die aktuellen Magnetfelddaten 250 mit jedem der Magnetfeldmuster 210 der Referenz-Magnetfelddaten 200 unter Anwendung eines DTW-Algorithmus verglichen werden. Als Ergebnis jeden Vergleichs kann ein Abstandsmaß 270 in Form der oben genannten DTW-Distanz gewonnen werden. Wie in Figur 7 veranschaulicht ist, kann dementsprechend durch Vergleichen der aktuellen Magnetfelddaten 250 mit dem ersten Magnetfeldmuster 210.1, dem zweiten Magnetfeldmuster 210.2, ... dem nten Magnetfeldmuster 210.n ein erstes Abstandsmaß 270.1, ein zweites Abstandsmaß 270.2, ... ein ntes Abstandsmaß 270.n erhalten werden. Hierauf basierend kann ein Magnetfeldmuster 210 mit der größten Ähnlichkeit, also bei welchem das kleinste Abstandsmaß 270 bzw. die kleinste DTW-Distanz vorliegt, und damit die dazugehörige Magnetgruppe 150, bestimmt werden. Dies ist damit diejenige Magnetgruppe 150, an welcher sich die Sensoreinrichtung 120 befindet (zum Beispiel wie in Figur 4 gezeigt die zweite Magnetgruppe 150.2). Diese Information gibt die gesuchte aktuelle Position des Primärteils 110 in Bezug auf das Sekundärteil 140 wieder.

In der aktuellen Position des Primärteils 110 kann sich die Sensoreinrichtung 120 jedoch auch versetzt im Bereich von zwei benachbarten Permanentmagnetpaaren und dadurch Magnetgruppen 150 der Magnetanordnung 142 des Sekundärteils 140 befinden, wodurch die beiden Magnetgruppen 150 mit Bezug auf die Bewegungsrichtung 170 jeweils teilweise durch die Magnetfeldsensoren 130 der Sensoreinrichtung 120 überdeckt werden. In einem solchen Fall kann gemäß der im Folgenden erläuterten Verfahrensvarianten vorgegangen werden, welche auf dem zuvor erläuterten Ansatz basieren. Im Hinblick auf Details zu übereinstimmenden Merkmalen und Schritten wird daher auf die vorstehende Beschreibung Bezug genommen. Ferner können Merkmale und Details, welche in Bezug auf eine Verfahrensvariante genannt werden, auch bei einer anderen Verfahrensvariante zur Anwendung kommen. Die beschriebenen Schritte können durch eine Auswertung mit Hilfe der Hauptsteuervorrichtung 105 vorgenommen werden.

Figur 8 zeigt eine Gegebenheit, wie sie in der aktuellen Position des Primärteils 110 vorkommen kann. Hierbei ist die Sensoreinrichtung 120 versetzt im Bereich von zwei benachbarten Magnetgruppen 150, vorliegend der ersten Magnetgruppe 150.1 und der zweiten Magnetgruppe 150.2, angeordnet. In dieser Sensorstellung befindet sich die Sensoreinrichtung 120 über der Grenze 190 der beiden Magnetgruppen 150.1, 150.2, und werden beide Magnetgruppen 150.1, 150.2 jeweils teilweise durch die Sensoreinrichtung 120 überdeckt. Wie in Figur 8 angedeutet ist, liegt daher bei beiden Magnetgruppen 150.1, 150.2 ein auf die Bewegungsrichtung 170 bezogener Überdeckungsbereich 230 vor, in welchem eine Sensorteilgruppe 240 aus Magnetfeldsensoren 130 der Sensoreinrichtung 120 jeweils eine der Magnetgruppen 150.1, 150.2 überdeckt. Bei der ersten Magnetgruppe 150.1 ist ein erster Überdeckungsbereich 230.1, und bei der zweiten Magnetgruppe 150.2 ist ein zweiter Überdeckungsbereich 230.2 vorhanden. In dem ersten Überdeckungsbereich 230.1 befinden sich dreißig Magnetfeldsensoren 130 der Sensoreinrichtung 120, also der erste Magnetfeldsensor 130.1 bis zu einem dreißigsten Magnetfeldsensor 130.30. Die zu dem ersten Überdeckungsbereich 230.1 gehörenden dreißig Magnetfeldsensoren 130 stellen eine erste Sensorteilgruppe 240.1 dar. In dem zweiten Überdeckungsbereich 230.2 sind weitere achtzehn Magnetfeldsensoren 130 der Sensoreinrichtung 120 vorhanden, also von einem nicht gezeigten einunddreißigsten bis zu dem achtundvierzigsten Magnetfeldsensor 130.48. Die zu dem zweiten Überdeckungsbereich 230.2 gehörenden achtzehn Magnetfeldsensoren 130 bilden eine zweite Sensorteilgruppe 240.2.

Um solche Gegebenheiten zu berücksichtigen, ist vorgesehen, eine Sensorstellung der Sensoreinrichtung 120 in Bezug auf eine Grenze 190 von zwei benachbarten Magnetgruppen 150 in der aktuellen Position des Primärteils 110 zu ermitteln. Die Positionsbestimmung des Primärteils 110 bzw. das oben anhand von Figur 7 erläuterte Durchführen des Vergleichs wird dabei unter Berücksichtigung und abgestimmt auf die ermittelte Sensorstellung vorgenommen. Das Ermitteln der Sensorstellung erfolgt, ähnlich zu dem oben erläuterten Bereitstellen der Magnetfeldmuster 210, anhand eines positiven Nulldurchgangs des Magnetfeldstärkeverlaufs der dritten Magnetfeldkomponente Bz, wobei der betreffende Verlauf hierbei durch die mit Hilfe sämtlicher Magnetfeldsensoren 130 gewonnenen aktuellen Magnetfelddaten 250 wiedergegeben wird. Durch den Nulldurchgang kann eine Grenze 190 von zwei benachbarten Permanentmagnetpaaren und Magnetgruppen 150, und kann dadurch die Sensorstellung der Sensoreinrichtung in Bezug auf die Grenze 190 erfasst werden.

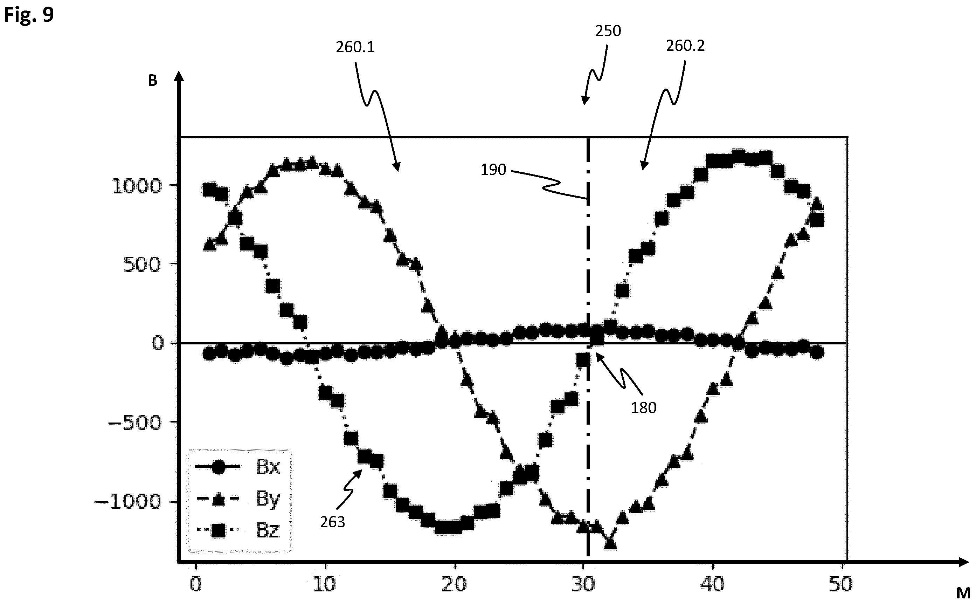

Zur Veranschaulichung ist in Figur 9 ein Diagramm der aktuellen Magnetfelddaten 250 gezeigt, wie sie in der in Figur 8 veranschaulichten Sensorstellung der Sensoreinrichtung 120 durch Erfassen des Magnetfelds der Magnetanordnung 142 mit Hilfe der Magnetfeldsensoren 130 bereitgestellt werden können. Ein durch die aktuellen Magnetfelddaten 250 wiedergegebener Verlauf 263 der Magnetfeldstärke der dritten Magnetfeldkomponente Bz weist einen positiven Nulldurchgang 180 auf, welcher mit der Grenze 190 zweier benachbarter Magnetgruppen 150 (gemäß Figur 8 der ersten und zweiten Magnetgruppe 150.1, 150.2) zusammenfällt. Auf diese Weise kann die Sensorstellung der Sensoreinrichtung 120 in Bezug auf die Grenze 190, und dadurch die versetzte Positionierung der Sensoreinrichtung 120 über zwei benachbarten Magnetgruppen 150, erkannt sowie ermittelt werden.

Im Rahmen des Ermittelns der Sensorstellung kann des Weiteren der auf die Bewegungsrichtung 170 bezogene Abstand zwischen der betreffenden Grenze 190 und den am nähesten zu der Grenze 190 angeordneten Magnetfeldsensoren 130 der Sensoreinrichtung 120 in der aktuellen Position des Primärteils 110 bestimmt werden. Hierfür können zunächst anhand des durch die aktuellen Magnetfelddaten 250 wiedergegebenen Verlaufs 263 der dritten Magnetfeldkomponente Bz die am nähesten zu der Grenze 190 und beidseitig der Grenze 190 angeordneten Magnetfeldsensoren 130 identifiziert werden. Unter Berücksichtigung des Abstands zwischen den betreffenden Magnetfeldsensoren 130 und durch Durchführen einer Interpolation oder Extrapolation unter Verwendung des Verlaufs 263 kann infolgedessen auf den Abstand zwischen der Grenze 190 und den sich am nächsten zu der Grenze 190 befindenden Magnetfeldsensoren 130 geschlossen werden. Mit Bezug auf die Figuren 8 und 9 sind dies der dreißigste Magnetfeldsensor 130.30 und der nicht gezeigte einunddreißigste Magnetfeldsensor 130, wobei der dreißigste Magnetfeldsensor 130.30 vorliegend den kleinsten Abstand zu der Grenze 190 besitzt.

Für den vorgenannten Schritt kann zum Beispiel eine äquidistante Anordnung der Magnetfeldsensoren 130 mit Bezug auf die Bewegungsrichtung 170 zugrunde gelegt werden, und kann der Schritt insofern unter Anwendung eines (bekannten) einheitlichen Abstands zwischen den Magnetfeldsensoren 130 durchgeführt werden. Alternativ kann jedoch auch eine nicht äquidistante Anordnung der Magnetfeldsensoren 130 vorliegen, wodurch für den vorgenannten Schritt der jeweils zugehörige individuelle Abstand der Magnetfeldsensoren 130 verwendet werden kann.

Ein Bestimmen des auf die Bewegungsrichtung 170 bezogenen Abstands zwischen den Magnetfeldsensoren 130 der Sensoreinrichtung 120 kann dabei in folgender Weise durchgeführt werden. Zu diesem Zweck kann ein auf die Bewegungsrichtung 170 bezogener Gesamtabstand zwischen den endseitigen Magnetfeldsensoren 130 der Sensoreinrichtung 120 (gemäß Figur 8 zwischen dem ersten und achtundvierzigsten Magnetfeldsensor 130.1, 130.48) bereitgestellt werden. Dies kann zum Beispiel durch ein Ausmessen der Sensoreinrichtung 120 erfolgen. Des Weiteren können Phasenverschiebungen von Verläufen einer mit Hilfe der Magnetfeldsensoren 130 jeweils erfassten Magnetfeldkomponente des Magnetfelds der Magnetanordnung 142 des Sekundärteils 140 ermittelt werden. Dies kann im Rahmen der Initialmessung während des Bewegens des Primärteils 110 entlang des Sekundärteils 140 vorgenommen werden. Die verwendete Magnetfeldkomponente kann erneut die dritte Magnetfeldkomponente Bz sein. Die auf die Bewegungsrichtung 170 bezogenen Abstände von benachbarten Magnetfeldsensoren 130 können auf der Grundlage des Gesamtabstands der Magnetfeldsensoren 130 und der Phasenverschiebungen ermittelt werden. Hierauf basierend bzw. unter Verwendung des jeweils zugehörigen Abstands (gemäß Figur 8 zwischen dem dreißigsten Magnetfeldsensor 130.30 und dem einunddreißigsten Magnetfeldsensor 130) kann der Abstand zwischen der Grenze 190 und den am nähesten zu der Grenze 190 angeordneten Magnetfeldsensoren 130 bestimmt werden.

Anhand der festgestellten versetzten Sensorstellung der Sensoreinrichtung 120 mit Bezug auf eine Grenze 190 von zwei benachbarten Magnetgruppen 150 kann weiter bestimmt werden, in welchem Ausmaß bzw. Verhältnis die Sensoreinrichtung 120 die betreffenden Magnetgruppen 150 in der aktuellen Position des Primärteile 110 teilweise überdeckt. Hieraus lässt sich ableiten, von welchem Teil der Magnetfeldsensoren 130 bzw. von welcher Sensorteilgruppe 240 die beiden Magnetgruppen 150 jeweils überdeckt werden. In entsprechender Weise kann bestimmt werden, welcher sich auf die einzelnen Magnetgruppen 150 beziehende Teil der aktuellen Magnetfelddaten 250 unter Verwendung welcher Sensorteilgruppe 240 erhalten wurde. Im Hinblick auf die Figuren 8 und 9 können die erste Sensorteilgruppe 240.1, welche sich auf die Teilüberdeckung von einer der beiden Magnetgruppen 150 (vorliegend der ersten Magnetgruppe 150.1) bezieht, und die zweite Sensorteilgruppe 240.2, welche die Teilüberdeckung der anderen der beiden Magnetgruppen 150 (vorliegend der zweiten Magnetgruppe 150.2) betrifft, ermittelt werden.

Die Positionsbestimmung bzw. das Durchführen des Vergleichs kann anhand dieser Information wie nachstehend beschrieben erfolgen. Entsprechend den im Folgenden erläuterten Figuren ist eine Teildatenmenge der aktuellen Magnetfelddaten 250 für die folgende Beschreibung mit dem Bezugszeichen 260, und sind Teilmuster der Magnetfeldmuster 210 mit dem Bezugszeichen 220 gekennzeichnet.

In einer Verfahrensvariante wird anhand der versetzten Sensorstellung der Sensoreinrichtung 120 eine Teildatenmenge 260 aus den aktuellen Magnetfelddaten 250 gebildet, welche mit Hilfe einer Sensorteilgruppe 240 aus Magnetfeldsensoren 130 der Sensoreinrichtung 120 gewonnen wurde, durch welche die Teilüberdeckung von einer der beiden Magnetgruppen 150 hergestellt ist. Hierzu korrespondierend werden Teilmuster 220 aus den Magnetfeldmustern 210 der Referenz-Magnetfelddaten 200 gebildet, welche die durch die Sensorteilgruppe 240 bewirkte Teilüberdeckung der betreffenden Magnetgruppe 150 berücksichtigen, und dadurch die Teilüberdeckung in Bezug auf jede der mit den Magnetfeldmustern 210 verknüpften Magnetgruppen 150 der Magnetanordnung 142 wiedergeben bzw. nachbilden können. In dem Ähnlichkeitsvergleich wird die Teildatenmenge 260 der aktuellen Magnetfelddaten 250 mit den Teilmustern 220 der Magnetfeldmuster 210 verglichen. Auf diese Weise können ein Teilmuster 220 und infolgedessen ein Magnetfeldmuster 210 mit der größten Ähnlichkeit ermittelt und dadurch die zugehörige Magnetgruppe 150 und insofern die Positionierung der Sensoreinrichtung 120 an der betreffenden Magnetgruppe 150 identifiziert werden. Diese Information gibt, zusammen mit der erfassten Sensorstellung der Sensoreinrichtung 120 mit Bezug auf die Grenze 190 der benachbarten Magnetgruppen 150, die aktuelle Position des Primärteils 110 wieder. Sofern bei der Sensorstellung der Sensoreinrichtung 120 in der aktuellen Position des Primärteils 110 die benachbarten Magnetgruppen 150 in unterschiedlichem Maße durch die Sensoreinrichtung 120 überdeckt werden, kann das Bilden der Teildatenmenge 260, der Teilmuster 220 und der Vergleich mit Bezug auf die größere Teilüberdeckung und größere Sensorteilgruppe 240 aus Magnetfeldsensoren 130 durchgeführt werden.

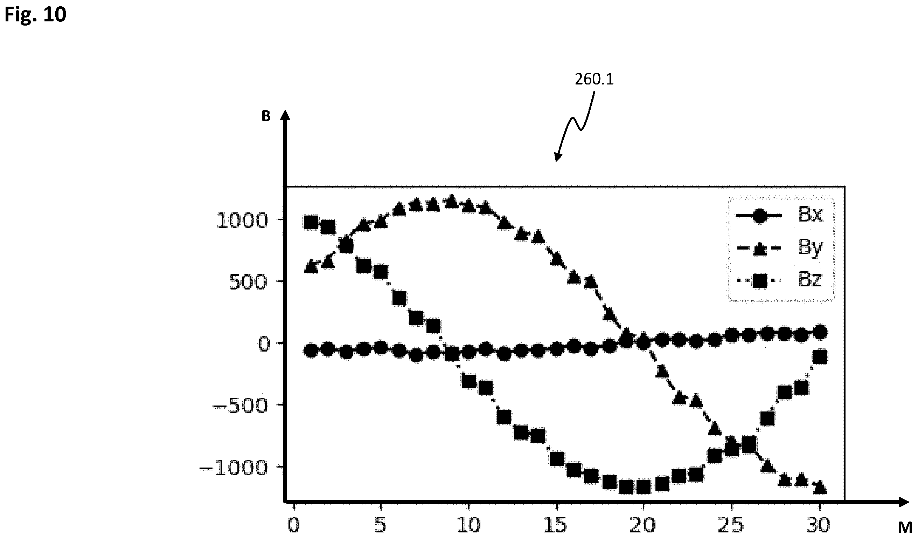

Hinsichtlich der in Figur 8 abgebildeten und in der aktuellen Position des Primärteils 110 vorliegenden Sensorstellung der Sensoreinrichtung 120 findet die auf die Bewegungsrichtung 170 bezogene größere Teilüberdeckung von einer von zwei benachbarten Magnetgruppen 150 durch die (vorliegend die erste Magnetgruppe 150.1 überdeckende) erste Sensorteilgruppe 240.1 statt. Dies kann anhand der ermittelten Sensorstellung festgestellt werden. Eine dazugehörige erste Teildatenmenge 260.1 kann daher aus denjenigen Daten bzw. Datenpunkten der aktuellen Magnetfelddaten 250 gebildet werden, welche durch Erfassen des Magnetfelds der Magnetanordnung 142 mit Hilfe der Magnetfeldsensoren 130 der ersten Sensorteilgruppe 240.1 (mit dem ersten Magnetfeldsensor 130.1 bis zu dem dreißigsten Magnetfeldsensor 130.30) gewonnen wurden. Gemäß dem Diagramm von Figur 9 bezieht sich die erste Teildatenmenge 260.1 auf die sich links des Nulldurchgangs 180 und damit der Grenze 190 befindenden Datenpunkte. In Figur 10 ist die erste Teildatenmenge 260.1 separat in einem eigenen Diagramm dargestellt. Die erste Teildatenmenge 260.1 umfasst, entsprechend den dreißig Magnetfeldsensoren 130 der ersten Sensorteilgruppe 240.1, dreißig Datenpunkte je Magnetfeldkomponente Bx, By, Bz.

Die für den Vergleich mit der ersten Teildatenmenge 260.1 vorgesehenen Teilmuster 220 können aus den Magnetfeldmustern 210 der Referenz-Magnetfelddaten 200 gebildet werden, wobei dies abgestimmt auf die ermittelte Teilüberdeckung einer Magnetgruppe 150 durch die erste Sensorteilgruppe 240.1 erfolgt. In Figur 8 ist in diesem Zusammenhang ein Bilden der die Teilüberdeckung durch die erste Sensorteilgruppe 240.1 betreffenden ersten Teilmustern 220.1 aus den Magnetfeldmustern 210 schematisch angedeutet. Für jedes Magnetfeldmuster 210 wird ein entsprechendes erstes Teilmuster 220.1 gebildet. Die ersten Teilmuster 220.1 bilden die durch die erste Sensorteilgruppe 240.1 bewirkte Teilüberdeckung in Bezug auf jede der mit den Magnetfeldmustern 210 verknüpften Magnetgruppen 150 der Magnetanordnung 142 nach. Korrespondierend zu den dreißig Magnetfeldsensoren 130 der ersten Sensorteilgruppe 240.1, und zu der Sensorstellung der Sensoreinrichtung 120 bezüglich der Grenze 190 der benachbarten Magnetgruppen 150, umfassen die ersten Teilmuster 220.1 pro Magnetfeldkomponente Bx, By, Bz jeweils die letzten dreißig Datenpunkte der Magnetfeldmuster 210 (nicht dargestellt).

In dem nachfolgenden Ähnlichkeitsvergleich kann, entsprechend Figur 7, die erste Teildatenmenge 260.1 der aktuellen Magnetfelddaten 250 mit jedem ersten Teilmuster 220.1 der Magnetfeldmuster 210 (also dem ersten Teilmuster 220.1 des ersten Magnetfeldmusters 210.1, dem ersten Teilmuster 220.1 des zweiten Magnetfeldmusters 210.2, ... dem ersten Teilmuster 220.1 des nten Magnetfeldmusters 210.n) verglichen werden, um jeweils ein entsprechendes Abstandsmaß 270 (also ein erstes Abstandsmaß 270.1, ein zweites Abstandsmaß 270.2, ... ein ntes Abstandsmaß 270.n) zu erhalten. Hierdurch können das erste Teilmuster 220.1 und das entsprechende Magnetfeldmuster 210 mit der größten Ähnlichkeit, also bei welchem das kleinste Abstandsmaß 270 vorliegt, und infolgedessen die Positionierung der Sensoreinrichtung 120 an der dazugehörigen Magnetgruppe 150 ermittelt werden. Mit Bezug auf Figur 8 ist dies die erste Magnetgruppe 150.1. Zusammen mit der erfassten versetzten Sensorstellung der Sensoreinrichtung 120 in Bezug auf die Grenze 190 der dazugehörigen Magnetgruppen 150 (vorliegend der Magnetgruppen 150.1, 150.2) spiegelt diese Information die aktuelle Position des Primärteils 110 auf dem Sekundärteil 140 wider.

In entsprechender Weise besteht die Möglichkeit, das Bilden der Teildatenmenge 260, der Teilmuster 220 und den Vergleich in Bezug auf die andere der beiden Teilüberdeckungen der benachbarten Magnetgruppen 150 vorzunehmen. Im Hinblick auf Figur 8 ist dies die kleinere und durch die zweite Sensorteilgruppe 240.2 verwirklichte Teilüberdeckung. Hierbei kann eine dazugehörige zweite Teildatenmenge 260.2 aus den Datenpunkten der aktuellen Magnetfelddaten 250 gebildet werden, welche durch Erfassen des Magnetfelds der Magnetanordnung 142 mit Hilfe der Magnetfeldsensoren 130 der zweiten Sensorteilgruppe 240.2 (mit dem nicht gezeigten einunddreißigsten bis zu dem achtundvierzigsten Magnetfeldsensor 130.48) gewonnen wurden. Gemäß dem Diagramm von Figur 9 umfasst die zweite Teildatenmenge 260.2 die sich rechts des Nulldurchgangs 180 und damit der Grenze 190 befindenden Datenpunkte, deren Anzahl entsprechend der zweiten Sensorteilgruppe 240.2 achtzehn je Magnetfeldkomponente Bx, By, Bz beträgt. Des Weiteren können zweite Teilmuster 220.2 aus den Magnetfeldmustern 210 gebildet werden, welche die durch die zweite Sensorteilgruppe 240.2 bewirkte Teilüberdeckung in Bezug auf jede der mit den Magnetfeldmustern 210 verknüpften Magnetgruppen 150 der Magnetanordnung 142 nachbilden, wie in Figur 8 schematisch angedeutet ist. Entsprechend den achtzehn Magnetfeldsensoren 130 der zweiten Sensorteilgruppe 240.2 und der Sensorstellung der Sensoreinrichtung 120 bezüglich der Grenze 190 umfassen die zweiten Teilmuster 220.2 pro Magnetfeldkomponente Bx, By, Bz jeweils die ersten achtzehn Datenpunkte der Magnetfeldmuster 210 (nicht dargestellt).

In dem Ähnlichkeitsvergleich kann, entsprechend Figur 7, die zweite Teildatenmenge 260.2 der aktuellen Magnetfelddaten 250 mit jedem zweiten Teilmuster 220.2 der Magnetfeldmuster 210 verglichen werden, um jeweils ein entsprechendes Abstandsmaß 270 zu erhalten. Auf diese Weise können das zweite Teilmuster 220.2 und das entsprechende Magnetfeldmuster 210 mit der größten Ähnlichkeit, und dadurch die Positionierung der Sensoreinrichtung 120 an der dazugehörigen Magnetgruppe 150 (also die zweite Magnetgruppe 150.2 in Figur 8) ermittelt werden. Zusammen mit der erfassten versetzten Sensorstellung der Sensoreinrichtung 120 in Bezug auf die Grenze 190 der dazugehörigen Magnetgruppen 150 (vorliegend der Magnetgruppen 150.1, 150.2) gibt diese Information die aktuelle Position des Primärteils 110 auf dem Sekundärteil 140 wieder.

Für den Fall, dass in der aktuellen Position des Primärteils 110 die benachbarten Magnetgruppen 150 abweichend von Figur 8 (im Wesentlichen) in gleichem Maße durch die Sensoreinrichtung 120 überdeckt werden, kann das Durchführen des Vergleichs unter Verwendung einer Teildatenmenge 260 der aktuellen Magnetfelddaten 250 und von Teilmustern 220 der Magnetfeldmuster 210 in Bezug auf eine der beiden Teilüberdeckungen vorgenommen werden.

Unabhängig von dem Grad der jeweiligen Überdeckung ist es ferner möglich, in Bezug auf beide Teilüberdeckungen jeweils eine Teildatenmenge 260 und entsprechende Teilmuster 220 zu bilden und die jeweilige Teildatenmenge 260 mit den zugehörigen Teilmustern 220 zu vergleichen. Für jede Teildatenmenge 260 kann dadurch ein entsprechendes Teilmuster 220 sowie ein Magnetfeldmuster 210 mit der größten Ähnlichkeit, und dadurch eine dazugehörige Magnetgruppe 150, ermittelt werden. Auf diese Weise kann ferner eine Plausibilitätsprüfung verwirklicht werden. Denn mit Bezug auf die ermittelten Teilmuster 220 mit der größten Ähnlichkeit wird gefordert, dass diese zu zwei benachbarten Magnetgruppen 150 gehören. Ist dies nicht der Fall, kann aufgrund dieser Plausibilitätsprüfung auf ein Vorliegen eines Fehlers, zum Beispiel in Form von fehlerhaften Daten, geschlossen werden.

Hinsichtlich der Figuren 8 und 9 kann die erste Teildatenmenge 260.1 mit jedem der ersten Teilmuster 220.1, und kann die zweite Teildatenmenge 260.2 mit jedem der zweiten Teilmuster 220.2 verglichen werden. Anhand des Vergleichs bzw. der festgestellten größten Ähnlichkeit kann jeweils eine dazugehörige Magnetgruppe 150 bestimmt werden. Für die in Figur 8 gezeigte Sensorstellung sollten dies die erste und zweite Magnetgruppe 150.1, 150.2 sein. Sofern dies nicht der Fall ist, und zum Beispiel bei dem mit der ersten Teildatenmenge 260.1 durchgeführten Vergleich die erste Magnetgruppe 150.1, und bei dem mit der zweiten Teildatenmenge 260.2 durchgeführten Vergleich anstelle der zweiten Magnetgruppe 150.2 eine andere Magnetgruppe 150 ermittelt wird, kann ein Fehler erkannt werden.

Im Hinblick auf den oben erwähnten Fall, dass sich die Magnetfeldsensoren 130 der Sensoreinrichtung 120 in der aktuellen Position des Primärteils 110 im Bereich einer Magnetgruppe 150 der Magnetanordnung 142 des Sekundärteils 140 befinden und dadurch zum Beispiel eine Gegebenheit vorliegt, wie sie in Figur 4 dargestellt ist, kann eine solche Positionierung ebenfalls durch Ermitteln der Sensorstellung der Sensoreinrichtung 120 in Bezug auf eine Grenze 190 von zwei benachbarten Permanentmagnetpaaren bzw. Magnetgruppen 150 erkannt werden. Die betreffende Grenze 190 kann hierbei im Bereich eines Rands bzw. Endes der Sensoreinrichtung 120 vorliegen. In Figur 4 ist dies zum Beispiel die anhand der gestrichelten Linie angedeutete Grenze 190 am linken Ende der Sensoreinrichtung 120.

Eine solche Sensorstellung kann anhand eines Vorliegens eines mit der Grenze 190 zusammenfallenden positiven Nulldurchgangs bei einem Magnetfeldstärkeverlauf der dritten Magnetfeldkomponente Bz ermittelt werden, welcher durch die mit Hilfe sämtlicher Magnetfeldsensoren 130 gewonnenen aktuellen Magnetfelddaten 250 wiedergegeben werden kann. Sofern bei dem Magnetfeldstärkeverlauf bzw. im Bereich der Enden des Magnetfeldstärkeverlaufs kein positiver Nulldurchgang vorhanden ist, kann erkannt werden, dass sich die Magnetfeldsensoren 130 der Sensoreinrichtung 120 in der aktuellen Position des Primärteils 110 im Bereich einer Magnetgruppe 150 befinden und die betreffende Magnetgruppe 150 durch die Magnetfeldsensoren 130 überdeckt wird. In diesem Fall können hierauf abgestimmt und, wie oben anhand von Figur 7 erläutert wurde, zur Positionsbestimmung des Primärteils 110 die aktuellen Magnetfelddaten 250 mit den Magnetfeldmustern 210 der Referenz-Magnetfelddaten 200 verglichen werden, um ein Magnetfeldmuster 210 mit der größten Ähnlichkeit, und damit die dazugehörige Magnetgruppe 150 und insofern die Positionierung der Sensoreinrichtung 120 an der betreffenden Magnetgruppe 150, zu bestimmen.

Für die Positionsbestimmung kann ferner zusätzlich der auf die Bewegungsrichtung 170 bezogene Abstand zwischen einer Grenze 190 und einem am nähesten zu der Grenze 190 angeordneten Magnetfeldsensor 130 bestimmt werden. Mit Bezug auf Figur 4 ist dies zum Beispiel der erste Magnetfeldsensor 130.1. Der betreffende Abstand kann dabei durch Durchführen einer Extrapolation unter Verwendung des durch die aktuellen Magnetfelddaten 250 wiedergegebenen Magnetfeldstärkeverlaufs der dritten Magnetfeldkomponente Bz bestimmt werden. Diese sich auf die Sensorstellung beziehende Anstandsinformation kann, zusammen mit der ermittelten Positionierung der Sensoreinrichtung 120 an einer Magnetgruppe 150, die aktuelle Position des Primärteils 110 auf dem Sekundärteil 140 widerspiegeln.

Bei einer festgestellten Sensorstellung der Sensoreinrichtung 120 im Bereich von zwei benachbarten Magnetgruppen 150 in der aktuellen Position des Primärteils 110, wodurch beide Magnetgruppen 150 jeweils teilweise durch die Sensoreinrichtung 120 überdeckt werden, wie es in Figur 8 veranschaulicht ist, kann zur Positionsbestimmung auch wie folgt vorgegangen werden.

In einer weiteren Verfahrensvariante werden neu zusammengesetzte Magnetfeldmuster gebildet, welche jeweils unter Berücksichtigung der Teilüberdeckungen aus Teilmustern 220 von im Rahmen der Initialmessung bereitgestellten Magnetfeldmustern 210 zweier benachbarter Magnetgruppen 150 zusammengesetzt sind. Die neu zusammengesetzten Magnetfeldmuster können dabei die anhand der Sensorstellung festgestellte Positionierung der Sensoreinrichtung 120 und damit die durch die Sensoreinrichtung 120 bewirkte Überdeckung jeweils in Bezug auf zwei benachbarte Magnetgruppen 150 der Magnetanordnung 142 wiedergeben bzw. nachbilden. In dem Ähnlichkeitsvergleich werden die aktuellen Magnetfelddaten 250 mit den zusammengesetzten Magnetfeldmustern verglichen. Auf diese Weise können ein zusammengesetztes Magnetfeldmuster mit der größten Ähnlichkeit, dadurch die zu dem zusammengesetzten Magnetfeldmuster gehörenden zwei Magnetgruppen 150, und insofern die Positionierung der Sensoreinrichtung 120 an den betreffenden zwei Magnetgruppen 150, ermittelt werden. Diese Information gibt, zusammen mit der erfassten Sensorstellung der Sensoreinrichtung 120 mit Bezug auf die Grenze 190 der benachbarten Magnetgruppen 150, die aktuelle Position des Primärteils 110 wieder.

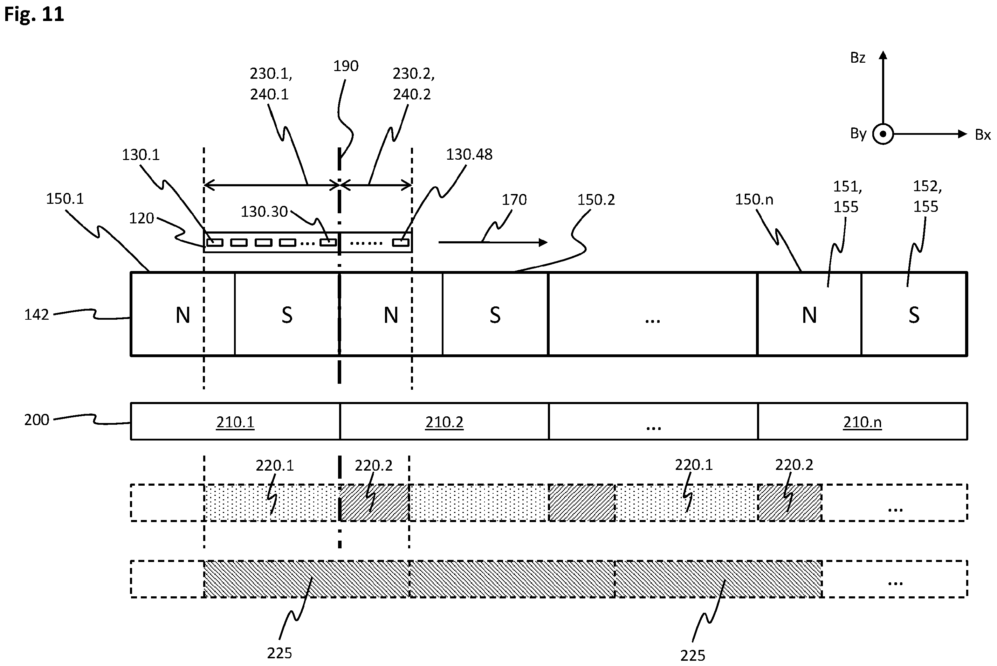

Zur Veranschaulichung zeigt Figur 11 eine weitere Darstellung, in welcher die Sensoreinrichtung 120 entsprechend Figur 8 versetzt im Bereich von zwei benachbarten Magnetgruppen 150 bzw. der ersten und zweiten Magnetgruppe 150.1, 150.2 angeordnet ist. Die erste Magnetgruppe 150.1 wird, bezogen auf die Bewegungsrichtung 170, durch die dreißig Magnetfeldsensoren 130 umfassende erste Sensorteilgruppe 240.1 überdeckt. Die zweite Magnetgruppe 150.2 wird, bezogen auf die Bewegungsrichtung 170, durch die achtzehn Magnetfeldsensoren 130 umfassende zweite Sensorteilgruppe 240.2 überdeckt.

Figur 11 veranschaulicht des Weiteren schematisch ein Bilden von neu zusammengesetzten Magnetfeldmustern 225, welche die durch die Sensoreinrichtung 120 verwirklichte Überdeckung jeweils in Bezug auf zwei benachbarte Magnetgruppen 150 der Magnetanordnung 142 und deren Magnetfeldmuster 210 nachbilden. Die zusammengesetzten Magnetfeldmuster 225 umfassen jeweils ein erstes Teilmuster 220.1 eines Magnetfeldmusters 210 einer Magnetgruppe 150 und ein zweites Teilmuster 220.2 eines Magnetfeldmusters 210 einer hierzu benachbarten Magnetgruppe 150. Über ein erstes Teilmuster 220.1 wird die durch die erste Sensorteilgruppe 240.1 bewirkte Teilüberdeckung jeweils in Bezug auf eine Magnetgruppe 150, und über ein zweites Teilmuster 220.2 wird die durch die zweite Sensorteilgruppe 240.2 bewirkte Teilüberdeckung jeweils in Bezug auf eine hierzu benachbarte Magnetgruppe 150 wiedergegeben.

Wie in Figur 11 zum Beispiel mit Bezug auf das erste und zweite Magnetfeldmuster 210.1, 210.2 der Referenz-Magnetfelddaten 200 deutlich wird, wird eines der zusammengesetzten Magnetfeldmuster 225 unter Verwendung eines ersten Teilmusters 220.1 des ersten Magnetfeldmusters 210.1 und eines zweiten Teilmusters 220.2 des zweiten Magnetfeldmusters 210.2 gebildet. In entsprechender Weise wird ein weiteres zusammengesetztes Magnetfeldmuster 225 unter Verwendung eines ersten Teilmusters 220.1 des zweiten Magnetfeldmusters 210.2 und eines zweiten Teilmusters 220.2 eines nicht gezeigten dritten Magnetfeldmusters 210 gebildet. Das Bilden weiterer zusammengesetzter Magnetfeldmuster 225 kann in analoger Weise bis zu dem nten Magnetfeldmuster 210.n fortgesetzt werden.

Korrespondierend zu den dreißig Magnetfeldsensoren 130 der ersten Sensorteilgruppe 240.1 und zu der Sensorstellung der Sensoreinrichtung 120 bezüglich der Grenze 190 der benachbarten Magnetgruppen 150 umfassen die ersten Teilmuster 220.1 pro Magnetfeldkomponente Bx, By, Bz jeweils die letzten dreißig Datenpunkte der Magnetfeldmuster 210. Korrespondierend zu den achtzehn Magnetfeldsensoren 130 der zweiten Sensorteilgruppe 240.2 und zu der Sensorstellung der Sensoreinrichtung 120 bezüglich der Grenze 190 der benachbarten Magnetgruppen 150 umfassen die zweiten Teilmuster 220.2 pro Magnetfeldkomponente Bx, By, Bz jeweils die ersten achtzehn Datenpunkte der Magnetfeldmuster 210. Die zusammengesetzten Magnetfeldmuster 225 umfassen dadurch, entsprechend den aktuellen Magnetfelddaten 250, achtundvierzig Datenpunkte für jede Magnetfeldkomponente Bx, By, Bz (jeweils nicht dargestellt).

In dem Ähnlichkeitsvergleich können, entsprechend Figur 7, die aktuellen Magnetfelddaten 250 mit jedem der zusammengesetzten Magnetfeldmuster 225 verglichen werden, um jeweils ein entsprechendes Abstandsmaß 270 zu erhalten. Hierdurch können ein zusammengesetztes Magnetfeldmuster 225 mit der größten Ähnlichkeit, also bei welchem das kleinste Abstandsmaß 270 vorliegt, und infolgedessen die Positionierung der Sensoreinrichtung 120 an den dazugehörigen zwei Magnetgruppen 150 ermittelt werden. Zusammen mit der erfassten versetzten Sensorstellung der Sensoreinrichtung 120 in Bezug auf die Grenze 190 der dazugehörigen Magnetgruppen 150 (vorliegend der Magnetgruppen 150.1, 150.2) gibt diese Information die aktuelle Position des Primärteils 110 auf dem Sekundärteil 140 wieder.

Bei einer festgestellten Sensorstellung der Sensoreinrichtung 120 im Bereich von zwei benachbarten Magnetgruppen 150 in der aktuellen Position des Primärteils 110 mit der Folge, dass beide Magnetgruppen 150 jeweils teilweise durch die Sensoreinrichtung 120 überdeckt werden, kann die Positionsbestimmung ferner wie folgt durchgeführt werden.

In einer weiteren Verfahrensvariante wird eine vorgegebene Aufteilung der Magnetfeldsensoren 130 der Sensoreinrichtung 120 auf mehrere (d. h. wenigstens zwei) Sensorteilgruppen 240 zugrunde gelegt. Die Aufteilung ist dabei unabhängig von der in der aktuellen Position des Primärteils 110 vorliegenden Sensorstellung der Sensoreinrichtung 120. Die Aufteilung kann derart erfolgen, dass die Sensorteilgruppen 240 jeweils die gleiche Anzahl an Magnetfeldsensoren 130 umfassen. Entsprechend der Aufteilung der Magnetfeldsensoren 130 werden die aktuellen Magnetfelddaten 250 in mehrere (also wenigstens zwei) Teildatenmengen 260 unterteilt, welche mit Hilfe der einzelnen und die Magnetanordnung 142 jeweils teilweise überdeckenden Sensorteilgruppen 240 aus Magnetfeldsensoren 130 gewonnen wurden. Ferner werden Teilmuster 220 aus den Magnetfeldmustern 210 der Referenz-Magnetfelddaten 200 gebildet, was unter Berücksichtigung der erfassten Sensorstellung der Sensoreinrichtung 120 in der aktuellen Position des Primärteils 110 sowie unter Berücksichtigung der Aufteilung der Magnetfeldsensoren 130 und damit der durch die Sensorteilgruppen 240 bewirkten Teilüberdeckungen erfolgt. Das Erfassen der Sensorstellung, bei welchem die Stellung der Sensoreinrichtung 120 in Bezug auf eine Grenze 190 von benachbarten Magnetgruppen 150 ermittelt wird, kann wie oben beschrieben anhand eines positiven Nulldurchgangs des Magnetfeldstärkeverlaufs der dritten Magnetfeldkomponente Bz vorgenommen werden, welcher durch die aktuellen Magnetfelddaten 250 wiedergegeben wird.

Die in dieser Verfahrensvariante eingesetzten Teilmuster 220 können die durch die einzelnen Sensorteilgruppen 240 bewirkten Teilüberdeckungen jeweils in Bezug auf zwei benachbarte Magnetgruppen 150 der Magnetanordnung 142 wiedergeben bzw. nachbilden. Für den Fall, dass eine Sensorteilgruppe 240 die Grenze 190 der benachbarten Magnetgruppen 150 überdeckt, was anhand der erfassten Sensorstellung erkannt werden kann, können diejenigen Teilmuster 220, welche die durch diese Sensorteilgruppe 240 bewirkte Teilüberdeckung wiedergeben, ähnlich der zuvor erläuterten Verfahrensvariante, durch Zusammensetzen von entsprechenden Teilen von Magnetfeldmustern 210 von benachbarten Magnetgruppen 150 gebildet werden. Abhängig von der jeweiligen Aufteilung der Magnetfeldsensoren 130 ist es möglich, dass mehrere Sensorteilgruppen 240 die Grenze 190 überdecken. Auch hierbei können die die Teilüberdeckungen dieser Sensorteilgruppen 240 betreffenden Teilmuster 220 durch Teile von Magnetfeldmustern 210 von benachbarten Magnetgruppen 150 zusammengesetzt werden.

In dem Ähnlichkeitsvergleich werden die Teildatenmengen 260 mit den hinsichtlich der Sensorstellung der Sensoreinrichtung 120 und der Aufteilung der Magnetfeldsensoren 130 und damit der durch die Sensorteilgruppen 240 bewirkten Teilüberdeckungen jeweils zugehörigen Teilmustern 220 verglichen. Auf diese Weise können die Teilmuster 220 mit der größten Ähnlichkeit, dadurch die zu den Teilmustern 220 gehörenden zwei Magnetgruppen 150, und insofern die Positionierung der Sensoreinrichtung 120 an den betreffenden zwei Magnetgruppen 150, ermittelt werden. Diese Information spiegelt, zusammen mit der erfassten Sensorstellung der Sensoreinrichtung 120 mit Bezug auf die Grenze 190 der benachbarten Magnetgruppen 150, die aktuelle Position des Primärteils 110 wider.

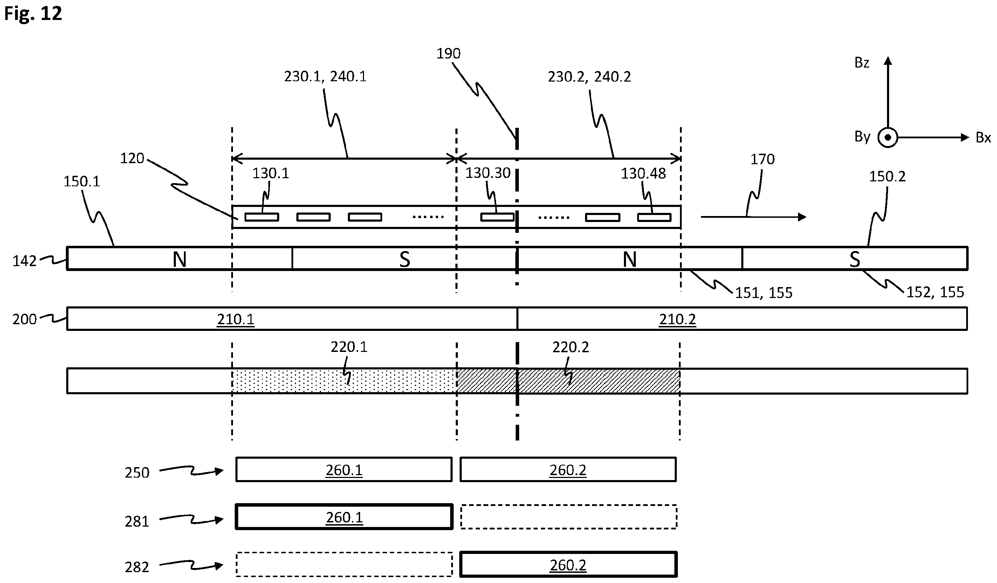

Zur Veranschaulichung zeigt Figur 12 eine weitere Darstellung, in welcher die Sensoreinrichtung 120 in der aktuellen Position des Primärteils 110 versetzt im Bereich von zwei benachbarten Magnetgruppen 150, vorliegend erneut der ersten und zweiten Magnetgruppe 150.1, 150.2, angeordnet ist. Auch hierbei wird die erste Magnetgruppe 150.1 durch dreißig Magnetfeldsensoren 130 (mit dem ersten Magnetfeldsensor 130.1 bis zu dem dreißigsten Magnetfeldsensor 130.30), und wird die zweite Magnetgruppe 150.2 durch achtzehn Magnetfeldsensoren 130 (mit dem nicht gezeigten einunddreißigsten Magnetfeldsensor 130 bis zu dem achtundvierzigsten Magnetfeldsensor 130.48) der Sensoreinrichtung 120 überdeckt.

Zum Zwecke der Positionsbestimmung kommt, hiervon unabhängig, eine vorgegebene Aufteilung der Magnetfeldsensoren 130 der Sensoreinrichtung 120 auf mehrere Sensorteilgruppen 240 zum Einsatz. Gemäß der in Figur 12 veranschaulichten Vorgehensweise ist eine Aufteilung auf zwei Sensorteilgruppen 240, d.h. auf eine erste und eine zweite Sensorteilgruppe 240.1, 240.2 vorgesehen, welche jeweils vierundzwanzig Magnetfeldsensoren 130 aufweisen. Dabei umfasst die erste Sensorteilgruppe 240.1 den ersten Magnetfeldsensor 130.1 bis zu einem nicht gezeigten vierundzwanzigsten Magnetfeldsensor 130, und umfasst die zweite Sensorteilgruppe 240.2 einen nicht gezeigten fünfundzwanzigsten Magnetfeldsensor 130 bis zu dem achtundvierzigsten Magnetfeldsensor 130.48 der Sensoreinrichtung 120. Durch die beiden Sensorteilgruppen 240.1, 240.2 wird, mit Bezug auf die Bewegungsrichtung 170, jeweils ein anderer Teil der Magnetanordnung 142 bzw. der benachbarten Magnetgruppen 150.1, 150.2 überdeckt. Hierbei liegt ein die Teilüberdeckung durch die erste Sensorteilgruppe 240.1 betreffender erster Überdeckungsbereich 230.1 und ein die Teilüberdeckung durch die zweite Sensorteilgruppe 240.2 betreffender zweiter Überdeckungsbereich 230.2 vor.

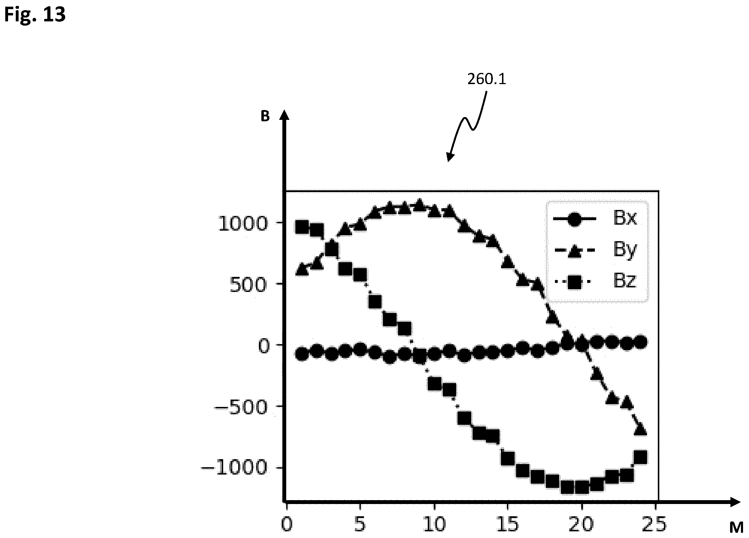

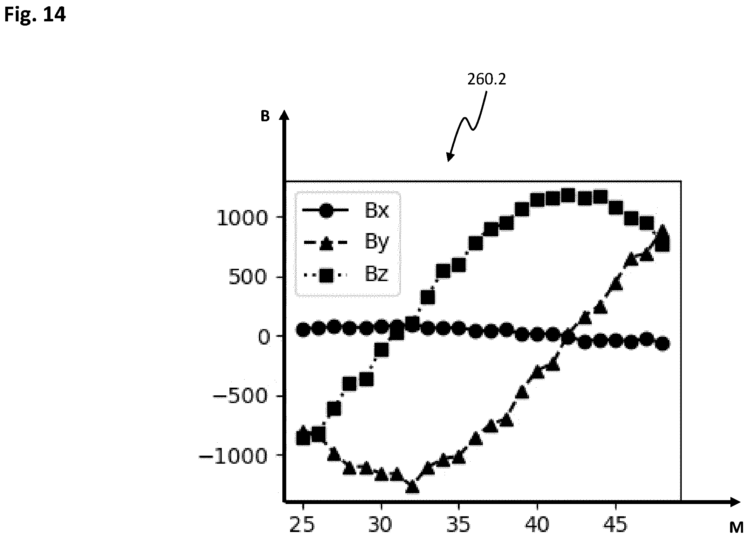

Entsprechend der Aufteilung der Magnetfeldsensoren 130 auf die beiden Sensorteilgruppen 240.1, 240.2 können die aktuellen Magnetfelddaten 250, wie in Figur 12 angedeutet, in eine erste Teildatenmenge 260.1 und eine zweite Teildatenmenge 260.2 unterteilt werden, wobei die erste Teildatenmenge 260.1 durch Erfassen des Magnetfelds der Magnetanordnung 142 mit Hilfe der ersten Sensorteilgruppe 240.1 und die zweite Teildatenmenge 260.2 durch Erfassen des Magnetfelds der Magnetanordnung 142 mit Hilfe der zweiten Sensorteilgruppe 240.2 gewonnen wurde. Die beiden Teildatenmengen 260.1, 260.2 weisen, entsprechend den vierundzwanzig Magnetfeldsensoren 130 je Sensorteilgruppe 240.1, 240.2, vierundzwanzig Datenpunkte pro Magnetfeldkomponente Bx, By, Bz auf. Die Teildatenmengen 260.1, 260.2 können dabei Datenpunkte umfassen, wie es in den Diagrammen der Figuren 13 und 14 veranschaulicht ist.

Figur 12 veranschaulicht ferner schematisch ein Bilden von Teilmustern 220 aus den Magnetfeldmustern 210 der Referenz-Magnetfelddaten 200, was sowohl abgestimmt auf die erfasste Sensorstellung der Sensoreinrichtung 120 in Bezug auf die Grenze 190 als auch abgestimmt auf die durch die Sensorteilgruppen 240.1, 240.2 bewirkten Teilüberdeckungen vorgenommen wird. Hierbei werden erste und zweite Teilmuster 220.1, 220.2 gebildet, welche die durch die erste und zweite Sensorteilgruppe 240.1, 240.2 verwirklichten Teilüberdeckungen jeweils in Bezug auf zwei benachbarte Magnetgruppen 150 der Magnetanordnung 142 und deren Magnetfeldmuster 210 nachbilden.

Korrespondierend zu den vierundzwanzig Magnetfeldsensoren 130 der ersten Sensorteilgruppe 240.1 und zu der Sensorstellung der Sensoreinrichtung 120 bezüglich der Grenze 190 der benachbarten Magnetgruppen 150.1, 150.2 umfassen die ersten Teilmuster 220.1 pro Magnetfeldkomponente Bx, By, Bz jeweils vierundzwanzig Datenpunkte der mit den Magnetgruppen 150 verknüpften Magnetfeldmuster 210. Hierbei handelt es sich jeweils um einen neunzehnten bis zu einem zweiundvierzigsten Datenpunkt der Magnetfeldmuster 210 (nicht dargestellt).

Ebenfalls korrespondierend zu den vierundzwanzig Magnetfeldsensoren 130 der zweiten Sensorteilgruppe 240.2 und zu der Sensorstellung der Sensoreinrichtung 120 bezüglich der Grenze 190 umfassen die zweiten Teilmuster 220.2 pro Magnetfeldkomponente Bx, By, Bz jeweils vierundzwanzig Datenpunkte. Aufgrund des Umstands, dass bei der zweiten Sensorteilgruppe 240.2, wie in Figur 12 dargestellt, eine Überdeckung der Grenze 190 vorliegt, was anhand der Sensorstellung erkannt werden kann, werden die dazugehörigen zweiten Teilmuster 220.2, welche die durch die zweite Sensorteilgruppe 240.2 bewirkte Teilüberdeckung wiedergeben, aus hierauf abgestimmten Teilen von Magnetfeldmustern 210 von benachbarten Magnetgruppen 150 zusammengesetzt. Vorliegend umfassen die zweiten Teilmuster 220.2 daher pro Magnetfeldkomponente Bx, By, Bz sechs Datenpunkte, bei welchen es sich um die letzten sechs Datenpunkte von mit den Magnetgruppen 150 verknüpften Magnetfeldmustern 210 handelt, und weitere achtzehn Datenpunkte, bei welches es sich um die ersten achtzehn Datenpunkte von Magnetfeldmustern 210 von hierzu benachbarten (und entsprechend Figur 12 sich jeweils rechts hierzu befindenden) Magnetgruppen 150 handelt (nicht dargestellt).

In Figur 12 ist das Bilden eines ersten und zweiten Teilmusters 220.1, 220.2 lediglich in Bezug auf das erste Magnetfeldmuster 210.1 und das zweite Magnetfeldmuster 210.2 der Referenz-Magnetfelddaten 200 dargestellt. In entsprechender Weise werden weitere erste und zweite Teilmuster 220.1, 220.2 mit Bezug auf das zweite Magnetfeldmuster 210.2 und ein drittes Magnetfeldmuster 210, mit Bezug auf das dritte und ein viertes Magnetfeldmuster 210 usw., bis zu einem nten Magnetfeldmuster gebildet (nicht dargestellt).

In dem Ähnlichkeitsvergleich können, entsprechend Figur 7, die Teildatenmengen 260.1, 260.2 der aktuellen Magnetfelddaten 250 mit den bezüglich der Sensorstellung der Sensoreinrichtung 120 und der durch die Sensorteilgruppen 240.1, 240.2 bewirkten Teilüberdeckungen jeweils zugehörigen Teilmustern 220.1, 220.2 verglichen werden, um jeweils ein entsprechendes Abstandsmaß 270 zu erhalten. Wie in Figur 12 angedeutet ist, kann hierbei im Rahmen einer ersten Auswertung 281 die erste Teildatenmenge 260.1 mit jedem der zugehörigen ersten Teilmuster 220.1, und kann im Rahmen einer zweiten Auswertung 282 die zweite Teildatenmenge 260.2 mit jedem der zugehörigen zweiten Teilmuster 220.2 verglichen werden. Hierdurch können ein erstes und zweites Teilmuster 220.1, 220.2 mit der größten Ähnlichkeit, also bei welchen jeweils das kleinste Abstandsmaß 270 vorliegt, ermittelt werden. Dementsprechend können diejenigen zwei benachbarten Magnetgruppen 150, und kann dadurch eine Positionierung der Sensoreinrichtung 120 an denjenigen benachbarten Magnetgruppen 150 bestimmt werden, welche zu den ermittelten Teilmustern 220.1, 220.2 gehören. Zusätzlich zu der erfassten Sensorstellung der Sensoreinrichtung 120 in Bezug auf die Grenze 190 der betreffenden Magnetgruppen 150 (vorliegend der Magnetgruppen 150.1, 150.2) gibt diese Information die aktuelle Position des Primärteils 110 auf dem Sekundärteil 140 wieder.

Mit Hilfe der vorgenannten Verfahrensvariante lässt sich ebenfalls eine Plausibilitätsprüfung erzielen. Dabei wird gefordert, dass anhand der ermittelten Teilmuster 220 mit der größten Ähnlichkeit in übereinstimmender Weise zwei benachbarte Magnetgruppen 150 bestimmt werden. Ist dies nicht der Fall, kann ein Vorliegen eines Fehlers, zum Beispiel in Form von fehlerhaften Daten, angenommen werden. Im Hinblick auf Figur 12 kann sich ein solcher Fehler zum Beispiel dadurch bemerkbar machen, dass bei der ersten Auswertung 281 die erste Magnetgruppe 150.1 identifiziert, und bei der zweiten Auswertung 282 anstelle der ersten und zweiten Magnetgruppe 150.1, 150.2 andere Magnetgruppen 150 ermittelt werden.

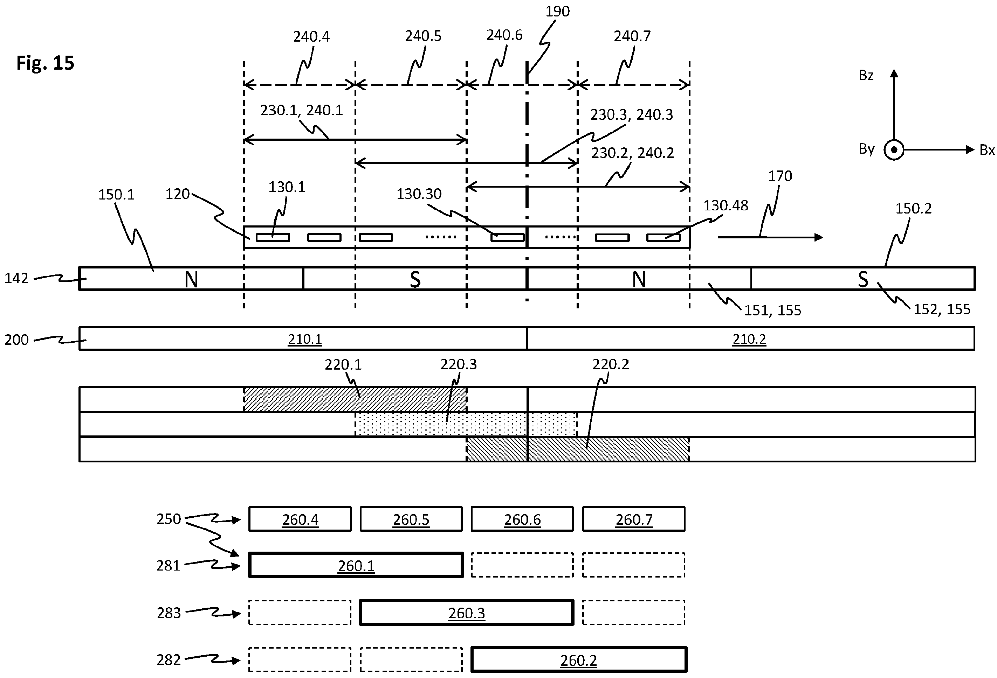

Abweichend von der anhand von Figur 12 erläuterten Vorgehensweise können auch andere Aufteilungen der Magnetfeldsensoren 130 der Sensoreinrichtung 120 in Betracht gezogen werden. Zur Veranschaulichung zeigt Figur 15 eine weitere Darstellung der Sensoreinrichtung 120, welche in der aktuellen Position des Primärteils 110 versetzt im Bereich zweier benachbarter Magnetgruppen 150 bzw. der ersten und zweiten Magnetgruppe 150.1, 150.2 angeordnet ist. Auch hierbei wird die erste Magnetgruppe 150.1 durch dreißig Magnetfeldsensoren 130 und wird die zweite Magnetgruppe 150.2 durch achtzehn Magnetfeldsensoren 130 der Sensoreinrichtung 120 überdeckt.

Wie in Figur 15 dargestellt ist, können die Magnetfeldsensoren 130 auf vier Sensorteilgruppen 240, d. h. eine vierte, fünfte, sechste und siebte Sensorteilgruppe 240.4, 240.5, 240.6, 240.7 aufgeteilt werden, welche jeweils zwölf Magnetfeldsensoren 130 umfassen. Hierzu korrespondierend können die aktuellen Magnetfelddaten 250 in vier Teildatenmengen 260, d. h. eine vierte, fünfte, sechste und siebte Teildatenmenge 260.4, 260.5, 260.6, 260.7 unterteilt werden, welche pro Magnetfeldkomponente Bx, By, Bz jeweils zwölf Datenpunkte aufweisen. Abgestimmt auf die erfasste Sensorstellung der Sensoreinrichtung 120 in Bezug auf die Grenze 190 und abgestimmt auf die durch die Sensorteilgruppen 240.4, 240.5, 240.6, 240.7 bewirkten Teilüberdeckungen können ferner nicht dargestellte Teilmuster 220 aus den Magnetfeldmustern 210 der Referenz-Magnetfelddaten 200 gebildet werden, welche die durch die Sensorteilgruppen 240.4, 240.5, 240.6, 240.7 verwirklichten Teilüberdeckungen jeweils in Bezug auf zwei benachbarte Magnetgruppen 150 der Magnetanordnung 142 und deren Magnetfeldmuster 210 nachbilden, und welche pro Magnetfeldkomponente Bx, By, Bz jeweils zwölf Datenpunkte umfassen (jeweils nicht dargestellt).

Durch Durchführen des Ähnlichkeitsvergleichs, in welchem die Teildatenmengen 260.4, 260.5, 260.6, 260.7 der aktuellen Magnetfelddaten 250 mit den hinsichtlich der Sensorstellung und der Aufteilung der Magnetfeldsensoren 130 auf die Sensorteilgruppen 240.4, 240.5, 240.6, 240.7 jeweils zugehörigen Teilmustern 220 verglichen werden, können vier Teilmuster 220 mit der größten Ähnlichkeit, damit die dazugehörigen zwei Magnetgruppen 150, und dadurch die Positionierung der Sensoreinrichtung 120 an den betreffenden zwei Magnetgruppen 150, ermittelt werden. Diese Information gibt, zusammen mit der Sensorstellung der Sensoreinrichtung 120, die aktuelle Position des Primärteils 110 auf dem Sekundärteil 140 wieder. Sofern hierbei verschiedene benachbarte Magnetgruppen 150 ermittelt werden, kann auf ein Vorliegen eines Fehlers geschlossen werden.

Figur 15 veranschaulicht darüber hinaus eine weitere Variante, in welcher die Magnetfeldsensoren 130 der Sensoreinrichtung auf drei sich teilweise überlappende Sensorteilgruppen 240, d. h. eine erste, zweite und dritte Sensorteilgruppe 240.1, 240.2, 240.3 aufgeteilt werden, welche jeweils vierundzwanzig Magnetfeldsensoren 130 umfassen. Die erste und zweite Sensorteilgruppe 240.1, 240.2 stimmen dabei mit den Sensorteilgruppen 240 von Figur 12 überein. Die dritte Sensorteilgruppe 240.3 überlappt mit den beiden anderen Sensorteilgruppen 240.1, 240.2 und setzt sich jeweils zur Hälfte aus Magnetfeldsensoren 130 der beiden anderen Sensorteilgruppen 240.1, 240.2 zusammen. Durch die drei Sensorteilgruppen 240.1, 240.2, 240.3 wird, mit Bezug auf die Bewegungsrichtung 170, jeweils ein anderer Teil der Magnetanordnung 142 bzw. der benachbarten Magnetgruppen 150.1, 150.2 überdeckt. In entsprechender Weise liegen drei sich auf die Teilüberdeckungen durch die drei Sensorteilgruppen 240.1, 240.2, 240.3 beziehende und sich teilweise überlappende Überdeckungsbereiche 230, d. h. ein erster Überdeckungsbereich 230.1, ein zweiter Überdeckungsbereich 230.2 und ein dritter Überdeckungsbereich 230.3, vor.

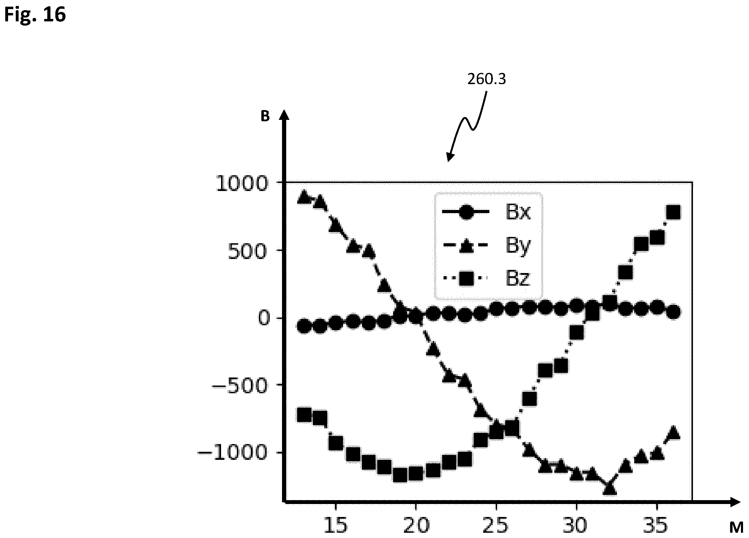

Entsprechend der Aufteilung der Magnetfeldsensoren 130 können die aktuellen Magnetfelddaten 250, wie in Figur 15 gezeigt, in drei sich überlappende Teildatenmengen 260, d. h. eine erste, zweite und dritte Teildatenmenge 260.1, 260.2, 260.3, unterteilt werden, welche jeweils durch Erfassen des Magnetfelds der Magnetanordnung 142 mit Hilfe von einer der drei Sensorteilgruppen 240.1, 240.2, 240.3 gewonnen wurden. Die drei Teildatenmengen 260.1, 260.2, 260.3 weisen, entsprechend den vierundzwanzig Magnetfeldsensoren 130 je Sensorteilgruppe 240.1, 240.2, 240.3, vierundzwanzig Datenpunkte pro Magnetfeldkomponente Bx, By, Bz auf. Die erste und zweite Teildatenmenge 260.1, 260.2 können Datenpunkte umfassen, wie es in den Diagrammen der Figuren 13 und 14 gezeigt ist. Mit Bezug auf die Datenpunkte der dritten Teildatenmenge 260.3 kann das Diagramm von Figur 16 zur Anwendung kommen.

Die erste, zweite und dritte Sensorteilgruppe 240.1, 240.2, 240.3 können basierend auf der zuvor erläuterten Aufteilung mit den vier Sensorteilgruppen 240.4, 240.5, 240.6, 240.7 hervorgehen, indem die erste Sensorteilgruppe 240.1 die vierte und fünfte Sensorteilgruppe 240.4, 240.5, die zweite Sensorteilgruppe 240.2 die sechste und siebte Sensorteilgruppe 240.6, 240.7, und die dritte Sensorteilgruppe 240.3 die fünfte und sechste Sensorteilgruppe 240.5, 240.6 umfasst. In entsprechender Weise können die erste, zweite und dritte Teildatenmenge 260.1, 260.2, 260.3 durch Verwendung der vier Teildatenmengen 260.4, 260.5, 260.6, 260.7 gebildet werden, wobei die erste Teildatenmenge 260.1 die vierte und fünfte Teildatenmenge 260.4, 260.5, die zweite Teildatenmenge 260.2 die sechste und siebte Teildatenmenge 260.6, 260.7, und die dritte Teildatenmenge 260.3 die fünfte und sechste Teildatenmenge 260.5, 260.6 umfasst.

In Figur 15 ist des Weiteren schematisch ein Bilden von Teilmustern 220 aus den Magnetfeldmustern 210 der Referenz-Magnetfelddaten 200 dargestellt, was unter Berücksichtigung der Sensorstellung der Sensoreinrichtung 120 in Bezug auf die Grenze 190 und unter Berücksichtigung der durch die drei Sensorteilgruppen 240.1, 240.2, 240.3 verwirklichten Teilüberdeckungen erfolgt. Hierbei werden erste, zweite und dritte Teilmuster 220.1, 220.2, 220.3 gebildet, welche die durch die drei Sensorteilgruppen 240.1, 240.2, 240.3 bewirkten Teilüberdeckungen jeweils in Bezug auf zwei benachbarte Magnetgruppen 150 der Magnetanordnung 142 und deren Magnetfeldmuster 210 wiedergeben.

Korrespondierend zu den vierundzwanzig Magnetfeldsensoren 130 der ersten Sensorteilgruppe 240.1 und zu der Sensorstellung der Sensoreinrichtung 120 bezüglich der Grenze 190 der benachbarten Magnetgruppen 150.1, 150.2 umfassen die ersten Teilmuster 220.1 pro Magnetfeldkomponente Bx, By, Bz jeweils vierundzwanzig Datenpunkte, d.h. einen neunzehnten bis zu einem zweiundvierzigsten Datenpunkt, der Magnetfeldmuster 210 der Magnetgruppen 150 (nicht dargestellt).

Ebenfalls korrespondierend zu den vierundzwanzig Magnetfeldsensoren 130 der zweiten Sensorteilgruppe 240.2 und zu der Sensorstellung der Sensoreinrichtung 120 bezüglich der Grenze 190 umfassen die zweiten Teilmuster 220.2 pro Magnetfeldkomponente Bx, By, Bz jeweils vierundzwanzig Datenpunkte. Die zweite Sensorteilgruppe 240.2 überdeckt, wie in Figur 15 dargestellt, die Grenze 190, was anhand der Sensorstellung erkannt werden kann. Infolgedessen werden die zweiten Teilmuster 220.2, welche die durch die zweite Sensorteilgruppe 240.2 bewirkte Teilüberdeckung wiedergeben, aus hierauf abgestimmten Teilen von Magnetfeldmustern 210 von benachbarten Magnetgruppen 150 zusammengesetzt. Vorliegend umfassen die zweiten Teilmuster 220.2 daher pro Magnetfeldkomponente Bx, By, Bz sechs erste Datenpunkte, bei welchen es sich um die letzten sechs Datenpunkte von Magnetfeldmustern 210 von Magnetgruppen 150 handelt, und weitere achtzehn Datenpunkte, bei welchen es sich um die ersten achtzehn Datenpunkte von Magnetfeldmustern 210 von hierzu benachbarten (und entsprechend Figur 15 sich jeweils rechts hierzu befindenden) Magnetgruppen 150 handelt (nicht dargestellt).

In analoger Weise und korrespondierend zu den vierundzwanzig Magnetfeldsensoren 130 der dritten Sensorteilgruppe 240.3 und zu der Sensorstellung der Sensoreinrichtung 120 bezüglich der Grenze 190 umfassen die dritten Teilmuster 220.3 pro Magnetfeldkomponente Bx, By, Bz jeweils vierundzwanzig Datenpunkte. Dadurch, dass auch bei der dritten Sensorteilgruppe 240.3, wie in Figur 15 dargestellt, eine Überdeckung der Grenze 190 vorliegt, was anhand der Sensorstellung erkannt werden kann, werden die dritten Teilmuster 220.3, welche die durch die dritte Sensorteilgruppe 240.3 bewirkte Teilüberdeckung wiedergeben, aus hierauf abgestimmten Teilen von Magnetfeldmustern 210 von benachbarten Magnetgruppen 150 zusammengesetzt. Vorliegend umfassen die dritten Teilmuster 220.3 daher pro Magnetfeldkomponente Bx, By, Bz achtzehn Datenpunkte, bei welchen es sich um die letzten achtzehn Datenpunkte von Magnetfeldmustern 210 von Magnetgruppen 150 handelt, und weitere sechs Datenpunkte, bei welchen es sich um die ersten sechs Datenpunkte von Magnetfeldmustern 210 von hierzu benachbarten (und entsprechend Figur 15 sich jeweils rechts hierzu befindenden) Magnetgruppen 150 handelt (nicht dargestellt).

In Figur 15 ist das Bilden eines ersten, zweiten und dritten Teilmusters 220.1, 220.2, 220.3 lediglich in Bezug auf das erste Magnetfeldmuster 210.1 und das zweite Magnetfeldmuster 210.2 der Referenz-Magnetfelddaten 200 dargestellt. In entsprechender Weise werden weitere erste, zweite und dritte Teilmuster 220.1, 220.2, 220.3 mit Bezug auf das zweite Magnetfeldmuster 210.2 und ein drittes Magnetfeldmuster 210, mit Bezug auf das dritte und ein viertes Magnetfeldmuster 210 usw., bis zu einem nten Magnetfeldmuster gebildet (nicht dargestellt).

In dem Ähnlichkeitsvergleich können, entsprechend Figur 7, die Teildatenmengen 260.1, 260.2, 260.3 der aktuellen Magnetfelddaten 250 mit den hinsichtlich der Sensorstellung der Sensoreinrichtung 120 und der Aufteilung der Magnetfeldsensoren 130 auf die Sensorteilgruppen 240.1, 240.2, 240.3 jeweils zugehörigen Teilmustern 220.1, 220.2, 220.3 verglichen werden, um jeweils ein entsprechendes Abstandsmaß 270 zu erhalten. Wie in Figur 15 angedeutet ist, kann hierbei im Rahmen einer ersten Auswertung 281 die erste Teildatenmenge 260.1 mit jedem der zugehörigen ersten Teilmuster 220.1, kann im Rahmen einer zweiten Auswertung 282 die zweite Teildatenmenge 260.2 mit jedem der zugehörigen zweiten Teilmuster 220.2, und kann im Rahmen einer dritten Auswertung 283 die dritte Teildatenmenge 260.3 mit jedem der zugehörigen dritten Teilmuster 220.3 verglichen werden. Hierdurch können drei Teilmuster 220.1, 220.2, 220.3 mit der größten Ähnlichkeit, damit die dazugehörigen zwei Magnetgruppen 150, und dadurch die Positionierung der Sensoreinrichtung 120 an den betreffenden zwei Magnetgruppen 150 (vorliegend die Magnetgruppen 150.1, 150.2), ermittelt werden. Diese Information gibt, zusammen mit der Sensorstellung der Sensoreinrichtung 120, die aktuelle Position des Primärteils 110 auf dem Sekundärteil 140 wieder. Sofern hierbei verschiedene benachbarte Magnetgruppen 150 ermittelt werden, kann ein Vorliegen eines Fehlers erkannt werden.

Mit Hilfe der vorgenannten Verfahrensvarianten lässt sich die Position des Primärteils 110 in Bezug auf das Sekundärteil 140 mit einer hohen Zuverlässigkeit und Genauigkeit bestimmen. Um die Zuverlässigkeit und Genauigkeit zu begünstigen, ist es ferner möglich, mehrere der Verfahrensvarianten durchzuführen. Beispielsweise kann das anhand von Figur 8 erläuterte Vorgehen, bei welchem der Ähnlichkeitsvergleich auf der Grundlage einer anhand der Sensorstellung der Sensoreinrichtung 120 festgestellten Teilüberdeckung einer Magnetgruppe 150 erfolgt, mit dem anhand von Figur 12 oder 15 erläuterten Vorgehen, bei welchem der Ähnlichkeitsvergleich auf der Grundlage einer Aufteilung der Magnetfeldsensoren 130 der Sensoreinrichtung 120 auf Sensorteilgruppen 240 erfolgt, kombiniert werden. Hierdurch kann eine weitere Plausibilitätsprüfung realisiert werden.

Es wird ferner darauf hingewiesen, dass obige Zahlenangaben wie zum Beispiel die Anzahl der Magnetfeldsensoren 130 der Sensoreinrichtung 120 lediglich als Beispiele anzusehen sind, welche durch andere Zahlenangaben ersetzt bzw. umgesetzt werden können.

Die Sensoreinrichtung 120, deren Magnetfeldsensoren 130 wie oben angegeben eine Magnetgruppe 150 umfassend ein Paar aus zwei Permanentmagneten 155 bzw. aus einem ersten und zweiten Permanentmagnet 151, 152 überdecken können, kann daher eine andere bzw. größere Anzahl an Magnetfeldsensoren 130 aufweisen, welche entlang der Bewegungsrichtung 170 verteilt und zueinander beanstandet auf der Leiterplatte 121 der Sensoreinrichtung 120 angeordnet sind. Möglich sind beispielsweise zweiundsiebzig oder auch mehr Magnetfeldsensoren 130. Auf diese Weise kann die Genauigkeit und Zuverlässigkeit der Positionsbestimmung begünstigt werden. Dies kann sich zum Beispiel im Hinblick auf eine Ausgestaltung der Magnetanordnung 142 des Sekundärteils 140 mit einer relativ großen Anzahl an Permanentmagneten 155 und Permanentmagnetpaaren bemerkbar machen.

Eine maximal mögliche Anzahl der Magnetfeldsensoren 130 kann jedoch durch gegenseitige Beeinflussungen der Magnetfeldsensoren 130 begrenzt sein, was bei relativ kleinen Abständen der Magnetfeldsensoren 130 zueinander auftreten kann. In diesem Zusammenhang besteht die Möglichkeit, die Sensoreinrichtung 120 von den Abmessungen her derart auszubilden, dass mit Hilfe der Magnetfeldsensoren 130 eine größere Anzahl an Permanentmagnetpaaren überdeckt werden kann. Auf diese Weise kann eine Ausgestaltung der Sensoreinrichtung 120 mit einer relativ großen Anzahl an Magnetfeldsensoren 130 zum Einsatz kommen. Die Magnetfeldsensoren 130 können ferner derart zueinander beabstandet sein, dass Beeinflussungen zwischen den Magnetfeldsensoren 130 vermieden werden können.

Die Positionsbestimmung kann hierbei auf der Grundlage von Magnetgruppen 150 erfolgen, welche nicht ein Permanentmagnetpaar, sondern, abgestimmt auf die Sensoreinrichtung 120 und entsprechend der möglichen Überdeckung durch die Magnetfeldsensoren 130, mehrere Permanentmagnetpaare aus jeweils einem ersten und zweiten Permanentmagnet 151, 152 umfassen. Auch kann die Aufteilung der Permanentmagneten 155 auf die Magnetgruppen 150 derart verwirklicht sein, dass sich die Magnetgruppen 150 teilweise überlappen. Dabei ist es ferner möglich, dass die Sensoreinrichtung 120 in der aktuellen Position des Primärteils 110 und bei Vorliegen einer versetzten Sensorstellung mehrere Grenzen 190 von benachbarten Permanentmagnetpaaren bzw. Magnetgruppen 150 überdeckt, was anhand von positiven Nulldurchgängen eines durch die aktuellen Magnetfelddaten 250 wiedergegebenen Magnetfeldstärkeverlaufs der dritten Magnetfeldkomponente Bz erkannt werden kann. Hierauf abgestimmt kann die Auswertung zur Positionsbestimmung in Bezug auf eine der Grenzen 190 durchgeführt werden.

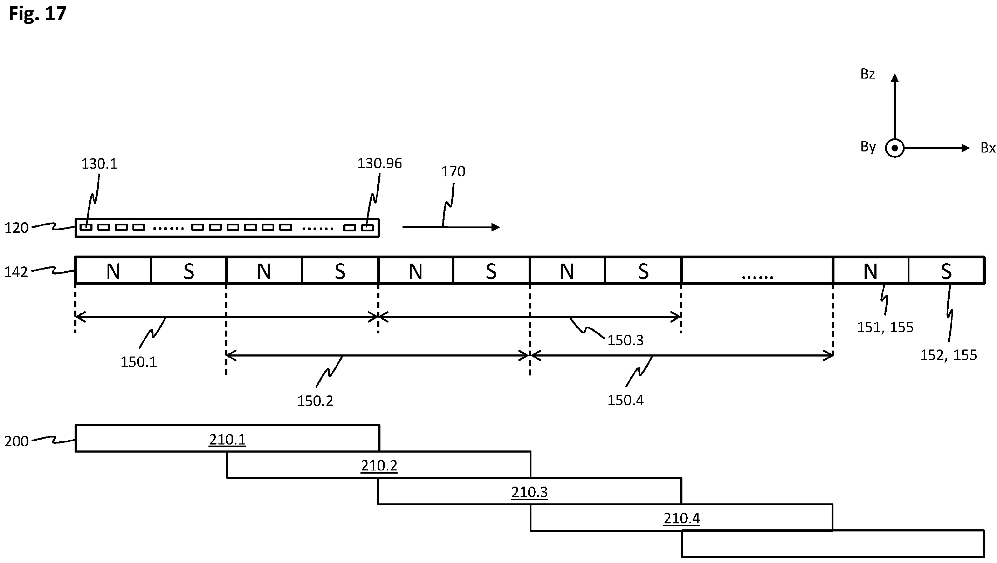

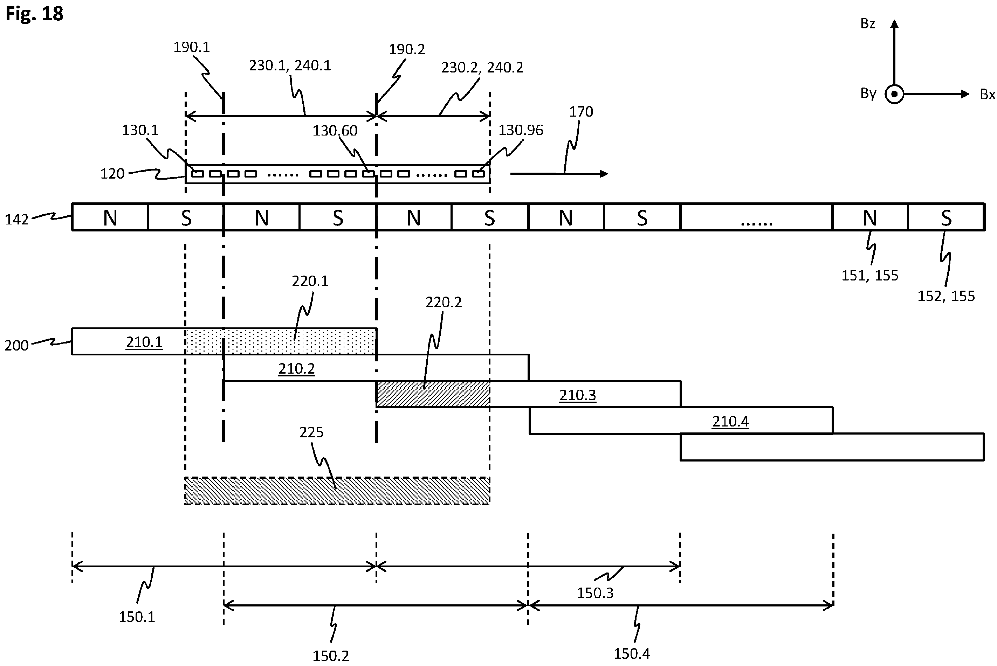

Ein mögliches Beispiel hierzu wird im Folgenden anhand der Figuren 17 und 18 erläutert. Übereinstimmende Merkmale und Verfahrensschritte sowie gleiche und gleich wirkende Komponenten werden im Folgenden nicht erneut detailliert beschrieben. Für Details hierzu wird stattdessen auf die vorstehende Beschreibung Bezug genommen, welche in entsprechender Weise zur Anwendung kommen kann.

Figur 17 zeigt eine weitere mögliche Ausgestaltung, wie sie für die Sensoreinrichtung 120 des Primärteils 110 in Betracht kommen kann. Die Sensoreinrichtung 120 weist sechsundneunzig Magnetfeldsensoren 130, also von einem ersten Magnetfeldsensor 130.1 bis zu einem sechsundneunzigsten Magnetfeldsensor 130.96 auf, welche entlang der Bewegungsrichtung 170 verteilt und zueinander beanstandet angeordnet sind. Die Sensoreinrichtung 120 ist derart ausgebildet, dass mit Hilfe der Magnetfeldsensoren 130 eine vollständige bzw. im Wesentlichen vollständige Überdeckung von zwei Permanentmagnetpaaren aus jeweils einem ersten und zweiten Permanentmagnet 151, 152 erzielt werden kann. Dementsprechend ist zum Zwecke der Positionsbestimmung eine solche Zuordnung bzw. Aufteilung der Permanentmagnete 155 der Magnetanordnung 142 des Sekundärteils 140 vorgesehen, nach welcher die Magnetgruppen 150 ebenfalls zwei Permanentmagnetpaare aus jeweils einem ersten und zweiten Permanentmagnet 151, 152, und damit insgesamt vier Permanentmagnete 155, aufweisen.

Die Zuordnung der Permanentmagnetpaare zu den Magnetgruppen 150 ist vorliegend derart gewählt, dass sich die Magnetgruppen 150 teilweise überlappen. Mit Bezug auf die Darstellung von Figur 17 und von links nach rechts umfasst die erste Magnetgruppe 150.1 daher ein erstes und zweites Permanentmagnetpaar, umfasst die zweite Magnetgruppe 150.2 das zweite und ein drittes Permanentmagnetpaar, umfasst die dritte Magnetgruppe 150.3 das dritte und ein viertes Permanentmagnetpaar, usw. Diese Aufteilung hat ferner zur Folge, dass als benachbarte Magnetgruppen 150 in der zum Zwecke der Positionsbestimmung mit Hilfe der Hauptsteuervorrichtung 105 durchgeführten Auswertung jeweils zwei aneinandergrenzende Magnetgruppen 150 oder, anders ausgedrückt, die sich jeweils beidseitig bezüglich einer Grenze 190 befindenden Magnetgruppen 150, und damit jeweils zwei Magnetgruppen 150 mit entweder einem ungeradzahligen oder mit einem geradzahligen Index, anzusehen sind. Beispielsweise stellen die erste und dritte Magnetgruppe 150.1, 150.3 zwei benachbarte Magnetgruppen 150 dar. Dies trifft in entsprechender Weise auf die zweite und vierte Magnetgruppe 150.2, 150.4 zu.

Im Hinblick auf Figur 17 wird ebenfalls darauf verwiesen, dass die erste Magnetgruppe 150.1 nicht eine sich an einem (linken) Ende der Magnetanordnung 142 befindende Magnetgruppe 150 sein kann, und lediglich für die folgende Beschreibung als erste Magnetgruppe 150.1 betrachtet werden kann. Links von der ersten Magnetgruppe 150.1 kann sich wenigstens ein weiteres Permanentmagnetpaar befinden. Infolgedessen kann links von der zweiten Magnetgruppe 150.2 eine weitere und bezüglich der zweiten Magnetgruppe 150.2 benachbarte Magnetgruppe 150 vorhanden sein (nicht dargestellt).

Figur 17 veranschaulicht des Weiteren die den einzelnen Magnetgruppen 150 zugeordneten Magnetfeldmuster 210 der Referenz-Magnetfelddaten 200, welche sich entsprechend den Magnetgruppen 150 teilweise überlappen. Die Magnetfeldmuster 210 können auch in dieser Ausgestaltung in der Initialmessung analog zu dem oben erläuterten Vorgehen gewonnen werden. Hierbei kann das Primärteil 110 entlang des Sekundärteils 140 bewegt werden, und kann das Bereitstellen der Magnetfeldmuster 210 anhand des Magnetfelds erfolgen, welches mit Hilfe der Magnetfeldsensoren 130 der Sensoreinrichtung 120 jeweils dann erfasst wird, wenn sich die Magnetfeldsensoren 130 im Bereich einer Magnetgruppe 150 befinden, und dadurch eine Überdeckung der betreffenden Magnetgruppe 150 durch die Magnetfeldsensoren 130 besteht. Hierbei kann das Bereitstellen der Magnetfeldmuster 210 abgestimmt auf positive Nulldurchgänge eines mit Hilfe eines endseitigen Magnetfeldsensors 130, zum Beispiel des ersten Magnetfeldsensors 130.1, bei dem Bewegen des Primärteils 110 erfassten Magnetfeldstärkeverlaufs der dritten Magnetfeldkomponente Bz erfolgen, über welche Grenzen 190 von benachbarten Permanentmagnetpaaren und Magnetgruppen 150 wiedergegeben werden können (vgl. Figur 18).

Entsprechend den sechsundneunzig Magnetfeldsensoren 130 der Sensoreinrichtung 120 können die durch Erfassen des Magnetfelds der Magnetanordnung 142 des Sekundärteils 140 mit Hilfe der Magnetfeldsensoren 130 an der aktuellen Position des Primärteils gewonnenen aktuellen Magnetfelddaten 250 sechsundneunzig Datenpunkte pro Magnetfeldkomponente Bx, By, Bz aufweisen. Dies gilt ebenso für die im Rahmen der Initialmessung bereitgestellten Magnetfeldmuster 210 (nicht dargestellt).

Für die Positionsbestimmung des Primärteils 110 auf dem Sekundärteil 140 können die oben erläuterten Schritte und Verfahrensvarianten in entsprechender Weise zur Anwendung kommen. Für den Fall, dass sich die Magnetfeldsensoren 130 der Sensoreinrichtung 120 in der aktuellen Position des Primärteils 110 im Bereich einer Magnetgruppe 150 der Magnetanordnung 142 des Sekundärteils 140 befinden, wodurch die betreffende Magnetgruppe 150 durch die Magnetfeldsensoren 130 überdeckt wird und eine Gegebenheit vergleichbar zu Figur 17 vorliegen kann, kann eine solche Positionierung durch Ermitteln der Sensorstellung der Sensoreinrichtung 120 in Bezug auf eine Grenze 190 von zwei benachbarten Permanentmagnetpaaren bzw. Magnetgruppen 150 erkannt werden. Die betreffende Grenze 190 kann sich im Bereich eines Rands bzw. Endes der Sensoreinrichtung 120 befinden. Eine solche Sensorstellung kann anhand eines Vorliegens eines positiven Nulldurchgangs bei einem Magnetfeldstärkeverlauf der dritten Magnetfeldkomponente Bz ermittelt werden, welcher durch die mit Hilfe sämtlicher Magnetfeldsensoren 130 an der aktuellen Position gewonnenen aktuellen Magnetfelddaten 250 wiedergegeben werden kann.

Sofern im Bereich der Enden des Magnetfeldstärkeverlaufs kein positiver Nulldurchgang vorhanden ist, kann erkannt werden, dass sich die Magnetfeldsensoren 130 der Sensoreinrichtung 120 in der aktuellen Position des Primärteils 110 im Bereich einer Magnetgruppe 150 befinden und die betreffende Magnetgruppe 150 durch die Magnetfeldsensoren 130 überdeckt wird. In diesem Fall können zur Positionsbestimmung des Primärteils 110, entsprechend Figur 7, die aktuellen Magnetfelddaten 250 mit den Magnetfeldmustern 210 der Referenz-Magnetfelddaten 200 verglichen werden, um ein Magnetfeldmuster 210 mit der größten Ähnlichkeit, dadurch die dazugehörige Magnetgruppe 150, und insofern die Positionierung der Sensoreinrichtung 120 an der betreffenden Magnetgruppe 150, zu bestimmen. Ferner kann zusätzlich der auf die Bewegungsrichtung 170 bezogene Abstand zwischen einer Grenze 190 und einem am nähesten zu der Grenze 190 angeordneten Magnetfeldsensor 130, zum Beispiel dem ersten Magnetfeldsensor 130.1, bestimmt werden. Dies kann mittels einer Extrapolation unter Verwendung des durch die aktuellen Magnetfelddaten 250 wiedergegebenen Magnetfeldstärkeverlaufs der dritten Magnetfeldkomponente Bz erfolgen.

In der aktuellen Position des Primärteils 110 kann sich die Sensoreinrichtung 120 auch versetzt im Bereich von zwei benachbarten (aneinandergrenzenden) Magnetgruppen 150 befinden, wie es in Figur 18 veranschaulicht ist. Aufgrund der überlappenden Magnetgruppen 150 kann sich die versetzte Anordnung der Sensoreinrichtung 120 dabei auf zwei Paare aus benachbarten Magnetgruppen 150 beziehen. Gemäß der Darstellung in Figur 18 trifft dies auf die erste und die hierzu benachbarte dritte Magnetgruppe 150.1, 150.3 zu. Sofern, wie oben angedeutet, links von der ersten Magnetgruppe 150.1 ein weiteres Permanentmagnetpaar vorliegt und insofern links von der zweiten Magnetgruppe 150.2 und zu dieser benachbart eine weitere Magnetgruppe 150 vorhanden ist, liegt die versetzte Anordnung der Sensoreinrichtung 120 auch in Bezug auf diese weitere Magnetgruppe 150 und die zweite Magnetgruppe 150.2 vor. Aufgrund der versetzten Anordnung werden die betreffenden benachbarten Magnetgruppen 150 jeweils teilweise durch die Magnetfeldsensoren 130 der Sensoreinrichtung 120 überdeckt.

Dadurch, dass die Sensoreinrichtung 120 vorliegend zwei Permanentmagnetpaare überdecken kann (vgl. Figur 17), kann sich die Sensoreinrichtung 120 bei einer versetzten Positionierung ferner über zwei Grenzen 190 von benachbarten Permanentmagnetpaaren bzw. Magnetgruppen 150 befinden, wie in Figur 18 anhand einer ersten Grenze 190.1 und einer zweiten Grenze 190.2 veranschaulicht ist. Die beiden Grenzen 190.1, 190.2 können ebenfalls anhand der an der aktuellen Position des Primärteils 110 mit Hilfe der Magnetfeldsensoren 130 gewonnenen aktuellen Magnetfelddaten 250 erkannt werden. Die Grenzen 190.1, 190.2 fallen mit positiven Nulldurchgängen des durch die aktuellen Magnetfelddaten 250 wiedergegebenen Magnetfeldstärkeverlaufs der dritten Magnetfeldkomponente Bz zusammen, und können daher anhand der Nulldurchgänge erfasst werden.

Für das im Rahmen der Positionsbestimmung durchgeführte Ermitteln der Sensorstellung der Sensoreinrichtung 120 in Bezug auf eine Grenze 190, wie es oben erläutert wurde, kann eine der beiden Grenzen 190 ausgewählt und herangezogen werden. Beispielsweise kann die in Figur 18 mit Bezug auf die Bewegungsrichtung 170 rechts angeordnete zweite Grenze 190.2 ausgewählt werden. Hierzu korrespondierend erfolgt auch die weitere Auswertung unter Verwendung der ausgewählten Grenze 190.

Bei dem Ermitteln der Sensorstellung kann, entsprechend der obigen Beschreibung, der auf die Bewegungsrichtung 170 bezogene Abstand zwischen der ausgewählten Grenze 190 und den am nähesten zu und beidseitig der Grenze 190 angeordneten Magnetfeldsensoren 130 der Sensoreinrichtung 120 bestimmt werden. Dies kann, unter Verwendung des durch die aktuellen Magnetfelddaten 250 wiedergegebenen Magnetfeldstärkeverlaufs der dritten Magnetfeldkomponente Bz, durch Identifizieren der sich am nähesten zu der Grenze 190 befindenden Magnetfeldsensoren 130, und durch Durchführen einer Interpolation oder Extrapolation unter Berücksichtigung des Abstands zwischen den betreffenden Magnetfeldsensoren 130, erfolgen. Gemäß Figur 18 ist zum Beispiel ein sich links der zweiten Grenze 190.2 befindender sechzigster Magnetfeldsensor 130.60 am nähesten zu der zweiten Grenze 190.2 positioniert.

Basierend auf der festgestellten Sensorstellung der Sensoreinrichtung 120 in Bezug auf die ausgewählte Grenze 190 können die oben erläuterten Verfahrensvarianten zum Bestimmen der aktuellen Position des Primärteils 110 wie folgt durchgeführt werden.

Wenn festgestellt wird, dass sich die Sensoreinrichtung 120 im Bereich von zwei benachbarten (aneinandergrenzenden) Magnetgruppen 150 befindet und beide Magnetgruppen 150 jeweils teilweise durch die Sensoreinrichtung 120 überdeckt werden, kann eine Teildatenmenge 260 aus den aktuellen Magnetfelddaten 250 gebildet werden, welche mit Hilfe einer Sensorteilgruppe 240 aus Magnetfeldsensoren 130 der Sensoreinrichtung 120 gewonnen wurde, durch welche die Teilüberdeckung von einer der beiden Magnetgruppen 150 verwirklicht ist. Hierzu korrespondierend können Teilmuster 220 aus den Magnetfeldmustern 210 der Referenz-Magnetfelddaten 200 gebildet werden, welche die durch die Sensorteilgruppe 240 bewirkte Teilüberdeckung in Bezug auf jede Magnetgruppe 150 und deren Magnetfeldmuster 210 nachbilden. In dem Ähnlichkeitsvergleich kann die Teildatenmenge 260 mit jedem der Teilmuster 220 verglichen werden, um ein Teilmuster 220 und das entsprechende Magnetfeldmuster 210 mit der größten Ähnlichkeit, und dadurch die Positionierung der Sensoreinrichtung 120 an der betreffenden Magnetgruppe 150, zu ermitteln. Zusammen mit der erfassten Sensorstellung der Sensoreinrichtung 120 gibt diese Information die aktuelle Position des Primärteils 110 wieder.

Die Auswertung erfolgt dabei, wie oben angegeben, unter Berücksichtigung der ausgewählten Grenze 190. Die Auswahl der Grenze 190 wirkt sich auf das Bestimmen der Sensorteilgruppe 240, damit das Bilden der Teildatenmenge 260 aus den aktuellen Magnetfelddaten 250, und auch das Bilden der Teilmuster 220 aus den Magnetfeldmustern 210, aus.

In Figur 18 ist diese Vorgehensweise mit Bezug auf die zweite Grenze 190.2 als ausgewählte Grenze 190 dargestellt, welche zwei benachbarte Magnetgruppen 150, d. h. vorliegend die erste und dritte Magnetgruppe 150.1, 150.3, trennt. Die größere Teilüberdeckung (mit einem ersten Überdeckungsbereich 230.1) erfolgt dabei durch eine sechzig Magnetfeldsensoren 130 umfassende erste Sensorteilgruppe 240.1 (mit dem ersten bis zu dem sechzigsten Magnetfeldsensor 130.1, 130.60). Dies kann anhand der ermittelten Sensorstellung festgestellt werden. Dementsprechend kann eine zu der ersten Sensorteilgruppe 240.1 gehörende und aus den aktuellen Magnetfelddaten 250 gebildete Teildatenmenge 260 mit sechzig Datenpunkten pro Magnetfeldkomponente Bx, By, Bz gebildet werden (nicht dargestellt).

In Figur 18 ist ferner ein Bilden von ersten Teilmustern 220.1 angedeutet, welche die durch die erste Sensorteilgruppe 240.1 bewirkte Teilüberdeckung in Bezug auf jede Magnetgruppe 150 und deren Magnetfeldmuster 210 nachbilden. Korrespondierend zu den sechzig Magnetfeldsensoren 130 der ersten Sensorteilgruppe 240.1, und zu der Sensorstellung der Sensoreinrichtung 120 bezüglich der zweiten Grenze 190.2, umfassen die ersten Teilmuster 220.1 pro Magnetfeldkomponente Bx, By, Bz jeweils die letzten sechzig Datenpunkte der Magnetfeldmuster 210. In Figur 18 ist ein erstes Teilmuster 220.1 lediglich bei dem ersten Magnetfeldmuster 210.1 dargestellt. In dem Ähnlichkeitsvergleich kann die Teildatenmenge 260 mit den ersten Teilmustern 220.1 verglichen werden.

Alternativ ist es möglich, das Bilden der Teildatenmenge 260, der Teilmuster 220 und den Vergleich im Hinblick auf die andere der beiden Teilüberdeckungen durchzuführen, wie in Figur 18 mit Bezug auf eine sechsunddreißig Magnetfeldsensoren 130 umfassende zweite Sensorteilgruppe 240.2 (mit einem zweiten Überdeckungsbereich 230.2) dargestellt ist. Die hierbei aus den aktuellen Magnetfelddaten 250 gebildete Teildatenmenge 260 kann in entsprechender Weise sechsunddreißig Datenpunkte je Magnetfeldkomponente Bx, By, Bz umfassen. Dies gilt ebenfalls für aus den Magnetfeldmustern 210 gebildete zweite Teilmuster 220.2, welche die durch die zweite Sensorteilgruppe 240.2 bewirkte Teilüberdeckung in Bezug auf jede Magnetgruppe 150 und deren Magnetfeldmuster 210 nachbilden. Korrespondierend zu den sechsunddreißig Magnetfeldsensoren 130 der zweiten Sensorteilgruppe 240.2, und zu der Sensorstellung der Sensoreinrichtung 120 bezüglich der zweiten Grenze 190.2, umfassen die zweiten Teilmuster 220.2 pro Magnetfeldkomponente Bx, By, Bz jeweils die ersten sechsunddreißig Datenpunkte der Magnetfeldmuster 210. In Figur 18 ein zweites Teilmuster 220.2 lediglich bei dem dritten Magnetfeldmuster 210.3 dargestellt. In dem Ähnlichkeitsvergleich kann die Teildatenmenge 260 mit den zweiten Teilmustern 220.2 verglichen werden.

Im Falle einer festgestellten Sensorstellung der Sensoreinrichtung 120 im Bereich von zwei benachbarten (aneinandergrenzenden) Magnetgruppen 150 besteht ferner die Möglichkeit, neu zusammengesetzte Magnetfeldmuster 225 zu bilden, welche jeweils unter Berücksichtigung der Teilüberdeckungen aus Teilmustern 220 von den bei der Initialmessung bereitgestellten Magnetfeldmustern 210 zweier benachbarter Magnetgruppen 150 zusammengesetzt sind. Durch die neu zusammengesetzten Magnetfeldmuster 225 kann die anhand der Sensorstellung festgestellte Positionierung der Sensoreinrichtung 120 und damit die durch die Sensoreinrichtung 120 bewirkte Überdeckung jeweils in Bezug auf zwei benachbarte Magnetgruppen 150 der Magnetanordnung 142 nachgebildet werden. In dem Ähnlichkeitsvergleich können die aktuellen Magnetfelddaten 250 mit den neu zusammengesetzten Magnetfeldmustern 225 verglichen werden, um ein zusammengesetztes Magnetfeldmuster 225 mit der größten Ähnlichkeit, und dadurch die Positionierung der Sensoreinrichtung 120 an den dazugehörigen zwei Magnetgruppen 150, zu ermitteln. Zusammen mit der erfassten Sensorstellung der Sensoreinrichtung 120 gibt diese Information die aktuelle Position des Primärteils 110 wieder.

Die vorgenannte Auswertung erfolgt ebenfalls, wie oben angegeben, unter Berücksichtigung der ausgewählten Grenze 190. Die Auswahl der Grenze 190 wirkt sich dabei auf das Bilden der neu zusammengesetzten Magnetfeldmuster 225 aus.

In Figur 18 ist das Bilden von neu zusammengesetzten Magnetfeldmustern 225 in Bezug auf die zweite Grenze 190.2 als ausgewählte Grenze 190 dargestellt, welche zwei benachbarte Magnetgruppen 150 bzw. die erste und dritte Magnetgruppe 150.1, 150.3 trennt, wobei die erste Magnetgruppe 150.1 durch die erste Sensorteilgruppe 240.1 und die dritte Magnetgruppe 150.3 durch die zweite Sensorteilgruppe 240.2 überdeckt werden. Die zusammengesetzten Magnetfeldmuster 225 umfassen jeweils ein erstes Teilmuster 220.1 eines Magnetfeldmusters 210 einer Magnetgruppe 150 und ein zweites Teilmuster 220.2 eines Magnetfeldmusters 210 einer hierzu benachbarten Magnetgruppe 150. Über ein erstes Teilmuster 220.1 wird die durch die erste Sensorteilgruppe 240.1 bewirkte Teilüberdeckung jeweils in Bezug auf eine Magnetgruppe 150, und über ein zweites Teilmuster 220.2 wird die durch die zweite Sensorteilgruppe 240.2 bewirkte Teilüberdeckung jeweils in Bezug auf eine hierzu benachbarte Magnetgruppe 150 wiedergegeben.

In Figur 18 ist das Bilden eines zusammengesetzten Teilmusters 225 lediglich in Bezug auf das erste und dritte Magnetfeldmuster 210.1, 210.3 dargestellt, welche zu zwei benachbarten (aneinandergrenzenden) Magnetgruppen 150, d. h. der ersten und dritten Magnetgruppe 150.1, 150.3, gehören. Das dargestellte zusammengesetzte Magnetfeldmuster 225 wird dabei unter Verwendung eines ersten Teilmusters 220.1 des ersten Magnetfeldmusters 210.1 und eines zweiten Teilmusters 220.2 des dritten Magnetfeldmusters 210.3 gebildet. In entsprechender Weise kann ein weiteres zusammengesetztes Magnetfeldmuster 225 unter Verwendung eines ersten Teilmusters 220.1 des zweiten Magnetfeldmusters 210.2 und eines zweiten Teilmusters 220.2 des vierten Magnetfeldmusters 210.4 gebildet werden. Das Bilden weiterer zusammengesetzter Magnetfeldmuster 225 kann in vergleichbarer Weise bis zu einem nten Magnetfeldmuster 210 fortgesetzt werden (nicht dargestellt).

Korrespondierend zu den sechzig Magnetfeldsensoren 130 der ersten Sensorteilgruppe 240.1 und zu der Sensorstellung der Sensoreinrichtung 120 bezüglich der zweiten Grenze 190.2 umfassen die ersten Teilmuster 220.1 pro Magnetfeldkomponente Bx, By, Bz jeweils die letzten sechzig Datenpunkte der verwendeten Magnetfeldmuster 210. Korrespondierend zu den sechsunddreißig Magnetfeldsensoren 130 der zweiten Sensorteilgruppe 240.2 und zu der Sensorstellung der Sensoreinrichtung 120 bezüglich der zweiten Grenze 190.2 umfassen die zweiten Teilmuster 220.2 pro Magnetfeldkomponente Bx, By, Bz jeweils die ersten sechsunddreißig Datenpunkte der verwendeten Magnetfeldmuster 210. Die zusammengesetzten Magnetfeldmuster 225 umfassen dadurch, entsprechend den aktuellen Magnetfelddaten 250, sechsundneunzig Datenpunkte je Magnetfeldkomponente Bx, By, Bz (jeweils nicht dargestellt).

Es besteht des Weiteren die Möglichkeit, die Auswertung auf der Grundlage einer vorgegebenen Aufteilung der Magnetfeldsensoren 130 der Sensoreinrichtung 120 auf mehrere Sensorteilgruppen 240 durchzuführen, wobei die Aufteilung unabhängig von der in der aktuellen Position des Primärteils 110 vorliegenden Sensorstellung der Sensoreinrichtung 120 ist. Entsprechend der Aufteilung können die aktuellen Magnetfelddaten 250 in mehrere Teildatenmengen 260 unterteilt werden, welche mit Hilfe der einzelnen und die Magnetanordnung 142 jeweils teilweise überdeckenden Sensorteilgruppen 240 gewonnen wurden. Hierzu korrespondierend können Teilmuster 220 aus den Magnetfeldmustern 210 der Referenz-Magnetfelddaten 200 gebildet werden, was unter Berücksichtigung der erfassten Sensorstellung der Sensoreinrichtung 120 in der aktuellen Position des Primärteils 110 sowie unter Berücksichtigung der Aufteilung der Magnetfeldsensoren 130 und damit der durch die Sensorteilgruppen 240 bewirkten Teilüberdeckungen erfolgt. Die Teilmuster 220 können die durch die einzelnen Sensorteilgruppen 240 bewirkten Teilüberdeckungen jeweils in Bezug auf zwei benachbarte (aneinandergrenzende) Magnetgruppen 150 der Magnetanordnung 142 wiedergeben. In dem Ähnlichkeitsvergleich können die Teildatenmengen 260 mit den hinsichtlich der Sensorstellung und der Aufteilung der Magnetfeldsensoren 130 jeweils zugehörigen Teilmustern 220 verglichen werden, um die Teilmuster 220 mit der größten Ähnlichkeit, und dadurch die Positionierung der Sensoreinrichtung 120 an den dazugehörigen zwei benachbarten Magnetgruppen 150, zu ermitteln. Zusammen mit der erfassten Sensorstellung der Sensoreinrichtung 120 spiegelt diese Information die aktuelle Position des Primärteils 110 wider.

Hinsichtlich der vorgenannten Auswertung kann mit Bezug auf die sechsundneunzig Magnetfeldsensoren 130 umfassende Sensoreinrichtung 120 zum Beispiel eine Aufteilung der Magnetfeldsensoren 130 analog zu Figur 12 oder Figur 15 in Betracht kommen, d. h. eine Aufteilung auf zwei Sensorteilgruppen 240 oder drei sich teilweise überlappende Sensorteilgruppen 240 mit jeweils achtundvierzig Magnetfeldsensoren 130. Die Auswertung wird auch hier unter Berücksichtigung der ausgewählten Grenze 190 vorgenommen, was sich vorliegend auf das Bilden der Teilmuster 220 auswirkt. Das Bilden der Teilmuster 220 aus den Magnetfeldmustern 210 erfolgt jeweils mit Bezug auf zwei benachbarte (aneinandergrenzende) Magnetgruppen 150, so dass mit Hilfe der Teilmuster 220 die durch die Sensorteilgruppen 240 bewirkten Teilüberdeckungen jeweils in Bezug auf zwei benachbarte Magnetgruppen 150 nachgebildet werden. Mit Bezug auf Figur 17 sind dies, wie oben angegeben, jeweils zwei Magnetgruppen 150 mit entweder einem geradzahligen oder einem ungeradzahligen Index. Für den Fall, dass eine Sensorteilgruppe 240 die ausgewählte Grenze 190 überdeckt, was anhand der erfassten Sensorstellung erkannt werden kann, können diejenigen Teilmuster 220, welche die durch diese Sensorteilgruppe 240 bewirkte Teilüberdeckung wiedergeben, analog zu dem anhand von Figur 12 oder Figur 15 erläuterten Vorgehen durch Zusammensetzen von entsprechenden Teilen von Magnetfeldmustern 210 von benachbarten (aneinandergrenzenden) Magnetgruppen 150 gebildet werden.

Die gemäß dem Verfahren bestimmte aktuelle Position des Primärteils 110 in Bezug auf das Sekundärteil 140 kann, wie oben angegeben, eine unbewegliche Position sein, so dass keine Bewegungserzeugung bei dem linearen Antriebssystem 100 vorliegt. Hiervon ausgehend können das Primärteil 110 und das Sekundärteil 140 in dem weiteren durch die Hauptsteuervorrichtung 105 gesteuerten Betrieb des linearen Antriebssystems 100 relativ zueinander bewegt werden.

Dabei kann die gemäß dem Verfahren und mit Hilfe der Hauptsteuervorrichtung 105 bestimmte aktuelle Position als Referenzposition dienen, auf welche nachfolgend durchgeführte Bewegungen und dadurch Positionsänderungen des Primärteils 110 in Bezug auf das Sekundärteil 140 rückbezogen werden können. In diesem Zusammenhang können die Positionsänderungen anhand des mit Hilfe von einem oder auch mehreren Magnetfeldsensoren 130 der Sensoreinrichtung 120 erfassten Magnetfelds der Magnetanordnung 142 des Sekundärteils 140 ermittelt werden. Das Erfassen der Bewegung, was im Rahmen einer entsprechenden Auswertung durch die Hauptsteuervorrichtung 105 erfolgen kann, kann zum Beispiel in einer inkrementellen Weise durchgeführt werden, indem die dazugehörigen Positionsänderungen in Bezug auf einzelne Permanentmagnetpaare oder Magnetgruppen 150 der Magnetanordnung 142 ermittelt werden. Hierauf basierend kann ein Inkrementieren eines entsprechenden Zählers durchgeführt werden.

Mit Bezug auf das lineare Antriebssystem 100 kann darüber hinaus eine von der vorstehenden Beschreibung abweichende und nicht dargestellte Ausgestaltung in Betracht kommen, in welcher das Primärteil 110 eine ortsfeste Komponente und das Sekundärteil 140 eine bewegliche Komponente des Antriebssystems 100 ist. In dieser Ausgestaltung kann das Sekundärteil 140 aufgrund der magnetischen Wechselwirkung zwischen der Elektromagneteinrichtung 111 des Primärteils 110 und der Magnetanordnung 142 des Sekundärteils 140 gegenüber dem Primärteil 110 bewegt werden. Ferner kann das Sekundärteil 140 zum Beispiel abweichend von Figur 1 oberhalb des Primärteils 110 angeordnet sein. Durch geeignete Bestandteile kann eine Führung bzw. Lagerung des beweglichen Sekundärteils 140 an oder gegenüber dem ortsfesten Primärteil 110 erzielt werden.

Im Hinblick auf eine solche Ausgestaltung des linearen Antriebssystems 100 können das oben beschriebene Verfahren und dessen Verfahrensvarianten in entsprechender Weise durchgeführt werden, um die aktuelle Position des Primärteils 110 in Bezug auf das Sekundärteil 140 zu bestimmen. Diese Position ist gleichbedeutend mit einer Positionierung des Sekundärteils 140 in Bezug auf das Primärteil 110.

Die Initialmessung kann hierbei ein Bewegen des Sekundärteils 140 gegenüber dem Primärteil 110 und, analog zu der vorstehenden Beschreibung, ein Bereitstellen der Magnetfeldmuster 210 der Referenz-Magnetfelddaten 200 anhand des Magnetfelds der Magnetanordnung 142 des Sekundärteils 140 umfassen, welches jeweils dann mit Hilfe der Sensoreinrichtung 120 des Primärteils 110 erfasst wird, wenn sich die Magnetfeldsensoren 130 der Sensoreinrichtung 120 im Bereich einer Magnetgruppe 150 befinden und die betreffende Magnetgruppe 150 überdecken. Um eine unbekannte aktuelle Position des Primärteils 110 in Bezug auf das Sekundärteil 140 (und dadurch eine aktuelle Positionierung des Sekundärteils 140 relativ zu dem Primärteil 110) zu bestimmen, können an der aktuellen Position durch Erfassen des Magnetfelds der Magnetanordnung 142 des Sekundärteils 140 mit Hilfe der Sensoreinrichtung 120 des Primärteils 110 aktuelle Magnetfelddaten 250 gewonnen werden. Durch Durchführen einer Auswertung unter Verwendung der aktuellen Magnetfelddaten 250 und der Referenz-Magnetfelddaten 200, wie es oben erläutert wurde, kann die gesuchte aktuelle Position des Primärteils 110 in Bezug auf das Sekundärteil 140 (und damit die Positionierung des Sekundärteils 140 relativ zu dem Primärteil 110) bestimmt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, die durch die folgenden Ansprüche definiert wird.

### Bezugszeichenliste

- 100: lineares Antriebssystem
- 105: Hauptsteuervorrichtung
- 107: Verbindungskabel
- 110: Primärteil
- 111: Elektromagneteinrichtung
- 112: Gehäuse
- 113: Anschluss
- 120: Sensoreinrichtung
- 121: Leiterplatte
- 130: Magnetfeldsensor
- 140: Sekundärteil
- 141: Trägerplatte
- 142: Magnetanordnung
- 150: Magnetgruppe
- 151: Permanentmagnet
- 152: Permanentmagnet
- 155: Permanentmagnet
- 161: Verlauf Magnetfeldstärke
- 162: Verlauf Magnetfeldstärke
- 163: Verlauf Magnetfeldstärke
- 170: Bewegungsrichtung
- 180: Nulldurchgang
- 185: Scheitelpunkt
- 190: Grenze
- 200: Referenz-Magnetfelddaten
- 205: Magnetfelddaten
- 210: Magnetfeldmuster
- 220: Teilmuster
- 225: zusammengesetztes Magnetfeldmuster
- 230: Überdeckungsbereich
- 240: Sensorteilgruppe
- 250: aktuelle Magnetfelddaten
- 260: Teildatenmenge
- 263: Verlauf Magnetfeldstärke
- 270: Abstandsmaß
- 281: Auswertung
- 282: Auswertung
- 283: Auswertung
- B: Flussdichte
- Bx: Magnetfeldkomponente
- By: Magnetfeldkomponente
- Bz: Magnetfeldkomponente
- M: Nummer Magnetfeldsenor
- P: Position

## Patentansprüche

1. Verfahren zum Betreiben eines linearen Antriebssystems (100), wobei das lineare Antriebssystem (100) ein Primärteil (110) und ein Sekundärteil (140) aufweist, welche relativ zueinander translatorisch bewegbar sind,
wobei das Primärteil (110) eine bestrombare Elektromagneteinrichtung (111) und das Sekundärteil (140) eine Magnetanordnung (142) aus nebeneinander angeordneten Permanentmagneten (155) aufweist,
wobei durch Bestromen der Elektromagneteinrichtung (111) des Primärteils (110) eine magnetische Wechselwirkung zwischen der Elektromagneteinrichtung (111) und der Magnetanordnung (142) des Sekundärteils (140) hervorrufbar ist, um das Primärteil (110) und das Sekundärteil (140) relativ zueinander zu bewegen,
wobei das Primärteil (110) eine Sensoreinrichtung (120) aus Magnetfeldsensoren (130) zum Erfassen eines von der Magnetanordnung (142) des Sekundärteils (140) erzeugten Magnetfelds aufweist,
wobei in einer Initialmessung an unterschiedlichen Positionen des Primärteils (110) in Bezug auf das Sekundärteil (140) mit Hilfe der Sensoreinrichtung (120) das Magnetfeld der Magnetanordnung (142) des Sekundärteils (140) erfasst wird und positionsabhängige Referenz-Magnetfelddaten (200) bereitgestellt werden,
wobei eine Positionsbestimmung für das Primärteil (110) durchgeführt wird,
indem an einer aktuellen Position des Primärteils (110) in Bezug auf das Sekundärteil (140) mit Hilfe der Sensoreinrichtung (120) das Magnetfeld der Magnetanordnung (142) des Sekundärteils (140) erfasst und aktuelle Magnetfelddaten (250) bereitgestellt werden, und
auf der Grundlage der Referenz-Magnetfelddaten (200) und der aktuellen Magnetfelddaten (250) die aktuelle Position des Primärteils (110) in Bezug auf das Sekundärteil bestimmt (140) wird,
wobei die Positionsbestimmung ein Durchführen eines Vergleichs wenigstens eines Teils der aktuellen Magnetfelddaten (250) mit Teilen der Referenz-Magnetfelddaten (200) mit Hilfe eines Ähnlichkeitsverfahrens umfasst,
**dadurch gekennzeichnet, dass**
die Positionsbestimmung auf der Grundlage einer Aufteilung der Permanentmagnete (155) der Magnetanordnung (142) des Sekundärteils (140) auf mehrere Magnetgruppen (150) aus nebeneinander angeordneten Permanentmagneten (155) erfolgt, und die Referenz-Magnetfelddaten (200) mehrere Magnetfeldmuster (210) umfassen, welche jeweils einer Magnetgruppe (150) aus nebeneinander angeordneten Permanentmagneten (155) der Magnetanordnung (142) des Sekundärteils (140) zugeordnet sind.

2. Verfahren nach Anspruch 1,
wobei das Ähnlichkeitsverfahren ein DTW-Verfahren (Dynamic Time Warping) ist.

3. Verfahren nach einem der vorhergehenden Ansprüche,
wobei das Durchführen des Vergleichs wenigstens eines von Folgendem umfasst:
Vergleichen der aktuellen Magnetfelddaten (250) mit den Magnetfeldmustern (210);
Vergleichen wenigstens einer Teildatenmenge (260) der aktuellen Magnetfelddaten (250) mit wenigstens einem Teilmuster (220) der Magnetfeldmuster (210);
Vergleichen der aktuellen Magnetfelddaten (250) mit aus Teilmustern (220) der Magnetfeldmuster (210) neu zusammengesetzten Magnetfeldmustern (225);
und/oder
Vergleichen von mehreren Teildatenmengen (260) der aktuellen Magnetfelddaten (250) mit Teilmustern (220) der Magnetfeldmuster (210).

4. Verfahren nach einem der vorhergehenden Ansprüche,
wobei die Sensoreinrichtung (120) des Primärteils (110) von den Abmessungen her derart ausgebildet ist, dass mit Hilfe der Magnetfeldsensoren (130) eine Überdeckung einer Magnetgruppe (150), bezogen auf eine Bewegungsrichtung (170) von Primärteil (110) und Sekundärteil (140), erzielt werden kann.

5. Verfahren nach einem der vorhergehenden Ansprüche,
wobei in der Initialmessung das Primärteil (110) und das Sekundärteil (140) relativ zueinander bewegt werden und die Magnetfeldmuster (210) basierend auf dem erfassten Magnetfeld der Magnetanordnung (142) des Sekundärteils (140) bereitgestellt werden, welches mit Hilfe der Sensoreinrichtung (120) erfasst wird, wenn sich die Magnetfeldsensoren (130) der Sensoreinrichtung (120) jeweils im Bereich einer Magnetgruppe (150) befinden.

6. Verfahren nach Anspruch 5,
wobei ein Bestimmen, dass sich die Magnetfeldsensoren (130) der Sensoreinrichtung (120) jeweils im Bereich einer Magnetgruppe (150) befinden, anhand von Nulldurchgängen (180) eines Verlaufs (163) einer Magnetfeldkomponente des Magnetfelds der Magnetanordnung (142) des Sekundärteils (140) durchgeführt wird, welcher mit Hilfe eines endseitigen Magnetfeldsensors (130) der Sensoreinrichtung (120) erfasst wird.

7. Verfahren nach einem der vorhergehenden Ansprüche,
wobei die Positionsbestimmung ein Ermitteln einer Sensorstellung der Sensoreinrichtung (120) in Bezug auf eine Grenze (190) von zwei benachbarten Magnetgruppen (150) oder von zwei benachbarten Permanentmagnetpaaren in der aktuellen Position des Primärteils (110) umfasst,
und wobei das Durchführen des Vergleichs unter Berücksichtigung der ermittelten Sensorstellung der Sensoreinrichtung (120) erfolgt.

8. Verfahren nach Anspruch 7,
wobei das Ermitteln der Sensorstellung der Sensoreinrichtung (120) anhand eines Nulldurchgangs (180) eines Verlaufs (263) einer Magnetfeldkomponente des Magnetfelds der Magnetanordnung (142) des Sekundärteils (140) durchgeführt wird, welcher durch die aktuellen Magnetfelddaten (250) wiedergegeben wird.

9. Verfahren nach einem der Ansprüche 7 oder 8,
wobei bei einer Sensorstellung der Sensoreinrichtung (120) im Bereich von zwei benachbarten Magnetgruppen (150), so dass beide Magnetgruppen (150) jeweils teilweise durch die Sensoreinrichtung (120) überdeckt werden,
eine Teildatenmenge (260) aus den aktuellen Magnetfelddaten (250) gebildet wird, welche mit Hilfe einer Sensorteilgruppe (240) aus Magnetfeldsensoren (130) der Sensoreinrichtung (120) gewonnen wurde, durch welche die Teilüberdeckung von einer der beiden Magnetgruppen (150) hergestellt ist,
wobei Teilmuster (220) aus den Magnetfeldmustern (210) unter Berücksichtigung der Teilüberdeckung gebildet werden,
und wobei für das Durchführen des Vergleichs die Teildatenmenge (260) der aktuellen Magnetfelddaten (250) mit den Teilmustern (220) der Magnetfeldmuster (210) verglichen wird.

10. Verfahren nach einem der Ansprüche 7 bis 9,
wobei bei einer Sensorstellung der Sensoreinrichtung (120) im Bereich von zwei benachbarten Magnetgruppen (150), so dass beide Magnetgruppen (150) jeweils teilweise durch die Sensoreinrichtung (120) überdeckt werden,
zusammengesetzte Magnetfeldmuster (225) gebildet werden, welche jeweils unter Berücksichtigung der Teilüberdeckungen aus Teilmustern (220) von Magnetfeldmustern (210) zweier benachbarter Magnetgruppen (150) zusammengesetzt sind,
und wobei für das Durchführen des Vergleichs die aktuellen Magnetfelddaten (250) mit den zusammengesetzten Magnetfeldmustern (225) verglichen werden.

11. Verfahren nach einem der Ansprüche 7 bis 10,
wobei die aktuellen Magnetfelddaten (250) in Teildatenmengen (260) unterteilt werden, welche jeweils mit Hilfe einer die Magnetanordnung (142) teilweise überdeckenden Sensorteilgruppe (240) aus Magnetfeldsensoren (130) der Sensoreinrichtung (120) gewonnen wurden,
wobei Teilmuster (220) aus den Magnetfeldmustern (210) unter Berücksichtigung der Sensorstellung der Sensoreinrichtung (120) und unter Berücksichtigung der Teilüberdeckungen durch die Sensorteilgruppen (240) gebildet werden,
und wobei für das Durchführen des Vergleichs die Teildatenmengen (260) mit den Teilmustern (220) verglichen werden.

12. Lineares Antriebssystem (100), ausgebildet zum Durchführen eines Verfahrens nach einem der vorhergehenden Ansprüche,
wobei das lineare Antriebssystem (100) ein Primärteil (110) und ein Sekundärteil (140) aufweist, welche relativ zueinander translatorisch bewegbar sind,
wobei das Primärteil (110) eine bestrombare Elektromagneteinrichtung (111) und das Sekundärteil (140) eine Magnetanordnung (142) aus nebeneinander angeordneten Permanentmagneten (155) aufweist,
wobei durch Bestromen der Elektromagneteinrichtung (111) des Primärteils (110) eine magnetische Wechselwirkung zwischen der Elektromagneteinrichtung (111) und der Magnetanordnung (142) des Sekundärteils (140) hervorrufbar ist, um das Primärteil (110) und das Sekundärteil (140) relativ zueinander zu bewegen,
wobei das Primärteil (110) eine Sensoreinrichtung (120) aus Magnetfeldsensoren (130) zum Erfassen eines von der Magnetanordnung (142) des Sekundärteils (140) erzeugten Magnetfelds aufweist,
wobei das lineare Antriebssystem (100) ausgebildet ist, in einer Initialmessung an unterschiedlichen Positionen des Primärteils (110) in Bezug auf das Sekundärteil (140) mit Hilfe der Sensoreinrichtung (120) das Magnetfeld der Magnetanordnung (142) des Sekundärteils (140) zu erfassen und positionsabhängige Referenz-Magnetfelddaten (200) bereitzustellen,
wobei das lineare Antriebssystem (100) ausgebildet ist, eine Positionsbestimmung für das Primärteil (110) durchzuführen,
indem an einer aktuellen Position des Primärteils (110) in Bezug auf das Sekundärteil (140) mit Hilfe der Sensoreinrichtung (120) das Magnetfeld der Magnetanordnung (142) des Sekundärteils (140) erfasst und aktuelle Magnetfelddaten (250) bereitgestellt werden, und
auf der Grundlage der Referenz-Magnetfelddaten (200) und der aktuellen Magnetfelddaten (250) die aktuelle Position des Primärteils (110) in Bezug auf das Sekundärteil (140) bestimmt wird,
wobei die Positionsbestimmung ein Durchführen eines Vergleichs wenigstens eines Teils der aktuellen Magnetfelddaten (250) mit Teilen der Referenz-Magnetfelddaten (200) mit Hilfe eines Ähnlichkeitsverfahrens umfasst,
**dadurch gekennzeichnet, dass**
die Positionsbestimmung auf der Grundlage einer Aufteilung der Permanentmagnete (155) der Magnetanordnung (142) des Sekundärteils (140) auf mehrere Magnetgruppen (150) aus nebeneinander angeordneten Permanentmagneten (155) erfolgt, und die Referenz-Magnetfelddaten (200) mehrere Magnetfeldmuster (210) umfassen, welche jeweils einer Magnetgruppe (150) aus nebeneinander angeordneten Permanentmagneten (155) der Magnetanordnung (142) des Sekundärteils (140) zugeordnet sind.

## Claims

1. A method for operating a linear drive system (100), wherein the linear drive system (100) comprises a primary part (110) and a secondary part (140), which may be moved in a translatory manner relative to each other,
wherein the primary part (110) comprises an electromagnet device (111) which may be energized, and the secondary part (140) comprises a magnet arrangement (142) of permanent magnets (155) arranged next to each other,
wherein by energizing the electromagnet device (111) of the primary part (110) a magnetic interaction between the electromagnet device (111) and the magnet arrangement (142) of the secondary part (140) may be caused to move the primary part (110) and the secondary part (140) relative to each other,
wherein the primary part (110) comprises a sensor device (120) of magnetic field sensors (130) for detecting a magnetic field generated by the magnet arrangement (142) of the secondary part (140),
wherein, in an initial measurement, the magnetic field of the magnet arrangement (142) of the secondary part (140) is detected with the aid of the sensor device (120) at different positions of the primary part (110) with respect to the secondary part (140) and position-dependent reference magnetic field data (200) are provided,
wherein a position determination for the primary part (110) is carried out,
in that the magnetic field of the magnet arrangement (142) of the secondary part (140) is detected with the aid of the sensor device (120) at a current position of the primary part (110) with respect to the secondary part (140) and current magnetic field data (250) are provided, and
based on the reference magnetic field data (200) and the current magnetic field data (250), the current position of the primary part (110) with respect to the secondary part is determined (140),
wherein the position determination comprises carrying out a comparison of at least a part of the current magnetic field data (250) with parts of the reference magnetic field data (200) using a similarity method,
**characterized in that**
the position determination is based on dividing up the permanent magnets (155) of the magnet arrangement (142) of the secondary part (140) into a plurality of magnet groups (150) of permanent magnets (155) arranged next to each other, and the reference magnetic field data (200) comprises a plurality of magnetic field patterns (210), each of which being associated with a magnet group (150) of permanent magnets (155) arranged next to each other of the magnet arrangement (142) of the secondary part (140).

2. The method according to claim 1,
wherein the similarity method is a dynamic time warping (DTW) method.

3. The method according to any one of the preceding claims,
wherein carrying out the comparison comprises at least one of the following:
comparing the current magnetic field data (250) to the magnetic field patterns (210);
comparing at least a partial data set (260) of the current magnetic field data (250) to at least a partial pattern (220) of the magnetic field patterns (210);
comparing the current magnetic field data (250) to newly composed magnetic field patterns (225) formed from partial patterns (220) of the magnetic field patterns (210); and/or
comparing a plurality of partial data sets (260) of the current magnetic field data (250) to partial patterns (220) of the magnetic field patterns (210).

4. The method according to any one of the preceding claims,
wherein in terms of dimensions, the sensor device (120) of the primary part (110) is embodied in such a way that an overlap of a magnet group (150), with reference to a direction of movement (170) of the primary part (110) and secondary part (140), may be achieved with the aid of the magnetic field sensors (130).

5. The method according to any one of the preceding claims,
wherein in the initial measurement, the primary part (110) and the secondary part (140) are moved relative to each other and the magnetic field patterns (210) are provided based on the detected magnetic field of the magnet arrangement (142) of the secondary part (140), which is detected with the aid of the sensor device (120) when the magnetic field sensors (130) of the sensor device (120) are each located in the area of a magnet group (150).

6. The method according to claim 5,
wherein a determination that the magnetic field sensors (130) of the sensor device (120) are each located in the area of a magnet group (150) is carried out on the basis of zero crossings (180) of a course (163) of a magnetic field component of the magnetic field of the magnet arrangement (142) of the secondary part (140), which is detected with the aid of an end-side magnetic field sensor (130) of the sensor device (120).

7. The method according to any one of the preceding claims,
wherein the position determination comprises determining a sensor position of the sensor device (120) with respect to a boundary (190) of two adjacent magnet groups (150) or of two adjacent pairs of permanent magnets in the current position of the primary part (110),
and wherein carrying out the comparison is performed taking into account the determined sensor position of the sensor device (120).

8. The method according to claim 7,
wherein determining the sensor position of the sensor device (120) is carried out on the basis of a zero crossing (180) of a course (263) of a magnetic field component of the magnetic field of the magnet arrangement (142) of the secondary part (140), which is reproduced by the current magnetic field data (250).

9. The method according to any one of claims 7 or 8,
wherein, in case of a sensor position of the sensor device (120) in the area of two adjacent magnet groups (150), so that both magnet groups (150) are each partially overlapped by the sensor device (120),
a partial data set (260) is formed from the current magnetic field data (250), which was obtained with the aid of a sensor subgroup (240) of magnetic field sensors (130) of the sensor device (120), by which the partial overlap of one of the two magnet groups (150) is produced,
wherein partial patterns (220) are formed from the magnetic field patterns (210) taking into account the partial overlap,
and wherein for carrying out the comparison, the partial data set (260) of the current magnetic field data (250) is compared to the partial patterns (220) of the magnetic field patterns (210).

10. The method according to any one of claims 7 to 9,
wherein, in case of a sensor position of the sensor device (120) in the area of two adjacent magnet groups (150), so that both magnet groups (150) are each partially overlapped by the sensor device (120),
composed magnetic field patterns (225) are formed, which are composed of partial patterns (220) of magnetic field patterns (210) of two adjacent magnet groups (150), in each case taking into account the partial overlaps,
and wherein for carrying out the comparison, the current magnetic field data (250) are compared to the composed magnetic field patterns (225).

11. The method according to any one of claims 7 to 10,
wherein the current magnetic field data (250) are divided up into partial data sets (260), each of which was obtained with the aid of a sensor subgroup (240) of magnetic field sensors (130) of the sensor device (120) partially overlapping the magnet arrangement (142),
wherein partial patterns (220) are formed from the magnetic field patterns (210) taking into account the sensor position of the sensor device (120) and taking into account the partial overlaps by the sensor subgroups (240),
and wherein for carrying out the comparison, the partial data sets (260) are compared to the partial patterns (220).

12. A linear drive system (100) configured to carry out a method according to any one of the preceding claims,
wherein the linear drive system (100) comprises a primary part (110) and a secondary part (140) which may be moved in a translatory manner relative to each other,
wherein the primary part (110) comprises a energizable electromagnet device (111) and the secondary part (140) comprises a magnet arrangement (142) of permanent magnets (155) arranged next to each other,
wherein by energizing the electromagnet device (111) of the primary part (110), a magnetic interaction between the electromagnet device (111) and the magnet arrangement (142) of the secondary part (140) may be caused to move the primary part (110) and the secondary part (140) relative to each other,
wherein the primary part (110) comprises a sensor device (120) of magnetic field sensors (130) for detecting a magnetic field generated by the magnet arrangement (142) of the secondary part (140),
wherein the linear drive system (100) is embodied, in an initial measurement, to detect the magnetic field of the magnet arrangement (142) of the secondary part (140) with the aid of the sensor device (120) at different positions of the primary part (110) with respect to the secondary part (140) and to provide position-dependent reference magnetic field data (200),
wherein the linear drive system (100) is embodied to carry out a position determination for the primary part (110),
in that the magnetic field of the magnet arrangement (142) of the secondary part (140) is detected with the aid of the sensor device (120) at a current position of the primary part (110) with respect to the secondary part (140) and current magnetic field data (250) are provided, and
based on the reference magnetic field data (200) and the current magnetic field data (250), the current position of the primary part (110) with respect to the secondary part (140) is determined,
wherein the position determination comprises carrying out a comparison of at least a part of the current magnetic field data (250) with parts of the reference magnetic field data (200) using a similarity method,
**characterized in that**
the position determination is based on dividing up the permanent magnets (155) of the magnet arrangement (142) of the secondary part (140) into a plurality of magnet groups (150) of permanent magnets (155) arranged next to each other, and the reference magnetic field data (200) comprises a plurality of magnetic field patterns (210), each of which being associated with a magnet group (150) of permanent magnets (155) arranged next to each other of the magnet arrangement (142) of the secondary part (140).

## Revendications

1. Procédé de fonctionnement d'un système d'entraînement linéaire (100), le système d'entraînement linéaire (100) comportant une partie primaire (110) et une partie secondaire (140) qui peuvent être déplacées l'une par rapport à l'autre en translation,
la partie primaire (110) comportant un dispositif électromagnétique (111) qui peut être excité, et la partie secondaire (140) comportant un ensemble aimant (142) constitué d'aimants permanents (155) disposés les uns à côté des autres,
une interaction magnétique pouvant être produite entre le dispositif électromagnétique (111) et l'ensemble aimant (142) de la partie secondaire (140) par excitation du dispositif électromagnétique (111) de la partie primaire (110), afin de déplacer la partie primaire (110) et la partie secondaire (140) l'une par rapport à l'autre,
la partie primaire (110) comportant un dispositif capteur (120) constitué de capteurs de champ magnétique (130) pour détecter un champ magnétique généré par l'ensemble aimant (142) de la partie secondaire (140),
lors d'une mesure initiale, le champ magnétique de l'ensemble aimant (142) de la partie secondaire (140) étant détecté à différentes positions de la partie primaire (110) par rapport à la partie secondaire (140) à l'aide du dispositif capteur (120), et des données de champ magnétique de référence (200) dépendant de la position étant fournies,
une détermination de position pour la partie primaire (110) étant effectuée,
en détectant le champ magnétique de l'ensemble aimant (142) de la partie secondaire (140) à une position actuelle de la partie primaire (110) par rapport à la partie secondaire (140) à l'aide du dispositif capteur (120) et en fournissant des données de champ magnétique actuelles (250), et
la position actuelle de la partie primaire (110) par rapport à la partie secondaire (140) étant déterminée sur la base des données de champ magnétique de référence (200) et des données de champ magnétique actuelles (250), la détermination de position comprenant la réalisation d'une comparaison d'au moins une partie des données de champ magnétique actuelles (250) à des parties des données de champ magnétique de référence (200) à l'aide d'un procédé d'analyse de ressemblance,
**caractérisé en ce que**
la détermination de position est effectuée sur la base d'une division des aimants permanents (155) de l'ensemble aimant (142) de la partie secondaire (140) en plusieurs groupes d'aimants (150) constitués d'aimants permanents (155) disposés les uns à côté des autres, et **en ce que** les données de champ magnétique de référence (200) comprennent plusieurs motifs de champ magnétique (210) qui sont respectivement associés à un groupe d'aimants (150) constitué d'aimants permanents (155) disposés les uns à côté des autres de l'ensemble aimant (142) de la partie secondaire (140).

2. Procédé selon la revendication 1,
le procédé d'analyse de ressemblance étant un procédé DTW (Dynamic Time Warping).

3. Procédé selon l'une quelconque des revendications précédentes,
la réalisation de la comparaison comprenant au moins l'une des étapes suivantes :
comparer les données de champ magnétique actuelles (250) aux motifs de champ magnétique (210) ;
comparer au moins un sous-ensemble de données (260) des données de champ magnétique actuelles (250) à au moins un sous-motif (220) des motifs de champ magnétique (210) ;
comparer les données de champ magnétique actuelles (250) à des motifs de champ magnétique (225) nouvellement composés à partir de sous-motifs (220) des motifs de champ magnétique (210) ; et/ou
comparer plusieurs sous-ensembles de données (260) des données de champ magnétique actuelles (250) à des sous-motifs (220) des motifs de champ magnétique (210).

4. Procédé selon l'une quelconque des revendications précédentes,
le dispositif capteur (120) de la partie primaire (110) étant conçu, en ce qui concerne les dimensions, de telle sorte qu'un recouvrement d'un groupe d'aimants (150), par rapport à une direction de déplacement (170) de la partie primaire (110) et de la partie secondaire (140), peut être obtenu à l'aide des capteurs de champ magnétique (130).

5. Procédé selon l'une quelconque des revendications précédentes,
dans lequel, lors de la mesure initiale, la partie primaire (110) et la partie secondaire (140) sont déplacées l'une par rapport à l'autre et les motifs de champ magnétique (210) sont fournis sur la base du champ magnétique détecté de l'ensemble aimant (142) de la partie secondaire (140), lequel est détecté à l'aide du dispositif capteur (120) lorsque les capteurs de champ magnétique (130) du dispositif capteur (120) se trouvent respectivement dans la zone d'un groupe d'aimants (150).

6. Procédé selon la revendication 5,
une détermination du fait que les capteurs de champ magnétique (130) du dispositif capteur (120) se trouvent respectivement dans la zone d'un groupe d'aimants (150) étant effectuée sur la base de passages par zéro (180) d'une courbe (163) d'une composante de champ magnétique du champ magnétique de l'ensemble aimant (142) de la partie secondaire (140), laquelle est détectée à l'aide d'un capteur de champ magnétique (130) situé à une extrémité du dispositif capteur (120).

7. Procédé selon l'une quelconque des revendications précédentes,
la détermination de position comprenant la détermination d'une position de capteur du dispositif capteur (120) par rapport à une limite (190) de deux groupes d'aimants voisins (150) ou de deux paires d'aimants permanents voisins à la position actuelle de la partie primaire (110),
et la réalisation de la comparaison ayant lieu en tenant compte de la position de capteur déterminée du dispositif capteur (120).

8. Procédé selon la revendication 7,
la détermination de la position de capteur du dispositif capteur (120) étant effectuée sur la base d'un passage par zéro (180) d'une courbe (263) d'une composante de champ magnétique du champ magnétique de l'ensemble aimant (142) de la partie secondaire (140), laquelle est représentée par les données de champ magnétique actuelles (250).

9. Procédé selon l'une quelconque des revendications 7 ou 8,
dans lequel, pour une position de capteur du dispositif capteur (120) dans la zone de deux groupes d'aimants voisins (150) telle que les deux groupes d'aimants (150) sont respectivement recouverts en partie par le dispositif capteur (120),
un sous-ensemble de données (260) est formé à partir des données de champ magnétique actuelles (250), lequel a été obtenu à l'aide d'un sous-groupe de capteurs (240) constitué de capteurs de champ magnétique (130) du dispositif capteur (120), par lequel le recouvrement partiel de l'un des deux groupes d'aimants (150) est réalisé,
des sous-motifs (220) étant formés à partir des motifs de champ magnétique (210) en tenant compte du recouvrement partiel,
et pour la réalisation de la comparaison, le sous-ensemble de données (260) des données de champ magnétique actuelles (250) étant comparé aux sous-motifs (220) des motifs de champ magnétique (210).

10. Procédé selon l'une quelconque des revendications 7 à 9,
dans lequel, pour une position de capteur du dispositif capteur (120) dans la zone de deux groupes d'aimants voisins (150) telle que les deux groupes d'aimants (150) sont respectivement recouverts en partie par le dispositif capteur (120),
des motifs de champ magnétique composés (225) sont formés, lesquels sont respectivement composés, en tenant compte des recouvrements partiels, à partir de sous-motifs (220) de motifs de champ magnétique (210) de deux groupes d'aimants voisins (150),
et pour la réalisation de la comparaison, les données de champ magnétique actuelles (250) étant comparées aux motifs de champ magnétique composés (225).

11. Procédé selon l'une quelconque des revendications 7 à 10,
les données de champ magnétique actuelles (250) étant divisées en sous-ensembles de données (260), lesquels ont été respectivement obtenus à l'aide d'un sous-groupe de capteurs (240) constitué de capteurs de champ magnétique (130) du dispositif capteur (120) recouvrant partiellement l'ensemble aimant (142),
des sous-motifs (220) étant formés à partir des motifs de champ magnétique (210) en tenant compte de la position de capteur du dispositif capteur (120) et en tenant compte des recouvrements partiels par les sous-groupes de capteurs (240),
et pour la réalisation de la comparaison, les sous-ensembles de données (260) étant comparés aux sous-motifs (220).

12. Système d'entraînement linéaire (100), conçu pour mettre en œuvre un procédé selon l'une quelconque des revendications précédentes,
le système d'entraînement linéaire (100) comportant une partie primaire (110) et une partie secondaire (140) qui peuvent être déplacées l'une par rapport à l'autre en translation,
la partie primaire (110) comportant un dispositif électromagnétique (111) qui peut être excité, et la partie secondaire (140) comportant un ensemble aimant (142) constitué d'aimants permanents (155) disposés les uns à côté des autres,
une interaction magnétique pouvant être produite entre le dispositif électromagnétique (111) et l'ensemble aimant (142) de la partie secondaire (140) par excitation du dispositif électromagnétique (111) de la partie primaire (110), afin de déplacer la partie primaire (110) et la partie secondaire (140) l'une par rapport à l'autre,
la partie primaire (110) comportant un dispositif capteur (120) constitué de capteurs de champ magnétique (130) pour détecter un champ magnétique généré par l'ensemble aimant (142) de la partie secondaire (140),
le système d'entraînement linéaire (100) étant conçu, lors d'une mesure initiale, pour détecter le champ magnétique de l'ensemble aimant (142) de la partie secondaire (140) à différentes positions de la partie primaire (110) par rapport à la partie secondaire (140) à l'aide du dispositif capteur (120), et pour fournir des données de champ magnétique de référence (200) dépendant de la position,
le système d'entraînement linéaire (100) étant conçu pour effectuer une détermination de position pour la partie primaire (110),
en détectant le champ magnétique de l'ensemble aimant (142) de la partie secondaire (140) à une position actuelle de la partie primaire (110) par rapport à la partie secondaire (140) à l'aide du dispositif capteur (120) et en fournissant des données de champ magnétique actuelles (250), et
la position actuelle de la partie primaire (110) par rapport à la partie secondaire (140) étant déterminée sur la base des données de champ magnétique de référence (200) et des données de champ magnétique actuelles (250), la détermination de position comprenant la réalisation d'une comparaison d'au moins une partie des données de champ magnétique actuelles (250) à des parties des données de champ magnétique de référence (200) à l'aide d'un procédé d'analyse de ressemblance,
**caractérisé en ce que**
la détermination de position est effectuée sur la base d'une division des aimants permanents (155) de l'ensemble aimant (142) de la partie secondaire (140) en plusieurs groupes d'aimants (150) constitués d'aimants permanents (155) disposés les uns à côté des autres, et **en ce que** les données de champ magnétique de référence (200) comprennent plusieurs motifs de champ magnétique (210) qui sont respectivement associés à un groupe d'aimants (150) constitué d'aimants permanents (155) disposés les uns à côté des autres de l'ensemble aimant (142) de la partie secondaire (140).
